# EUROPEAN PATENT APPLICATION

(11) **EP 2 940 572 A1**
(43) Date of publication of application: **04.11.2015**
(21) Application number: 15164889.6
(22) Date of filing: 23.04.2015
(51) Int. Cl.: G06F 3/0488, G06F 1/16

(54) **METHOD AND ELECTRONIC DEVICE FOR MANAGING DISPLAY OBJECTS**

(30) Priority: 28.04.2014 KR 20140051062
(71) Applicant: Samsung Electronics Co., Ltd, Gyeonggi-do 443-742 (KR)
(72) Inventor: Bae, Myung Hun, 152-834 Seoul (KR); Kim, Ju Nyun, 448-529 Gyeonggi-do (KR); Song, Se Jun, 142-752 Seoul (KR); Park, Jung Sik, 443-821 Gyeonggi-do (KR); Shin, Heung Sik, 561-781 Jeollabuk-do (KR); Lee, Yo Han, 463-812 Gyeonggi-do (KR); Hong, Myung Gon, 463-843 Gyeonggi-do (KR); Hong, Hyun Ju, 445-790 Gyeonggi-do (KR)
(74) Representative: Jenkins, Richard Gavin

(57) **Abstract**

An electronic device includes: a first display functionally connected to the electronic device; a second display functionally connected to the electronic device; and a display control module configured to select at least one object in correspondence to a first input event relating to the first display and perform a function relating to the at least one object through at least one display of the first display and the second display on the basis of a second input event.

## Description

The present application is related to and claims the benefit of a Korean Patent Application No. 10-2014-0051062 filed April 28, 2014.

### TECHNICAL FIELD

The present disclosure relates to the management of display objects.

### BACKGROUND

With the recent development of digital technology, electronic devices available for communication and personal information processing while moving, for example, mobile communication devices, personal digital assistants (PDAs), electronic organizers, smartphones, and tablet personal computers (PCs), are released variously. Such electronic devices provide a screen including at least one object.

Conventional electronic devices output objects set to each of a plurality of displays. Such conventional electronic devices change objects through an additional setting menu or a setting screen. Accordingly, in relation to conventional electronic devices, changing an object is not intuitive and is cumbersome.

### SUMMARY

To address the above-discussed deficiencies, one aim of the present disclosure is to provide a method and electronic device for managing display objects, which perform an object change through a more intuitive and easier method in an electronic device having a plurality of displays.

According to various embodiments of the present disclosure, an object management method includes obtaining a first input event relating to a first display functionally connected to an electronic device, selecting at least one object in correspondence to the first input event, and processing (or executing or performing) a function relating to the at least one object through at least one of the first display and a second display on the basis of an second input event relating to the second display functionally connected to the electronic device.

According to various embodiments of the present disclosure, an electronic device includes: a first display functionally connected to the electronic device; a second display functionally connected to the electronic device; and a display control module configured to select at least one object in correspondence to a first input event relating to the first display and perform a function relating to the at least one object through at least one display of the first display and the second display on the basis of a second input event.

According to various embodiments of the present disclosure, computer recording media are stored, as in the form of a programming module, in computer-readable storage media, and the programming module includes an instruction executed by at least one processor, and the instruction is set to process operations for obtaining a first input event relating to a first display functionally connected to an electronic device, selecting at least one object in correspondence to the first input event, and processing (or executing or performing) a function relating to the at least one object through at least one of the first display and a second display on the basis of an second input event relating to the second display functionally connected to the electronic device.

Another aspect of the present disclosure provides a computer program comprising instructions arranged, when executed, to implement a method in accordance with any one of the above-described aspects. A further aspect provides machine-readable storage storing such a program.

Various respective aspects and features of the present disclosure are defined in the appended claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an electronic device management environment according to various embodiments of the present disclosure;
FIG. 2 illustrates a display control module and displays according to various embodiments;
FIG. 3 illustrates a view of an electronic device according to various embodiments of the present disclosure;
FIG. 4 illustrates an electronic device according to various embodiments of the present disclosure;
FIG. 5 illustrates an input information processing based object management method according to various embodiments of the present disclosure;
FIG. 6 illustrates an object movement display according to various embodiments of the present disclosure;
FIG. 7 illustrates a selection object related function execution according to various embodiments of the present disclosure;
FIG. 8 illustrates a search object related application execution according to various embodiments of the present disclosure;
FIG. 9 illustrates a selection object related item management according to various embodiments of the present disclosure;
FIG. 10 illustrates a selection object related search management according to various embodiments of the present disclosure;
FIG. 11 illustrates a move or copy related object management method according to various embodiments of the present disclosure;
FIG. 12A illustrates a selection object movement according to various embodiments of the present disclosure;
FIG. 12B illustrates a selection object change according to various embodiments of the present disclosure;
FIG. 13 illustrates a selection object related second display screen control according to various embodiments of the present disclosure;
FIG. 14 illustrates a position based object management method of a selection object according to various embodiments of the present disclosure;
FIG. 15 illustrates a visual information based object management according to various embodiments of the present disclosure;
FIG. 16 illustrates a multiple visual information based object management according to various embodiments of the present disclosure;
FIG. 17 illustrates a management method of a moved or copied object according to various embodiments of the present disclosure;
FIG. 18 illustrates a management method of a plurality of moved or copied objects according to various embodiments of the present disclosure;
FIG. 19 illustrates a screen switching based object management method according to various embodiments of the present disclosure;
FIG. 20A illustrates an object position based management according to various embodiments of the present disclosure.
FIG. 20B illustrates a rotation based object management according to various embodiments of the present disclosure;
FIG. 20C illustrates an object management in a rotated state a according to various embodiments of the present disclosure;
FIG. 21 illustrates an object management between electronic devices according to various embodiments of the present disclosure;
FIG. 22 illustrates a selection object related application execution management according to various embodiments of the present disclosure;
FIG. 23 illustrates an object management of a plurality of displays according to various embodiments of the present disclosure;
FIG. 24 illustrates a touch number based object management according to various embodiments of the present disclosure;
FIG. 25 illustrates a touch direction based object management according to various embodiments of the present disclosure;
FIG. 26A illustrates a touch gesture based object management according to various embodiments of the present disclosure;
FIG. 26B illustrates a touch gesture based guide management according to various embodiments of the present disclosure;
FIG. 26C illustrates a touch gesture based object movement management according to various embodiments of the present disclosure;
FIG. 26D illustrates a touch gesture based object copy management according to various embodiments of the present disclosure; and
FIG. 27 illustrates a touch pattern based object management according to various embodiments of the present disclosure.

### DETAILED DESCRIPTION

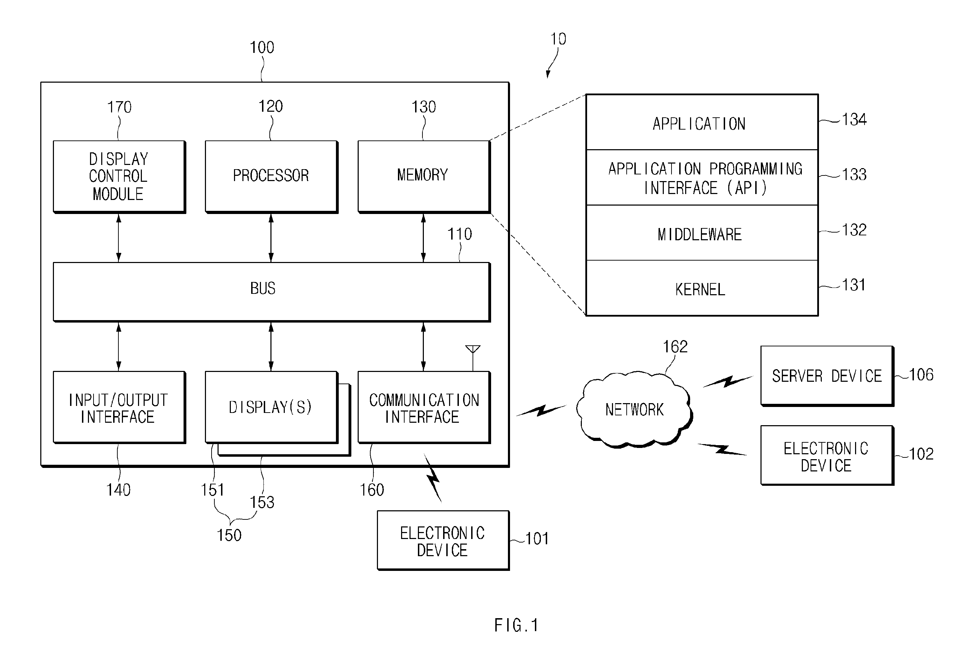

FIGURES 1 through 27, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device.

Hereinafter, various embodiments of the present disclosure are disclosed with reference to the accompanying drawings. Various modifications are possible in various embodiments of the present disclosure and specific embodiments are illustrated in drawings and related detailed descriptions are listed. Thus, it is intended that the present disclosure covers the modifications and variations of this disclosure provided they come within the scope of the appended claims and their equivalents. With respect to the descriptions of the drawings, like reference numerals refer to like elements.

The expressions "include," "comprise," "contain," or "have" used herein indicates disclosed functions, operations, or existence of elements but does not exclude other functions, operations or elements. Additionally, the term "include," "comprise," "including," or "comprising," specifies a property, a region, a fixed number, a step, a process, an element and/or a component but does not exclude other properties, regions, fixed numbers, steps, processes, elements or components.

In various embodiments of the present disclosure, expression "A or B" or "at least one of A or/and B" include all possible combinations of items listed together. For instance, the expression "A or B," or "at least one of A or B" indicate include A, B, or both A and B.

The expressions such as "1st," "2nd," "first," "second," and the like used herein modify various components of various embodiments but do not limit corresponding components. For instance, such expressions do not limit the order or importance of corresponding components. The expressions can be used to distinguish one element from another element. For instance, both "a first user device" and "a second user device" indicate a user device but indicate different user devices from each other. For example, a first component can be referred to as a second component and vice versa without departing from the scope of the present disclosure.

In this disclosure below, when one part (or element, device, etc.) is referred to as being "connected" to another part (or element, device, etc.), it should be understood that the former can be "directly connected" to the latter, or "connected" to the latter via an intervening part (or element, device, etc.). In contrast, when an element is referred to as being "directly connected" or "directly coupled" to another element, there are no intervening elements present.

In various embodiments of the present disclosure, terms used in this specification are used to describe specific embodiments, and are not intended to limit the scope of the present disclosure. The terms of a singular form includes plural forms unless they have a clearly different meaning in the context. In particular, where the indefinite article is used, the specification is to be understood as contemplating plurality as well as singularity, unless the context requires otherwise.

Otherwise indicated herein, all the terms used herein, which include technical or scientific terms, have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning.

An electronic device according to various embodiments of the present disclosure is a device including a plurality of displays. For instance, electronic devices includes at least one of smartphones, tablet personal computers (PCs), mobile phones, video phones, electronic book (e-book) readers, desktop personal computers (PCs), laptop personal computers (PCs), netbook computers, personal digital assistants (PDAs), portable multimedia player (PMPs), MP3 players, mobile medical devices, cameras, and wearable devices (such as head-mounted-devices (HMDs) , electronic glasses, electronic apparel, electronic bracelets, electronic necklaces, electronic appcessories, electronic tattoos, and smart watches).

According to certain embodiments, an electronic device is smart home appliances having a plurality of displays. The smart home appliances includes at least one of, for example, televisions, digital video disk (DVD) players , audios, refrigerators, air conditioners, cleaners, ovens, microwave ovens, washing machines, air cleaners, set-top boxes, TV boxes (such as, SAMSUNG HOMESYNCTM, APPLE TVTM or GOOGLE TVTM), game consoles, electronic dictionaries, electronic keys, camcorders, and electronic picture frames.

According to certain embodiments, an electronic device includes at least one of various medical devices (for example, magnetic resonance angiography (MRA) devices, magnetic resonance imaging (MRI) devices, computed tomography (CT) devices, medical imaging devices, ultrasonic devices, etc.), navigation devices, global positioning system (GPS) receivers, event data recorders (EDRs), flight data recorders (FDRs), vehicle infotainment devices, marine electronic equipment (for example, marine navigation systems, gyro compasses, etc.), avionics, security equipment, vehicle head units, industrial or household robots, financial institutions' automatic teller's machines (ATMs), and stores' point of sales (POS).

According to some embodiments, an electronic device includes at least one of furniture, buildings, or structures having a plurality of displays, electronic boards, electronic signature receiving devices, projectors, and various measuring instruments (for example, water, electricity, gas, or radio signal measuring instruments). In various embodiments of the present disclosure, an electronic device is one of the above-mentioned various devices or a combination thereof. Additionally, an electronic device according to various embodiments of the present disclosure is a flexible device. Furthermore, it is apparent to those skilled in the art that an electronic device according to various embodiments of the present disclosure is not limited to the above-mentioned devices.

Hereinafter, an electronic device according to various embodiments will be described in more detail with reference to the accompanying drawings. The term "user" in various embodiments refers to a person using an electronic device or a device using an electronic device (for example, an artificial intelligent electronic device).

FIG. 1 illustrates an electronic device management environment according to various embodiments of the present disclosure.

Referring to FIG. 1, according to various embodiments, an electronic device management environment 10 includes an electronic device 100, external electronic devices 101 and 102, a server device 106, and a network 162.

In the electronic device management environment 10, the electronic device 100 includes a plurality of displays 150 and intuitively and easily supports movements of at least one display object in at least one among the plurality of displays 150. The external electronic devices 101 and 102 provide at least one display object and display object related information to the electronic device 100. The display object is at least one of images or texts displayed on the display 150. For example, the display object includes widgets, icons (application launch icons, file icons, and folder icons), menu items, and link information, which are displayed on the display 150. The display object related information includes execution data executed in correspondence to a display object selection and execution related program data, which are displayed on the display 150. For example, the display object related information includes file information executed according to a file icon selection, corresponding program data executed according to a menu item selection, program execution data, a browser executed according to a link information selection, and execution data provided according to a link function execution.

According to various embodiments, the electronic device management environment 10 establishes a communication channel between the external electronic devices 101 and 102 and the electronic device 100 and supports to transmit or copy at least one of at least one object and object related information to the external electronic devices 101 and 102 during the process that at least one object stored in the electronic device 100 moves between the plurality of displays 150.

The external electronic device 101 establishes a communication channel with a communication interface 160 of the electronic device 100. For example, the electronic device 101 establishes a short range communication channel or a wired communication channel with the communication interface 160. According to various embodiments, the electronic device 101 establishes a BLUETOOTH communication channel or a Wi-Fi direct communication channel with the communication interface 160. The external electronic device 101 receives at least one object disposed on the display 150 through a communication channel in correspondence to the occurrence of an event (for example, a touch event or an input/output interface 140 based event) occurring in the electronic device 100. According to various embodiments, the external electronic device 101 transmits to the electronic device 100 at least part of a screen outputted to the electronic device 101 in correspondence to an event occurring in the electronic device 100. According to various embodiments, the electronic device 101 is a wearable type electronic device.

The electronic device 102 establishes a communication channel with the electronic device 100 through a network 162. For example, the electronic device 102 includes a cellular communication module and establishes a communication channel with the electronic device 100. For example, the electronic device 102 includes a Wi-Fi communication module and establishes a mobile communication channel with the electronic device 100. The electronic device 102 transmits to, and/or receives from, the electronic device 100 at least one display object and display object related information by using the established communication channel. For example, the electronic device 102 receives at least one display object and object related information displayed on a first display 151 of the electronic device 100 or at least one display object and object related information displayed on a second display 153 through a communication channel. According to various embodiments, the electronic device 102 receives messages or e-mails transmitted from the electronic device 100. According to various embodiments, the electronic device 102 transmits or receives a chatting message to or from the electronic device 100.

The network 162 supports a communication channel establishment between the electronic device 100 and the electronic device 102. The network 162, for example, includes network device components relating to a mobile communication channel establishment. In certain embodiments, the network 162 includes network device components relating to an internet communication channel establishment. The network 162 serves as a path for delivering at least one of a specific object and object related information to the electronic device 102 in response to a request of the electronic device 100.

The server device 106 establishes a communication channel with the electronic device 100 through the network 162. The server device 106 provides to the electronic device 100 at least one of a display object and object related information to be outputted to a first display 151 of the electronic device 100 and a display object and object related information to be outputted to at least one further display 153. According to various embodiments, the server device 106 supports a chatting channel establishment and management of the electronic device 100.

The electronic device 100 includes a plurality of displays 151 and 153 and supports at least one of object move, copy, and delete between the displays 151 and 153. According to various embodiments, the electronic device 100 moves or copies an object displayed on a specific display (i.e. first display 151) to another display (i.e. second display 153) in response to a user input. According to various embodiments, the electronic device 100 supports a screen replacement in relation to an object movement. According to various embodiments, the electronic device 100 outputs a specific function execution screen to another display in correspondence to an event occurring in a specific display.

Referring to FIG. 1, the electronic device 100 includes a bus 110, a processor 120, a memory 130, an input/output interface 140, a display arrangement 150, a communication interface 160, and a display control module 170. The electronic device 100 further includes a sensor module and at least one camera module.

The bus 110 is a circuit connecting the above-mentioned components and delivering a communication (for example, a control message) between the above-mentioned components. For example, the bus 110 delivers an input signal inputted from the input/output interface 140 to at least one of the processor 120 or the display control module 170. The bus 110 delivers at least part of a display object and object related information received through the communication interface 160 to at least one of the memory 130, the display arrangement 150, the processor 120, or the display control module 170. The bus 110 delivers a display object stored in the memory 130 to the display arrangement 150 in correspondence to a control of the display control module 170.

The processor 120, for example, receives instructions from the above-mentioned other components (for example, the memory 130, the input/output interface 140, the display arrangement 150, the communication interface 160, or the display control module 170) through the bus 110. The processor 120 interprets the received instructions and executes calculation or data processing according to the interpreted instructions.

The processor 120 is prepared in a form including the display control module 170 or in a form separated from the display control module 170. In certain embodiments, the processor 120 is prepared in a form performing communication on the basis of the bus 110 or directly.

The memory 130 stores instructions or data received from the processor 120 or the other components (for example, the input/output interface 140, the display arrangement 150, the communication interface 160, or the display control module 170) or generated by the processor 120 or the other components. The memory 130, for example, includes programming modules such as a kernel 131, a middleware 132, an application programming interface (API) 133, or an application 134. Each of the above-mentioned programming modules is configured with software, firmware, hardware, or a combination of at least two thereof.

The kernel 131 controls or manages system resources (for example, the bus 110, the processor 120, or the memory 130) used for performing operations or functions implemented in the remaining other programming modules, for example, the middleware 132, the API 133, or the application 134. Additionally, the kernel 131 provides an interface for performing at least one of access, control, and management between the middleware 132, the API 133, or the application 134 and an individual component of the electronic device 100.

The middleware 132 serves as an intermediary role for exchanging data as the API 133 or the application 134 communicates with the kernel 131. Additionally, in relation to job requests received from the application 134, the middleware 132, for example, controls (for example, scheduling or load balancing) for the job requests by using a method of assigning a priority for using a system resource (for example, the bus 110, the processor 120, or the memory 130) of the electronic device 100 to at least one application among the applications 134.

The API 133, as an interface through which the application 134 controls a function provided from the kernel 131 or the middleware 132, for example, includes at least one interface or function (for example, an instruction) for file control, window control, image processing, or character control.

According to various embodiments, the application 134 includes SMS/MMS applications, e-mail applications, calendar applications, notification applications, health care applications (for example, applications for measuring exercise amount or blood glucose), or environmental information applications (for example, applications for providing pressure, humidity, or temperature information). In certain embodiment, the application 134 is an application relating to information exchange between the electronic device 100 and an external electronic device (for example, the electronic device 101 or 102). The information exchange related application, for example, includes a notification relay application for relaying specific information to the external device or a device management application for managing the external electronic device.

For example, the notification relay application includes a function for relaying to an external electronic device (for example, the electronic device 101 or 102) notification information occurring from another application (for example, an SMS/MMS application, an e-mail application, a health care application, or an environmental information application) of the electronic device 100. The notification relay application, for example, receives notification information from an external electronic device (for example, the electronic device 101 or 102) and provides the received notification information to a user. The device management application, for example, manage (for example, install, delete, or update) at least part of function (turn on or turn off of the external electronic device itself (or some components) or the brightness (or resolution) adjustment of a display) of an external electronic device (for example, the electronic device 101 or 102) communicating with the electronic device 100, an application operating in the external electronic device, or a service (for example, call service or message service) provided from the external device.

According to various embodiments, the application 134 includes a specified application according to the property (for example, the type of an electronic device) of the external electronic device (for example, the electronic device 101 or 102). For example, when an external electronic device is an MP3 player, the application 134 includes an application relating to music playback. When an external electronic device is a mobile medical device, the application 134 includes an application relating to health care. According to various embodiments, the application 134 includes at least one of an application specified to the electronic device 100 and an application received from an external electronic device (for example, the server device 106 or the electronic device 101 or 102).

According to various embodiments, the memory 130 stores at least one display object and object related information. The at least one display object includes at least one object displayed on the display arrangement 150. For example, the object is at least one of files, items, widgets, and icons. The object is at least one of a text and an image displayed on the display 150. The object related information, as object related data, includes program data and program execution data. According to various embodiments, a picture related function includes an object corresponding to a thumbnail image displayed on the display 150 in relation to a picture file and object related information corresponding to the picture file. According to various embodiments, a chatting function includes object related information corresponding to chatting related program data and an object corresponding to a chatting icon displayed on the display 150 in correspondence to a chatting related program. According to various embodiments, a folder function includes object related information corresponding to folder data and an object corresponding to an icon that indicates a folder. According to various embodiments, a weather notification function includes object related information corresponding to a browser set to be accessible to a server device providing weather information and an object corresponding to an icon relating to the execution of the browser.

The input/output interface 140 delivers an instruction or data inputted from a user through an input/output device (for example, a sensor, a keyboard, or a touch screen) to the processor 120, the memory 130, the communication interface 160, or the display control module 170 through the bus 110. For example, the input/output interface 140 provides data on a user's touch inputted through a touch screen to the processor 120. Additionally, the input/output interface 140 outputs through the input/output device (for example, a speaker or a display) instructions or data received from the processor 120, the memory 130, the communication interface 160, or the display control module 170 through the bus 110. According to various embodiments, the input/output interface 140 includes a physical key button (for example, a home key, a side key, and a power key), a jog key, and a keypad. The input/output interface 140 includes a virtual keypad outputted to the display arrangement 150 as an input device.

According to various embodiments, the input/output interface 140 performs a function relating to audio processing. The input/output interface 140 includes one or more of at least one of a speaker and a mic. The input/output interface 140, for example, outputs audio data included in application execution data to be outputted to the display arrangement 150 in response to a control of the display control module 170, through a speaker. In certain embodiments, the input/output interface 140 outputs at least one audio data included in application execution data to be outputted to the display arrangement 150. The audio data output of the above-mentioned input/output interface 140 can be omitted in correspondence to a user setting or whether the electronic device 100 supports it.

The display arrangement 150 includes a plurality of displays: the plurality of displays display various information (for example, multimedia data or text data). For example, the displays 150 output a lock screen and a standby screen. The displays 150 output a specific function execution screen, for example, a sound source playback application execution screen, a video playback application execution screen, and a broadcast reception screen, in correspondence to a function execution. According to various embodiments, the displays 150 include the first display 151 or at least one second display 153. The displays 150 output at least one display object. The displays 150 output at least one application related screen executed in the electronic device 100 or an application execution screen (a screen relating to application execution). For example, the displays 150 output at least one (hereinafter, an application execution screen) of an execution screen of an application being currently in execution, a capture screen captured from an application execution history, screens to be displayed on a screen when an application is executed, and a screen to which processing according to an input during application execution is applied. According to various embodiments, the plurality of displays 150 is contiguously arranged (or configured with a specific gap or space). The displays 150 are managed in correspondence to one display control module 170 or a plurality of display control modules. The plurality of displays 150 output at least one of a plurality of application execution screens. According to various embodiments, a display object outputted to a specific display is moved and displayed on another display (that is, an object displayed on the current display is removed and is displayed only on another display) or be copied and displayed (that is, an object is displayed on the current display and another display) in correspondence to an input event.

The communication interface 160 connects a communication between the electronic device 100 and an external device (for example, at least one of the electronic device 101 or 102 and the server device 106). For example, the communication interface 160 communicates with the external device in connection to the network 162 through wireless communication or wired communication. The wireless communication, for example, includes at least one of wireless fidelity (Wi-Fi), BLUETOOTH (BT), near field communication (NFC), global positioning system (GPS), and cellular communication (for example, LTE, LTE-A, CDMA, WCDMA, UMTS, WiBro, or GSM). The wired communication includes at least one of universal serial bus (USB), high definition multimedia interface (HDMI), recommended standard 232 (RS-232), and plain old telephone service (POTS), for example.

According to various embodiments of the present disclosure, the network 162 is a telecommunications network. The telecommunications network includes at least one of computer network, internet, internet of things, and telephone network. According to various embodiments of the present disclosure, a protocol (for example, transport layer protocol, data link layer protocol, or physical layer protocol) for communication between the electronic device 100 and an external device is supported by at least one of the application 134, the application programming interface 133, the middleware 132, the kernel 131, or the communication interface 160.

The communication interface 160 includes a plurality of communication modules when the electronic device 100 supports a plurality of communication methods. For example, the electronic device 100 includes a communication module capable of establishing a communication channel directly, for example, a short range communication module or a direct communication module. The short range communication module or the direct communication module includes at least one of various communication modules such as a Wi-Fi direct communication module, a BLUETOOTH communication module, and a ZIGBEE communication module. In certain embodiments, the direct communication module includes a wired communication module such as cable.

According to various embodiments, the communication interface 160 receives object related information from at least one of the external electronic device 102 and the server device 106. The communication interface 160 delivers the received object related information to the display control module 170. The display control module 170 stores the received object related information in the memory 130. An object image in the object related information stored in the memory is outputted to the display arrangement 150. When an object image selection event occurs, a corresponding object image is moved and displayed. In certain embodiments, object data (for example, an application execution screen) corresponding to the object image selection is outputted.

The display control module 170 processes at least part of information obtained from other components (for example, the processor 120, the memory 130, the input/output interface 140, or the communication interface 160). The display control module 170 provides the obtained information or the processed information to a user through various methods. For example, the display control module 170 controls to output at least one display object to at least one display of the plurality of displays 151 and 153. The display control module 170 selects a specific object in correspondence to an event for selecting at least one object and processes(or executes or performs) a function relating to the selected object on the basis of another display in correspondence to an additional event.

According to various embodiments, the above-mentioned display control module 170 controls the first display 151 to display at least one display object in correspondence to schedule information or a user input control. The display control module 170 processes the display object in relation to another one of the plurality of displays 150, second display 153, on the basis of an input event occurrence. For example, the display control module 170 performs at least one of processing for moving and displaying an object or copying and displaying an object on the display 153, function processing for outputting an application execution screen according to an object related specific application execution to the display 153 and function processing (or applying or invoking) for providing an object as input information of at least one application. For example, the display control module 170 performs at least one of a function for processing an object as an attachment file of a corresponding application according to the type of an application in relation to input information processing, a function for processing an object as a file upload relating to a file transmission function of an corresponding application, and a function for performing processing in an editing state in relation to a file editing function. According to various embodiments, the display control module 170 performs at least one of a function for processing an object as a phone number relating to a calling function and a function for processing an object as address information relating to a webpage access function.

As mentioned above, the display control module 170 controls specified function processing using an object as input information on the basis of the property of the object or object information. The electronic device 100 manages or operate a function table in which a function to be processed by each property or information of specific objects is defined. For example, when at least one object is overlaid on at least one application execution screen, the function table includes information to control to execute a specified function in correspondence to the type of a corresponding application or the position of an application execution screen where an object is disposed.

The related function processing includes at least one of function processing for outputting visual information (or display information) to the display 151 in correspondence to the movement of the object and function processing for switching the screen of the display 151 and the screen of the display 153. The visual information is information obtained by modifying at least part of a screen displayed on the display 153. For example, the visual information is information obtained by reducing at least part of a screen displayed on the display 153. In certain embodiments, the visual information is specific display information (for example, number, character, or specific image information) corresponding to a screen displayed on the display 153.

According to various embodiments, the display control module 170 receives a first input event from an input device (for example, at least one of a touch screen, a touch sheet, and a physical key disposed at the display 151) disposed at the display 151. The display control module 170 selects at least one object displayed on the display 151 in correspondence to the first input event. According to various embodiments, the display control module 170 processes the selected object as input information to be delivered to a second display in correspondence to the reception of a second input event. The second input event includes an input event occurring from at least one of an input device relating to the display 151 and an input device relating to the display 153.

The first input event includes at least one of a touch event for touching an object displayed on the display 151 and a hovering event indicating a displayed object. The second input event includes at least one of a touch event for touching at least one point of the display 151, a touch event having a movement after touch, a touch event maintained for a specified time, a touch event occurring repeatedly or a plurality of times at a specified time interval, a hovering event for indicating at least one point of the display 151, a hovering event having a movement after indication, a hovering event maintained for a specified time after indication, and a hovering event occurring repeatedly or a plurality of times at a specified time interval.

According to various embodiments, visual information (or display information) relating to at least one display 153 is overlaid on the display 151. The visual information includes at least part of data displayed on an application execution screen. When an object is overlaid on visual information, the display control module 170 control to display a corresponding object on the second display in order to correspond to the position of an object disposed on the visual information.

According to various embodiments, the display control module 170 controls to display an object related additional object selected from the display 151 on the display 153 in order to correspond to at least one of an input event, whether an object moves, the position after an object moves, and the position of a disposed object. When an additional object related input event occurs, the display control module 170 controls to an object displayed on the display 151 to be moved or copied to the display 153 in correspondence to the input event.

According to various embodiments, the additional object is at least one application execution screen relating to the display 153. The display control module 170 changes an application execution screen display in the display 153 in correspondence to an input event occurring on the display 153. According to various embodiments, the display control module 170 controls to display at least part of a plurality of application execution screens simultaneously. For example, the display control module 170 arranges part of application execution screens to overlap each other and arrange the remaining parts to be seen.

According to various embodiments, when an object is selected from the display 151, the display control module 170 outputs an execution screen relating to the selected object to the display 153. The display control module 170 modifies at least part of an object related application execution screen and outputs the modified part to the display 153. For example, an application execution screen outputted to the display 151 and an application execution screen outputted to the display 153 in relation to an object includes at least part of different data. In certain embodiments, the display control module 170 outputs the same application execution screen to the display 151 or the display 153.

According to various embodiments, the display control module 170 outputs executable application related information (for example, icons and menu items) in relation to an object outputted to the display 151 to at least one of the display 151 or the display 153. In certain embodiments, the display control module 170 processes at least application related information relating to a selected object in application related information outputted to at least one of the display 151 and the display 153 in an activation state (for example, a selection and execution available state and an image maintenance or change corresponding to an activation state). The display control module 170 processes at least one application related information not relating to a selected object in a deactivation state (for example, change to an image corresponding to a selection or execution unavailable, or deactivation state). When at least one is selected from application related information in an activation state, the display control module 170 executes a corresponding application. The display control module 170 outputs an application execution screen to at least one of the display 151 and the display 153. For example, the display control module 170 outputs to the display 153 application related information relating to an object selected from the display 151. The display control module 170 outputs to the display 151 and execution screen corresponding to the selected application related information. The display control module 170 maintains the selected object on the display 151. In certain embodiments, the display control module 170 processes the selected object as input information on an application corresponding to an application execution screen outputted to the display 151. In certain embodiments, while an application execution screen according to at least one object related application execution is displayed on the display 153 in correspondence to an event occurrence, the display control module 170 displays the selected object on an application execution screen of the display 153.

According to various embodiments, the display control module 170 changes an object moved and displayed from the display 151 to the display 153 in correspondence to an event occurrence. For example, the display control module 170 enlarges or reduces the size of an object displayed on the display 153 in correspondence to the occurrence of an event (for example, at least one of a touch event and a hovering event occurring in relation to the display 151).

According to various embodiments, the display control module 170 displays on the display 153 visual information relating to at least one object displayed on the display 151 in correspondence to the reception of a first input event. The display control module 170 processes a specific object displayed on the display 153 as input information of the display 151 in correspondence to the reception of a second input event. For example, when an object is moved out of a coverage area of visual information on object overlaid visual information, the display control module 170 controls to arrange corresponding objects in another display.

According to various embodiments, the display control module 170 controls to output a first application execution screen to the display 151 and a second application execution screen to the display 153. The display control module 170 controls screen switching in correspondence to an input event occurrence, or a relative position between the display 151 and the display 153, or at least one of the bending angle or direction of at least one of the first display and the display 153. For example, when at least one of the display 151 and the display 153 performs a hinge operation according to at least one of a specified direction and a specified angle, the display control module 170 mutually shares or switches (or position-shift) at least part of an application execution screen outputted to the display 151 or the display 153.

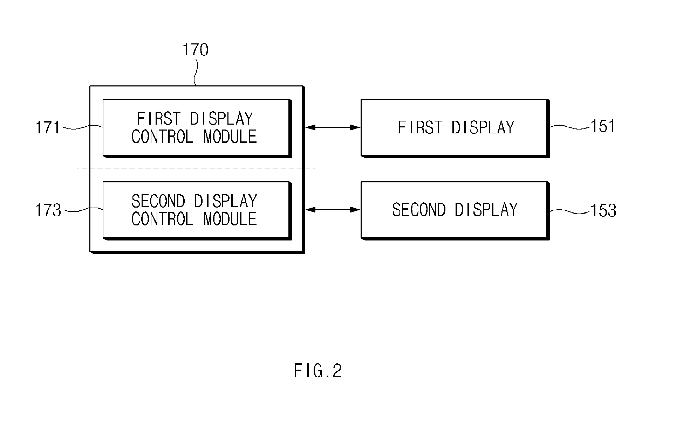

FIG. 2 illustrates a display control module and displays according to various embodiments.

Referring to FIG. 2, the display control module 170 includes at least one of a first display control module 171 and a second display control module 173. For example, the display control module 170 includes control modules in correspondence to the number of displays. In certain embodiments, according to various embodiments, the first display control module 171 is disposed at a first display 151 serving as a main display device and the second display control module 173 is disposed at a plurality of second displays 153. According to various embodiments, the first display control module 171 and the second display control module 173 are together disposed at a case including the first display 151. The electronic device 100 further includes a signal line connecting the second display control module 173 and the second display 153.

According to various embodiments, the first display control module 171 supports output processing signal collection processing of the display 151. For example, the first display control module 171 outputs at least one object to the display 151. The first display control module 171 activates a touch screen or a touch panel disposed at the display 151. When at least one of a touch event and a hovering event occurs, the first display control module 171 controls a function performance corresponding thereto. For example, the first display control module 171 selects at least one object in correspondence to an occurring event.

According to various embodiments, the first display control module 171 controls a function execution relating to the selected object in correspondence to an additionally occurring event. For example, the first display control module 171 moves the selected object and displays it on the first display 151. When a selected object is disposed at a specified position of the display 151, the first display control module 171 delivers object movement information to the second display control module 173. The first display control module 171 obtains visual information (including at least part of a screen or at least part of a modified screen) relating to at least part of at least one application execution screen relating to the second display 153 from the second display control module 173. The first display control module 171 outputs the obtained visual information to the display 151. The first display control module 171 overlays the selected object on the visual information and display it. When a specified event occurs, the first display control module 171 delivers at least one of the selected object and object related information to the second display control module 173.

According to various embodiments, the first display control module 171 moves an object displayed on the first display 151 and displays the object on the second display 153 in correspondence to an event occurrence. The first display control module 171 moves or copies the selected object and display it on the second display 153 in correspondence to an event occurrence and requests the second display control module 173 to output the modified object in correspondence to the type or form of an event.

According to various embodiments, the first display control module 171 outputs a function icon or menu item relating to the selected object to the display 151. In certain embodiments, the first display control module 171 requests a function icon or menu item output relating to the selected object from the second display control module 173. When a specific function icon or menu item is selected in relation to the second display 153, the first display control module 171 outputs an application execution screen corresponding to the selected icon or menu item to the first display 151.

According to various embodiments, when a selected object is disposed at a specified position, the first display control module 171 delivers a virtual temporary object to the second display control module 173. When an event relating to a virtual temporary control occurs, the first display control module 171 moves and displays or copies and displays the selected object on the second display 153. When a virtual temporary object is selected, the first display control module 171 delivers an object displayed on the first display 151 to the second display control module 173.

According to various embodiments, the first display control module 171 collects at least one of the bending angle and direction of the electronic device 100 or at least one of the bending angle and direction of the first display 151. The electronic device 100 further includes a bending detection sensor relating to a bending angle or direction detection. Additionally, a bending detection sensor is disposed on at least one side of the first display 151. The first display control module 171 collects a sensor signal from a bending detection sensor. The first display control module 171 moves and displays or copies and displays the selected object in correspondence to the bending of the electronic device 100 or the bending degree or direction of the display 151. In certain embodiments, when at least one of the bending angle and direction of the display 153 is received, the first display control module 171 moves and displays or copies an object in correspondence to the bending angle or direction of the second display 153.

According to various embodiments, the first display control module 171 switches an application execution screen in correspondence to the bending angle or direction of the electronic device 100 or the displays 150. For example, when the first display 151 and the second display 153 are disposed at a first angle, the first display control module 171 outputs a first application execution screen to the first display 151 and outputs a second application execution screen to the second display 153. When the first display 151 and the second display 153 are disposed at a second angle, the first display control module 171 outputs a second application execution screen to the first display 151 and outputs a first application execution screen to the second display 153. The first display control module 171 fixes the position of a selected object.

The second display control module 173 processes the output and signal collection of the display 153. The second display control module 173 collects at least one of a touch event or hovering event occurring from a touch screen or touch panel disposed at the second display 153. The second display control module 173 moves and displays or copies and displays an object displayed on the first display 151 in correspondence to an event occurrence. According to various embodiments, the second display control module 173 delivers to the first display control module 171 visual information relating to at least part of at least one application execution screen relating to the second display 153 in correspondence to an event occurrence. The second display control module 173 receives position information of an object on visual information. The second display control module 173 adjusts a copy object position on an application execution screen in correspondence to the received position information.

According to various embodiments, the second display control module 173 modifies a moved or copied object in correspondence to an event occurrence. For example, the second display control module 173 enlarges or reduces the size of a moved or copied object and displays the enlarged or reduced object in correspondence to an event occurrence. The second display control module 173 changes at least one of the color and form of a moved or copied object in correspondence to an event occurrence.

According to various embodiments, the second display control module 173 receives information relating to the selected object and outputs a function icon or menu item relating to an object. When one of a function icon and a menu item is selected, the second display control module 173 controls an application execution corresponding to the selected icon or item. The second display control module 173 makes a request to provide an executed application related screen to the first display control module 171 and outputs it to the first display 151.

A configuration of the above-mentioned display control module 170 exemplifies one of various embodiments. For example, according to various embodiments, the first display control module 171 of the display control module 170 is prepared integrally with the first display 151. Additionally, the second display control module 173 is prepared integrally with the second display 153.

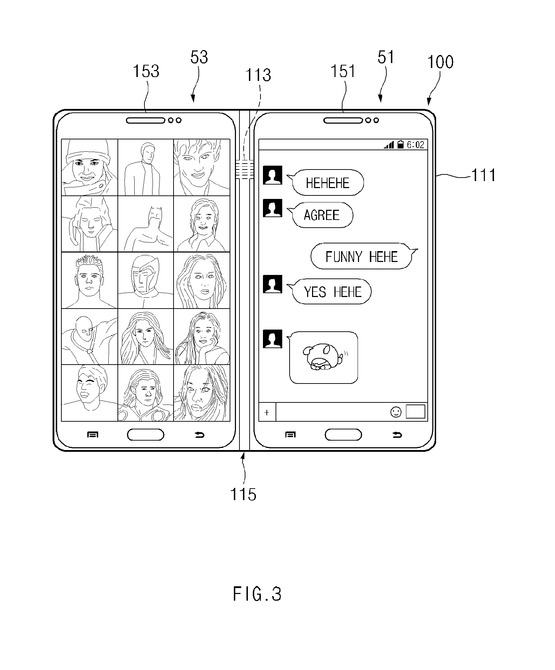

FIG. 3 illustrates an electronic device appearance according to various embodiments of the present disclosure.

Referring to FIG. 3, an electronic device 100 includes a cover 111, a display device 51, a display device 53, a signal line 113, and a hinge part 115.

Each of the display device 51 and the display device 53 are displayed at the top of the cover 111. The cover 111 includes a fixing part for fixing the display device 51 and the display device 53. The cover 111 is rotatable at a predetermined angle by using the hinge part 115 as an axis. For example, the cover 111 supports the display device 53 to be rotatable 360 degrees on the basis of the display device 51. In certain embodiments, the cover 111 supports the display device 51 to be rotatable 360 degrees on the basis of the display device 53. The cover 111 is prepared with various materials such as leather material, metal material, and rubber material. The cover 111 is prepared with a plurality of overlapping sheets (for example, leather sheets). According to various embodiments, portions of the cover 111 of the electronic device 100, which are disposed at the rears of the display device 51 and the display device 53, be omitted. For example, the cover 111 is configured with an area connecting the edge area of the display device 51 and the edge area of the display device 53.

The signal line 113 functionally connects the display device 51 and the display device 53. The signal line 113 delivers a control signal of the display control module 170 disposed in the display device 51 or content information to the display device 53. The signal line 113 is disposed between a plurality of sheets to be limited to external exposure. The signal line 113, for example, is prepared with a flexible printed circuit board (FPCB). According to various embodiments, the signal line 113 can be omitted. In certain embodiments, the display device 51 and the display device 53 are connected wirelessly (for example, BLUETOOTH and UWB).

The hinge part 115 is prepared (or equipped) as part of the cover 111 or is formed by connecting a cover disposed at the display device 51 and a cover disposed at the display device 53. The hinge part 115 supports the rotation of the display device 53 by using the display device 51 as an axis. In certain embodiments, the hinge part 115 supports the rotation of the display device 51 by using the display device 53 as an axis. The hinge part 115 includes at least one bending detection sensor. The hinge part 115 includes at least one acceleration sensor. The hinge part 115 obtains rotation angle and direction information in correspondence to the rotation of the display device 51 or the display device 53. The hinge part 115 delivers the obtained rotation angle and direction information to the display device 51 or the display device 53.

The display device 51 includes the first display 151, the first display control module 171, and a case. The display device 53 includes the second display 153, the second display control module 173, and a case. According to various embodiments, the display device 51 or the display device 53 is operated by sharing a display control module.

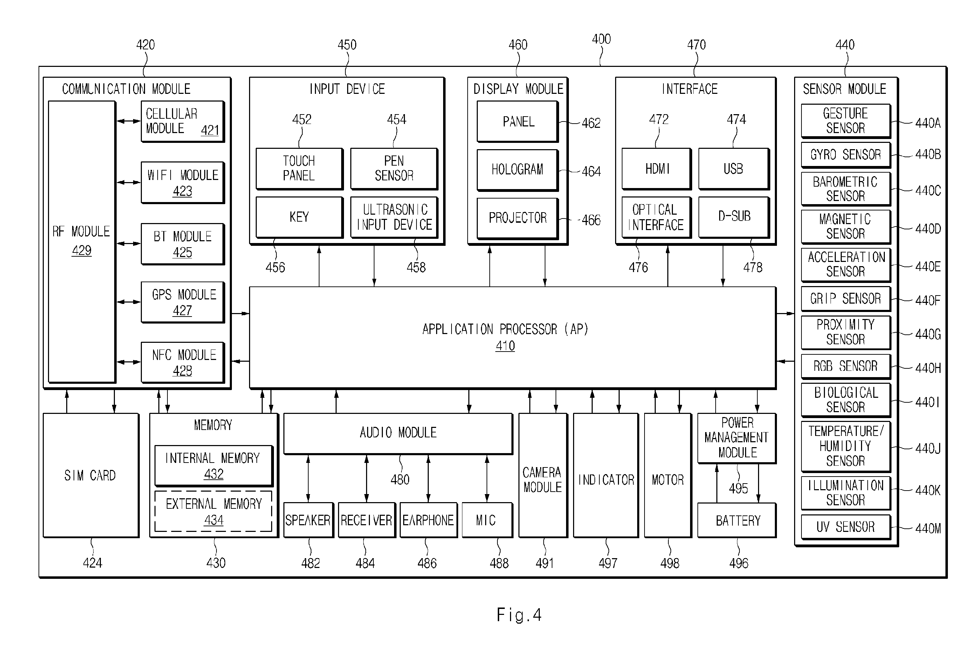

FIG. 4 illustrates an electronic device according to various embodiments of the present disclosure. The electronic device 400, for example, configures all or part of the above-mentioned electronic device 100 shown in FIG. 1.

Referring to FIG. 4, the electronic device 400 includes at least one application processor (AP) 410 (for example, the processor 120 and the display control modules 170, 171, and 173, a communication module 420 (for example, the communication interface 160), a subscriber identification module (SIM) card 424, a memory 430 (for example, the memory 130), a sensor module 440, an input device 450 (for example, the input/output interface 140), a display 460 (for example, the displays 150, 151, and 153), an interface 470 (for example, the input/output interface 140), an audio module 480, a camera module 491, a power management module 495, a battery 496, an indicator 497, and a motor 498.

The AP 410 controls a plurality of hardware or software components connected to the AP 410 by executing an operating system or an application program. The AP 410 performs various processing and calculations on various data including multimedia data. The AP 410 is implemented with a system on chip (SoC), for example. According to various embodiments of the present disclosure, the AP 410 further includes a graphic processing unit (GPU) (not shown). The AP 410 supports a function of the display control module 170. The AP 410 moves and displays or copies and displays an object outputted to a specific display on another display in correspondence to an event occurrence. The AP 410 supports various function performances relating to an object in correspondence to an event occurrence.

The communication module 420 (for example, the communication interface 160) performs data transmission or reception through a communication between other electronic devices (for example, the electronic device 101 or 102 or the server 106) connected to the electronic device 400 (for example, the electronic devices 100) via a network. According to various embodiments of the present disclosure, the communication module 420 includes a cellular module 421, a Wi-Fi module 423, a BT module 425, a GPS module 427, an NFC module 428, and a radio frequency (RF) module 429.

The cellular module 421 provides voice calls, video calls, text services, or internet services through a communication network (for example, LTE, LTE-A, CDMA, WCDMA, UMTS, WiBro, or GSM). The cellular module 421 performs a distinction and authentication operation on an electronic device in a communication network by using a subscriber identification module (for example, the SIM card 424), for example. According to various embodiments of the present disclosure, the cellular module 421 performs at least part of a function that the AP 410 provides. For example, the cellular module 421 performs at least part of a multimedia control function.

According to various embodiments of the present disclosure, the cellular module 421 further includes a communication processor (CP). Additionally, the cellular module 421 is implemented with SoC, for example. As shown in FIG. 4, components such as the cellular module 421 (for example, a CP), the memory 430, or the power management module 495 are separated from the AP 410, but according to various embodiments of the present disclosure, the AP 410 is implemented including some of the above-mentioned components (for example, the cellular module 421).

According to various embodiments of the present disclosure, the AP 410 or the cellular module 421 (for example, a CP) loads instructions or data, which are received from a nonvolatile memory or at least one of other components connected thereto, into a volatile memory and then process them. Furthermore, the AP 410 or the cellular module 421 stores data received from or generated by at least one of other components in a nonvolatile memory.

Each of the Wi-Fi module 423, the BT module 425, the GPS module 427, and the NFC module 428 includes a processor for processing data transmitted or received through a corresponding module. Although the cellular module 421, the Wi-Fi module 423, the BT module 425, the GPS module 427, and the NFC module 428 are shown as separate blocks in FIG. 4, according to various embodiments of the present disclosure, some (for example, at least two) of the cellular module 421, the Wi-Fi module 423, the BT module 425, the GPS module 427, and the NFC module 428 are included in one integrated chip (IC) or an IC package. For example, at least some (for example, a CP corresponding to the cellular module 421 and a Wi-Fi processor corresponding to the Wi-Fi module 423) of the cellular module 421, the Wi-Fi module 423, the BT module 425, the GPS module 427, and the NFC module 428 is implemented with one SoC.

The RF module 429 is responsible for data transmission, for example, the transmission of an RF signal. Although not shown in the drawings, the RF module 429 includes a transceiver, a power amp module (PAM), a frequency filter, or a low noise amplifier (LNA). Additionally, the RF module 429 further includes components for transmitting or receiving electromagnetic waves on a free space in a wireless communication, for example, conductors or conducting wires. Although the cellular module 421, the Wi-Fi module 423, the BT module 425, the GPS module 427, and the NFC module 428 share one RF module 429 shown in FIG. 4, according to various embodiments of the present disclosure, at least one of the cellular module 421, the Wi-Fi module 423, the BT module 425, the GPS module 427, and the NFC module 428 performs the transmission of an RF signal through an additional RF module.

The SIM card 424 is a card including a subscriber identification module and is inserted into a slot formed at a specific position of an electronic device. The SIM card 424 includes unique identification information (for example, an integrated circuit card identifier (ICCID)) or subscriber information (for example, an international mobile subscriber identity (IMSI)).

The memory 430 (for example, the memory 130) includes an internal memory 432 or an external memory 434. The internal memory 432 includes at least one of a volatile memory (for example, dynamic RAM (DRAM), static RAM (SRAM), synchronous dynamic RAM (SDRAM)) and a non-volatile memory (for example, one time programmable ROM (OTPROM), programmable ROM (PROM), erasable and programmable ROM (EPROM), electrically erasable and programmable ROM (EEPROM), mask ROM, flash ROM, NAND flash memory, and NOR flash memory).

According to various embodiments of the present disclosure, the internal memory 432 is a Solid State Drive (SSD). The external memory 434 further includes flash drive, for example, compact flash (CF), secure digital (SD), micro Micro-SD, Mini-SD, extreme digital (xD), or a memory stick. The external memory 434 is functionally connected to the electronic device 400 through various interfaces. According to various embodiments of the present disclosure, the electronic device 400 further includes a storage device (or a storage medium) such as a hard drive.

The sensor module 440 measures physical quantities or detects an operating state of the electronic device 400, thereby converting the measured or detected information into electrical signals. The sensor module 440 includes at least one of a gesture sensor 440A, a gyro sensor 440B, a pressure sensor 440C, a magnetic sensor 440D, an acceleration sensor 440E, a grip sensor 440F, a proximity sensor 440G, a color sensor 440H (for example, a red, green, blue (RGB) sensor), a bio sensor 440I, a temperature/humidity sensor 440J, an illumination sensor 440K, and an ultra violet (UV) sensor 440M. Additionally or in certain embodiments, the sensor module 440 includes an E-nose sensor (not shown), an electromyography (EMG) sensor, an electroencephalogram (EEG) sensor (not shown), an electrocardiogram (ECG) sensor (not shown), an infra-red (IR) sensor (not shown), an iris sensor (not shown), or a fingerprint sensor (not shown). The sensor module 440 further includes a control circuit for controlling at least one sensor therein.

The input device 450 includes a touch panel 452, a (digital) pen sensor 454, a key 456, or an ultrasonic input device 458. The touch panel 452 recognizes a touch input through at least one of capacitive, resistive, infrared, or ultrasonic methods, for example. Additionally, the touch panel 452 further includes a control circuit. In the case of the capacitive method, both direct touch and proximity recognition are possible. The touch panel 452 further includes a tactile layer. In certain embodiments, the touch panel 452 provides a tactile response to a user.

The (digital) pen sensor 454 is implemented through a method similar or identical to that of receiving a user's touch input or an additional sheet for recognition. The key 456 includes a physical button, a touch key, an optical key, or a keypad, for example. The ultrasonic input device 458, as a device checking data by detecting sound waves through a mic (for example, a mic 488) in the electronic device 400, provides wireless recognition through an input tool generating ultrasonic signals. Wireless recognition is possible through the ultrasonic input device 458. According to various embodiments, the electronic device 400 receives a user input from an external device (for example, a computer or a server) connected to the electronic device 1801 through the communication module 420.

The display 460 (for example, the display 150) includes a panel 462, a hologram device 464, or a projector 466. The panel 462 includes a liquid-crystal display (LCD) or an active-matrix organic light-emitting diode (AM-OLED). The panel 462 is implemented to be flexible, transparent, or wearable, for example. The panel 462 is prepared in plurality. When a plurality of panels 462 is prepared, the panels 462 are arranged in parallel. The plurality of panels 462 in parallel be arranged to be bent or with a specific angle with respect to each other by a hinge operation. At least one object is outputted to at least one panel of the plurality of panels 462 in correspondence to an event occurrence. The outputted object is selected in correspondence to an event occurrence. The selected object is used as input information of another panel in correspondence to an additional event occurrence.

The panel 462 and the touch panel 452 are configured with one module. The hologram 464 shows three-dimensional images in the air by using the interference of light. The projector 466 displays an image by projecting light on a screen. The screen, for example, is placed inside or outside the electronic device 400. According to various embodiments, the display 460 further includes a control circuit for controlling the panel 462, the hologram device 464, or the projector 466.

The interface 470 includes a high-definition multimedia interface (HDMI) 472, a universal serial bus (USB) 474, an optical interface 476, or a D-subminiature (sub) 478, for example. The interface 470 is included in the communication interface 160 shown in FIG. 1, for example. The interface 470 includes a mobile high-definition link (MHL) interface, a secure Digital (SD) card/multi-media card (MMC) interface, or an infrared data association (IrDA) standard interface.

The audio module 480 converts sound into electrical signals and convert electrical signals into sounds. At least some components of the audio module 480 are included in the input/output interface 140 shown in FIG. 1, for example. The audio module 480 processes sound information inputted/outputted through a speaker 482, a receiver 484, an earphone 486, or a mic 488.

The camera module 491, as a device for capturing a still image and a video, includes at least one image sensor (for example, a front sensor or a rear sensor), a lens (not shown), an image signal processor (ISP) (not shown), or a flash (not shown) (for example, an LED or a xenon lamp).

The power management module 495 manages the power of the electronic device 400. Although not shown in the drawings, the power management module 495 includes a power management IC (PMIC), a charger IC, or a battery or fuel gauge, for example.

The PMIC is built in an IC or SoC semiconductor, for example. A charging method is classified into a wired method and a wireless method. The charger IC charges a battery and prevents overvoltage or overcurrent flow from a charger. According to various embodiments, the charger IC includes a charger IC for at least one of a wired charging method and a wireless charging method. As the wireless charging method, for example, there is a magnetic resonance method, a magnetic induction method, or an electromagnetic method. An additional circuit for wireless charging, for example, a circuit such as a coil loop, a resonant circuit, or a rectifier circuit, can be added.

The battery gauge measures the remaining amount of the battery 496, or a voltage, current, or temperature of the battery 496 during charging. The battery 496 stores or generates electricity and supplies power to the electronic device 400 by using the stored or generated electricity. The battery 496, for example, includes a rechargeable battery or a solar battery.

The indicator 497 displays a specific state of the electronic device 400 or part thereof (for example, the AP 410), for example, a booting state, a message state, or a charging state. The motor 498 converts electrical signals into mechanical vibration. Although not shown in the drawings, the electronic device 400 includes a processing device (for example, a GPU) for mobile TV support. A processing device for mobile TV support processes media data according to the standards such as digital multimedia broadcasting (DMB), digital video broadcasting (DVB), or media flow.

As mentioned above, according to various embodiments, an electronic device includes a first display, a second display, and a display control module functionally connected to the first display and the second display, the display control module being configured to control to select at least one object in correspondence to a first input event relating to the first display and perform a function relating to the at least one object through at least one of the first display and the second display on the basis of a second input event.

According to various embodiments, the first input event includes at least one of a touch event for touching an object displayed on the first display and a hovering event indicating the displayed object and the second input event includes at least one of a touch event for touching at least one point in the first display and the second display, a touch event having a movement after touch, a touch event maintained for a specified time, a touch event occurring repeatedly or a plurality of times at a specified time interval, a hovering event for indicating at least one point of the first display, a hovering event having a movement after indication, a hovering event maintained for a specified time after indication, or a hovering event occurring repeatedly or a plurality of times at a specified time interval.

According to various embodiments, the display control module displays an additional object relating to the selected object on the second display and moves or copies the selected object to the second display in correspondence to an input event reception for selecting the additional object.

According to various embodiments, the display control module outputs an application execution screen relating to the object to the second display and processes the selected object as input information of the application.

According to various embodiments, the display control module displays at least one application item relating to the object on the second display and displays an application execution screen corresponding to the selected application item on at least one of the first display and the second display.

According to various embodiments, the display control module displays the object to be overlaid on an application execution screen displayed on the first display.

According to various embodiments, the application item includes at least one of at least one executable icon and text information defining at least one function in relation to the object.

According to various embodiments, the display control module processes (or applies or invokes) information inputted through the second display as input information of the first display.

According to various embodiments, the display control module displays a specific object corresponding to the object on the second display in correspondence to the second input event.

According to various embodiments, the display control module displays the specific object on the second display and changes the object display on the first display, or display the object on the first display and display the specific object on the second display.

According to various embodiments, the display control module enlarges or reduces (i.e. rescales or resizes) the specific object to display it in correspondence to the second input event.

According to various embodiments, the display control module displays visual information relating to a plurality of second display related application executions on the second display in correspondence to the second input event reception.

According to various embodiments, the display control module displays at least one visual information relating to the at least one application (e.g., an application relating to the second display) on the first display.

According to various embodiments, the display control module overlays the selected object on the visual information in correspondence to the second input event reception and processes the selected object as input information of the second display corresponding to the object overlaid visual information.

According to various embodiments, the visual information includes at least part of at least one application related screen relating to the second display.

According to various embodiments, the display control module displays the selected object at a screen position on the second display corresponding to the object overlaid visual information position.

According to various embodiments, the display control module displays a screen displayed on the first display on the second display or display a screen displayed on the second display on the first display in correspondence to at least one of the first input event and the second event.

According to various embodiments, the display control module outputs the object to at least one screen of the switched screens.

According to various embodiments, the display control module switches the first display screen and the second display screen while maintaining an output state of the object when an event that the first display and the second display are hinged by a specific distance in a specific direction occurs.

According to various embodiments, the display control module outputs the object to at least one of the first display and second display outputting the switched screen.

According to various embodiments, the display control module displays visual information relating to at least part of screen information of the wirelessly connected second display on the first display and, when the object is overlaid on the visual information, moves and transmits or copies and transmits the object wirelessly to the second display.

According to various embodiments, the display control module outputs an execution screen of an application to which the object is applied as input information, on the second display where a specific application execution screen is outputted in correspondence to the second input event.

According to various embodiments, the display control module displays on the first display a plurality of visual information relating to an application execution screen outputted to the plurality of second displays and, when the selected object is overlaid on at least one of the plurality of visual information, processes the object as input information of an application corresponding to the object overlaid visual information.

According to various embodiments, the display control module is set differently process at least one of the form and execution function of a specified object in correspondence to at least one of the number of touch or hovering points corresponding to the second input event, a touch surface form or a hovering form, the occurrence order or position of a plurality of touches or hoverings, a pattern corresponding to a time interval or hold time of a plurality of touches or hoverings, or a gesture corresponding to a touch or hovering trajectory.

According to various embodiments, the display control module differently processes at least one of the number or output positions of selection objects relating to the object and the execution determination or form of a function relating to the object.

According to various embodiments, the display control module differently displays at least one function item or at least application item to be executed in relation to the object in correspondence to the type of the second input event.

According to various embodiments, the display control module displays the function item or the application item on at least one of the first display and the second display.

According to various embodiments, the display control module executes an application corresponding to the gesture type of the second input event.

According to various embodiments, the display control module sets to process the object as input information of an application executed according to the gesture type.

According to various embodiments, the display control module outputs to the first display a reference screen corresponding to an application execution screen outputted to the second display in correspondence to the second input event and, when the object is disposed on the reference screen, processes the object as input information of an application relating to the second display in correspondence to the object position in the reference screen.

According to various embodiments, the display control module outputs a screen for inputting a touch gesture relating to the second input event.

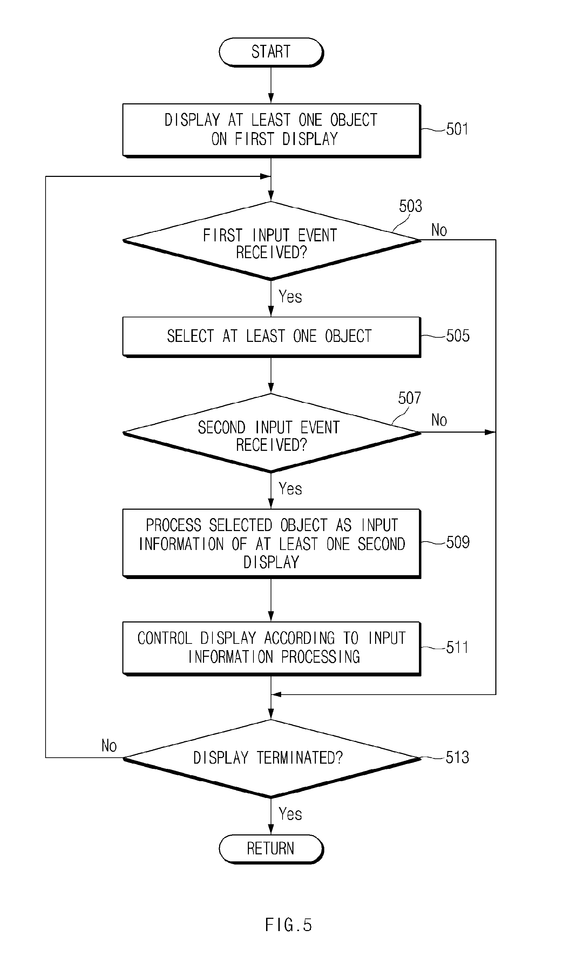

FIG. 5 illustrates an input information processing based object management method according to various embodiments of the present disclosure.

In operation 501, according to various embodiments, an object management method, for example, control to allow the display control module 170 to display at least one object on the display 151. The display control module 170 outputs a standby screen or menu screen including at least one object in correspondence to an event occurrence. According to various embodiments, the display control module 170 performs a lock screen output function, a sound source playback function, a web access function, and a weather information providing function in correspondence to schedule information or a user input. The display control module 170 outputs a screen according to at least one function execution. In certain embodiments, the display control module 170 supports a screen change (switching to a screen including another object or switching to another display) of the display 151 in correspondence to an event occurrence.

In operation 503, the display control module 170 checks whether a first input event is received. For example, the display control module 170 checks whether there is a first input event reception for selecting at least one object outputted to the display 151. The first input event includes a touch event or hovering event occurring in relation to the display 151. The hovering event means detecting a pointing object such as a finger, a touch pen, and a stylus without the direct contact with a detection surface of the display 150 (for example, the touch panel 452 or a touch screen). In certain embodiments, the first input event includes a key button event relating to at least one object outputted to the display 151 or a gesture event detected by a sensor module.

In operation 505, when the first input event is received, the display control module 170 performs at least one object selection in correspondence to the first input event reception. The display control module 170 provides a display effect (for example, a highlight display) according to an object selection. In certain embodiments, the display control module 170 provides a text or image output corresponding to an object selection. In certain embodiments, the display control module 170 provides a vibration output corresponding to an object selection.

In operation 507, the display control module 170 checks whether a second input event is received. The second input event is an event distinguished from the first input event. For example, the second input event is at least one of a touch event or hovering event occurring after the first input event occurs. In certain embodiments, the second input event is a key button input event or gesture input event occurring after the first input event occurs. According to various embodiments, the second input event is a touch drag event moving a selected object on the display 151. In certain embodiments, the second input event is a tap event for moving a selected object to a specific position of the display 151. In certain embodiments, the second event is an event relating to the display 153 (for example, at least one of a touch event, hovering event, key event, and gesture event occurring in relation to the display 153).

According to various embodiments, the second input event includes at least one of changes in distance, speed, vector, time, number, and event type. For example, the second input event includes at least one of an event according to a movement of more than a specified distance on the display 151 where a selected object is disposed, a speed occurrence event of more than a specified magnitude, an event corresponding to a specific vector (for example, a distance or speed direction), an event holding for more than a specified time, a repeating event of more than a specified number, and a touch or long touch (a touch longer than a time set in a specified tap operation) event in a hovering state.

According to various embodiments, the second input event is used as a mode entry condition for copying and moving a selected object. A second input event corresponds to the occurrence of an additional touch event or hovering event on a selected object or a key button selection occurrence. In certain embodiments, the second input event corresponds to a menu related physical key or virtual key selection. When the second input event occurs, the display control module 170 displays a sub menu relating to a copy and move mode.

In operation 509, when the second input event is received, the display control module 170 processes a selected object as input information of at least one display 153. For example, the display control module 170 moves and displays or copies and displays a selected object on the display 153. According to various embodiments, the display control module 170 provides a selected object as input information of an application in execution in relation to the display 153. The display control module 170 displays a selected object on a corresponding application execution screen. According to various embodiments, the display control module 170 outputs a selected object related icon or menu item to the display 153. The display control module 170 processes items relating to a selected object among icon or menu items outputted to the display 153 to be selectable. The display control module 170 processes items not relating to a selected object to be unselectable. According to various embodiments, the display control module 170 controls to switch a screen of the display 151 and a screen of the display 153 on the basis of a selected object.

In operation 511, the display control module 170 performs a display control according to input information processing. For example, the display control module 170 moves and displays a selected object on the display 153 and delete a corresponding object from the display 151. Additionally, the display control module 170 displays a selected object on a specific position of the display 151 and the display 153. In certain embodiments, the display control module 170 outputs an object inputted application execution screen to at least one of the display 151 and the display 153. According to various embodiments, the display control module 170 outputs visual information corresponding to at least part of an application execution screen being displayed on the display 153 to the display 151 and dispose a selected object on the visual information.

In operation 513, the display control module 170 checks whether an event relating to a display termination occurs. When an event relating to a display termination occurs, the display control module 170 terminates an object display (for example, remove an object displayed on a display) from at least one display among the displays 151 and 153. When there is no display termination event occurrence, the display control module 170 proceeds to operation 503 and perform the subsequent processes again.

In operation 503, when a first input event is not received, the display control module 170 proceeds to operation 513 and performs the subsequent processes again. When a first input event is not received for a specified time, the display control module 170 enters a sleep mode state. Additionally, when second input event is not received in operation 507, the display control module 170 proceeds to operation 513 and performs the subsequent processes again. Additionally, when a second input event is not received in operation 507, the display control module 170 checks whether the first input event is released. When the first input event is released, the display control module 170 proceeds to operation 513. In operation 507, when the first input event is maintained, the display control module 170 maintains the second input event reception operation for a specified time. According to various embodiments, the display control module 170 supports an object related function execution selected by the first input event.

According to various embodiments of the present disclosure there is provided a method for managing display objects in an electronic device having functional connections to a first display and a second display, the method including: obtaining a first input event relating to the first display, selecting at least one object in correspondence to the first input event, obtaining a second input event relating to the second display and processing a function relating to the at least one selected object through at least one of the first display and the second display on the basis of the second input event.

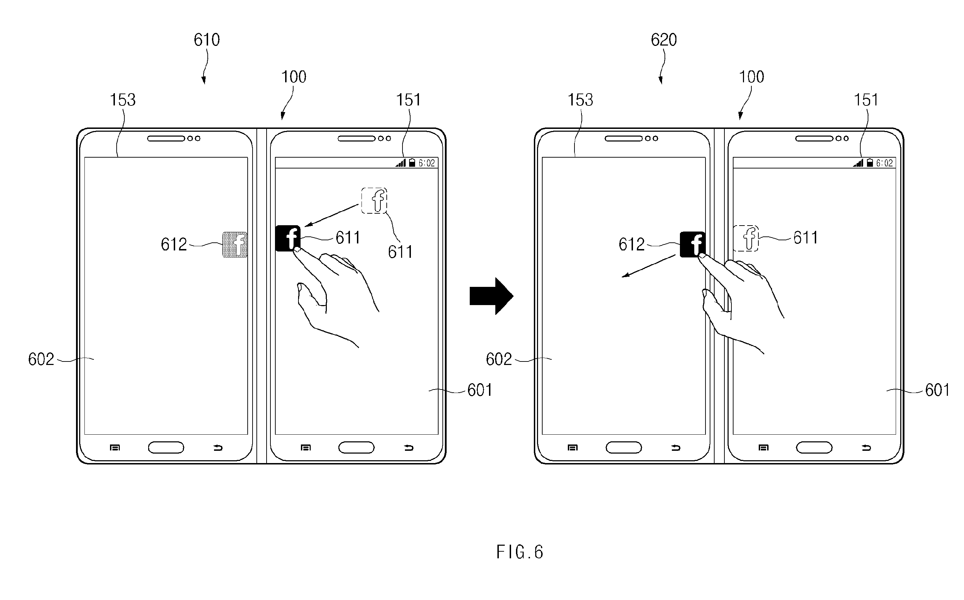

FIG. 6 illustrates an object movement display according to various embodiments of the present disclosure.

Referring to FIG. 6, according to various embodiments, as shown in a state 610, the display control module 170 outputs at least one object, for example, an object 611, to the display 151. The display control module 170 outputs a first application execution screen 601 to the display 151. The display control module 170 outputs the object 611 on the first application execution screen 601. The first application execution screen 601 is a function screen where the object 611 is displayed. According to various embodiments, the display control module 170 outputs a second application execution screen 602 to the display 153. In certain embodiments, when the object 611 is disposed at one edge, the display control module 170 outputs the second application execution screen 602. The second application execution screen 602 is a specified function execution screen or an application execution screen relating to the object 611. For example, the second application execution screen 602 is at least one of various screens such as a notepad execution screen, a message creation screen, a gallery function screen, an e-mail creation screen, and a file edit screen.

When a touch event (or a hovering event) for selecting the object 611 occurs, the display control module 170 selects the object 611. The display control module 170 outputs a display effect corresponding to the selection of the object 611. For example, the display control module 170 highlights the object 611 or displays the object 611 of at least one of the different color, form, and brightness than a surrounding (for example, a background or another object).

When an event (for example, an event corresponding to a drag operation in a predetermined direction in a touch down state) relating to the object 611 occurs, the display control module 170 moves and displays the object 611. For example, the display control module 170 moves the object disposed at the screen top center to the edge of the display 151 (or the first application execution screen 601 outputted to the display 151) in correspondence to an event occurrence. When the object 611 is disposed at a specified position (for example, the edge area of the display 151), the display control module 170 displays a virtual additional object 612 at one side of the display 153 (or the second application execution screen 602 displayed on the display 153). The display control module 170 displays an additional object 612 that at least one of the form, color, and brightness of the object 611 is prepared similarly (or differently), on the display 153. The display control module 170 displays the additional object 612 in an area adjacent to the display position of the object 611 of the display 151. According to various embodiments, the display control module 170 copies the object 611 but display the additional object 612 having a relatively high transparency on the display 153.

When an event for selecting the additional object 612 displayed on the display 153 occurs as shown in a state 620, the display control module 170 displays the object 611 displayed on the display 151 to be differently from a previous state on the display 151 (for example, remove the object 611 from the display 151 or perform a transparency process on the object 611 to be invisible). When an event relating to the additional object 612 occurs, the display control module 170 moves the additional object 612 on the display 153 in correspondence to a corresponding event. During the above-mentioned operation, the display control module 170 delivers information relating to the additional object 612 to the display 153 through the signal line 113.

According to various embodiments, the display control module 170 displays the object 611 to be layered in correspondence to the selection operation of the object 611. The display control module 170 moves the object 611 to the edge of the first application execution screen 601 and display it in correspondence to an event occurrence. When the object 611 is disposed at a specified edge, the display control module 170 generates an additional object 612 on the basis of the object 611. The display control module 170 displays the additional object 612 in an area adjacent to the display position of the object 611 of the display 151. For example, the display control module 170 displays the additional object 612 to be parallel to the object 611. Even when an event for releasing the selection of the object 611 occurs, the display control module 170 maintains a display state of the additional object 612. When an event for selecting the additional object 612 occurs, the display control module 170 provides a display effect relating to the additional object 612. The display control module 170 moves the additional object 612 on the display 153 in correspondence to an additional event occurrence.

According to various embodiments, when a specified time elapses after the object 611 selection release, the display control module 170 processes the additional object 612 displayed on the display 153 differently from a previous state (for example, remove or perform a transparency process, or adjust a transparency). Additionally or in certain embodiments, the display control module 170 automatically moves the object 611 to the initial position. In certain embodiments, the display control module 170 displays the object 611 on the display 151 differently from a previous state.

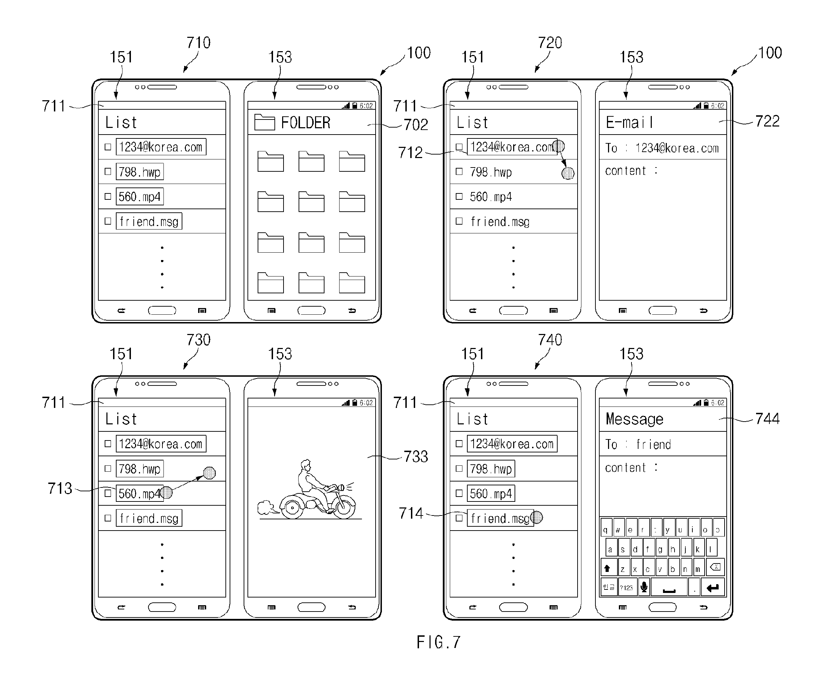

FIG. 7 illustrates a selection object related function execution according to various embodiments of the present disclosure.

Referring to FIG. 7, according to various embodiments, as shown in a state 710, the display control module 170 outputs an application execution screen 711 to the display 151 in correspondence to event occurrence. The display control module 170 outputs a first application selection available menu item or icon. In certain embodiments, the display control module 170 executes a first application in correspondence to specified schedule information and outputs an application execution screen 711 to the display 151. According to various embodiments, the application execution screen 711 is a screen according to a list function execution.

When the application execution screen 711 is outputted to the display 151, the display control module 170 automatically outputs an application execution screen 702 to the display 153. For example, the display control module 170 automatically executes a second application relating to the first application and output the application execution screen 702. In certain embodiments, the display control module 170 executes the second application in correspondence to a user input control and outputs the application execution screen 702 according thereto to the display 153.

According to various embodiments, the display control module 170 outputs an application execution screen 722 to the display 153 in correspondence to the object 712 selection from the application execution screen 711 as shown in a state 720. According to various embodiments, when at least one of an object 712 selection event and an additional event (for example, a drag event for moving the object 712 to a specified position of the application execution screen 711) occurs, the display control module 170 executes an application providing the application execution screen 722. An application relating to the application execution screen 722 is an application relating to the object 712. For example, when the object 712 is an e-mail address related item, the display control module 170 activates an e-mail creation application. The display control module 170 automatically extracts e-mail information written in the object 712. The display control module 170 automatically inputs the extracted e-mail information as receiver information of the e-mail creation application.

According to various embodiments, the display control module 170 outputs an application execution screen 733 to the display 153 in correspondence to the object 713 selection from the application execution screen 711 as shown in a state 730. When at least one of an object 713 selection event and an additional event (for example, a drag event for moving the object 713 to a specified position of the application execution screen 711 or moving the object 713 at a speed of more than a specified size) occurs, the display control module 170 executes an application providing the application execution screen 733. An application relating to the application execution screen 733 is an application relating to the object 713. For example, when the object 713 is a video content related item, the display control module 170 activates a video view application. The display control module 170 outputs a video screen according to the object 713 execution, that is, an application execution screen 733, to the display 153.

According to various embodiments, the display control module 170 outputs an application execution screen 744 to the display 153 in correspondence to the object 714 selection from the application execution screen 711 as shown in a state 740. According to various embodiments, when at least one of an object 714 selection event and an additional event (for example, a long touch event for touching the object 714 for more than a specified time or a repeating touch event for touching the object 714 more than a specified number) occurs, the display control module 170 executes an application providing the application execution screen 744. An application relating to the application execution screen 744 is an application relating to the object 714. For example, when the object 714 is a message related item, the display control module 170 activates a message creation application. The display control module 170 extracts receiver information from the message related item. The display control module 170 automatically inputs the extracted receiver information as receiver information of the message creation application.

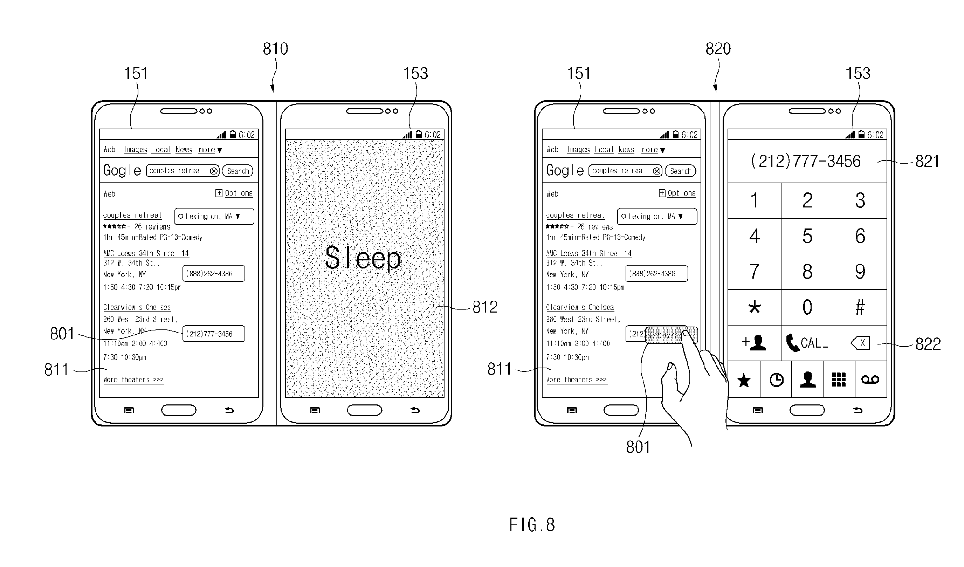

FIG. 8 illustrates a search object related application execution according to various embodiments of the present disclosure.

Referring to FIG. 8, according to various embodiments, as shown in a state 810, the display control module 170 outputs an application execution screen 811 to the display 151 in correspondence to event occurrence. For example, the display control module 170 activates a web browser in correspondence to user input information. The display control module 170 output search information corresponding to a user input to the application execution screen 811. The application execution screen 811 includes various information. For example, the application execution screen 811 includes text information and image information. According to various embodiments, the application execution screen 811 includes an object 801 including continuous number information. According to various embodiments, the display control module 170 allows the display 153 to be in a sleep mode state (for example, when power supply is stopped). Accordingly, the display 153 maintains a power-off screen 812.

According to various embodiments, when at least one of an event for selecting the object 801 and an event for additionally moving the object 801 on the display 151 occurs, the display control module 170 executes an object 801 related application. In certain embodiments, when an event for moving the object to a specified position on the display 151 after selecting the object 801, the display control module 170 executes the object 801 related application. The display control module 170 outputs a sub menu or list including a plurality of applications relating to the object 801. When an event (for example, a touch event for selecting at least one of a plurality of applications) occurs, the display control module 170 executes at least one application among a plurality of applications.

The display control module 170 outputs an application execution screen 822 to the display 153 as shown in a state 820 in correspondence to an application execution. The display control module 170 extracts information included in the object 801, for example, number information. The display control module 170 automatically inputs the extracted number information to an input area 821 in the application execution screen 822.

According to various embodiments, the display control module 170 provides at least part of object 801 related information as input information of the application execution screen 822. In certain embodiments, the display control module 170 changes at least part of object 801 related information and provides it as input information of the application execution screen 822. According to various embodiments, when the object 801 is a phone number, the display control module 170 writes at least part of information included in the object 801 in a phone number input blank of the application execution screen 822 relating to a calling function. The display control module 170 automatically writes additional information, for example, an area code, in information extracted from the object 801. In certain embodiments, the display control module 170 automatically writes information such as a specific symbol (for example, a hyphen), a character, or a number in at least a certain position of the extracted information.

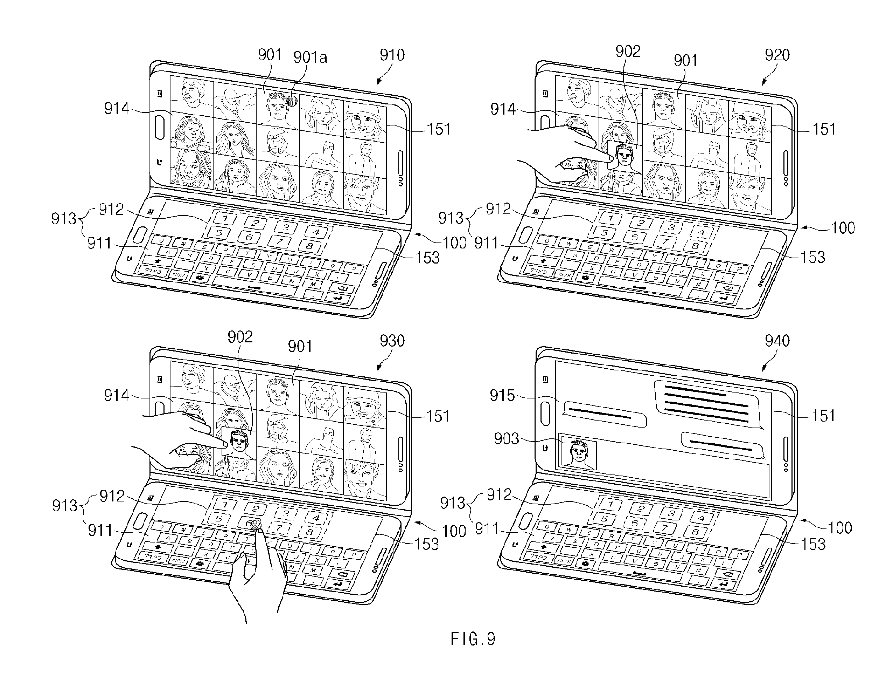

FIG. 9 illustrates a selection object related item management according to various embodiments of the present disclosure.

Referring to FIG. 9, according to various embodiments, as shown in a state 910, the display control module 170 outputs at least one object (for example, an object including a picture object, a drawing object, or a thumbnail object) to the display 151. For example, the display control module 170 outputs an application execution screen 914 in correspondence to a gallery function execution request. The display control module 170 selects an object 901 in correspondence to a selection event 901a occurrence for selecting the object 901 from at least one object. The display control module 170 provides a selection display effect of the object 901.

According to various embodiments, the display control module 170 outputs an application execution screen 913 to the display 153 in correspondence to set schedule information or a user input. The application execution screen 913, for example, includes a key input area 911 and an item arrangement area 912. The key input area 911, for example, is an area where at least one virtual key is disposed in order to input numbers, characters, and special characters. The item arrangement area 912 is an area including an icon or menu item relating to a specific function or application execution.

According to various embodiments, the display control module 170 outputs an object 902 relating to the object 901 to the display 151 as shown in a state 920 in correspondence to the object 901 selection from the application execution screen 914. The object 902 is the same object as the object 901 or is an object of which at least one of the form, color, and brightness is displayed differently from the object 901. When the object 902 moves or is displayed according to the object 901 selection, or the object 901 is selected, the display control module 170 adjusts at least one of the display form, color, and brightness of items in the item arrangement area 912. For example, the display control module 170 processes at least one item relating to at least one of the object 901 and the object 902 among items arranged in the item arrangement area 912 to be selectable. The display control module 170 processes at least one item not relating to the object 901 and the object 902 to be un-selectable. According to various embodiments, the display control module 170 displays at least one of the form, color, brightness, and selectability of related items (for example, items 1, 2, 5, and 6 disposed in the item arrangement area 912) to be different from at least one of the form, color, brightness, and selection possibility of unrelated items (for example, items 3, 4, 5, 7, and 8 disposed in the item arrangement area 912). According to various embodiments, when an event for selecting the object 902 is released, the display control module 170 restores the display adjustment of the item arrangement area 912 to the original state. In certain embodiments, the display control module 170 displays the object 902 on the display 151 differently (for example, remove the object 902 or perform a transparency process on the object 902, or adjust a transparency of the object 902) from a previous state. Additionally, the display control module 170 restores at least one object display state differently displayed in correspondence to the object 902 display to the state 910.

According to various embodiments, as shown in a state 930, a user selects at least one item from items displayed in the item arrangement area 912. For example, the display control module 170 receives an event for selecting the item 6 disposed in the item arrangement area 912.

According to various embodiments, the display control module 170 executes an application corresponding to an application execution screen 915 in correspondence to an item 6 selection. For example, the display control module 170 activates a chatting application in correspondence to the type of the item 6. For example, when the item 6 is an e-mail creation application, the display control module 170 activates an e-mail creation application. The display control module 170 outputs an application execution screen 915 as shown in a state 940. The display control module 170 disposes the application execution screen 915 to be overlaid on the application execution screen 914 outputted to the display 151. In certain embodiments, the display control module 170 terminates an application relating to the application execution screen 914 and output the application execution screen 915 to the display 151.

The display control module 170 disposes the object 902 at a predetermined position of the application execution screen 915. In certain embodiments, the display control module 170 displays the object 903 at an input area of the application execution screen 915 as shown in the state 940. The display control module 170 adjusts a display state of items in the item arrangement area 912 in correspondence to an application execution screen 915 output. For example, the display control module 170 adjusts items in the item arrangement area 912 to be selectable. In certain embodiments, the display control module 170 adjusts the remaining items other than the item 6 relating to the application execution screen 915 among the items disposed in the item arrangement area 912 to be selectable.

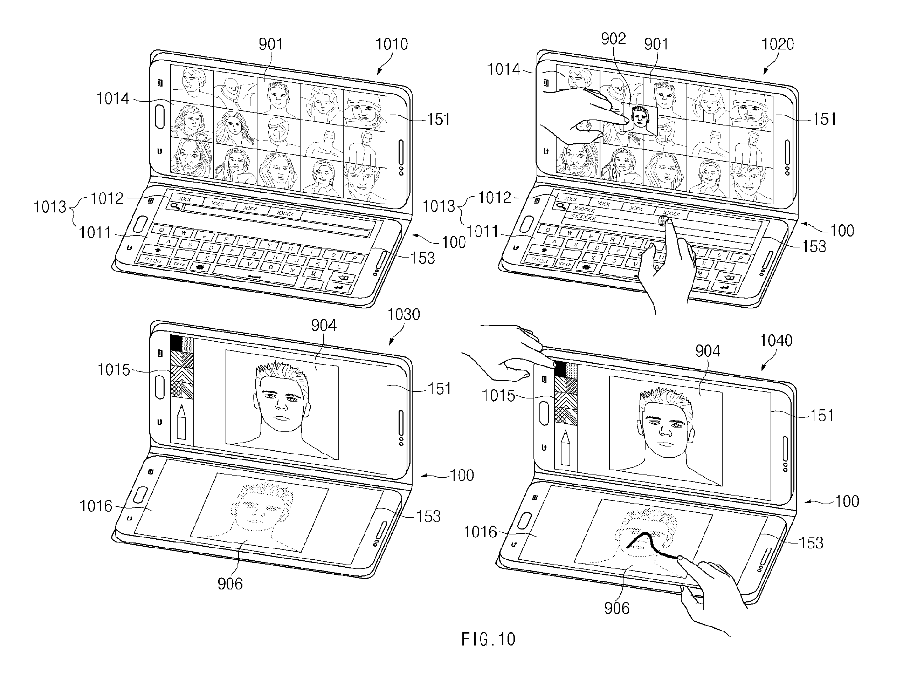

FIG. 10 illustrates a selection object related search management according to various embodiments of the present disclosure.

Referring to FIG. 10, according to various embodiments, as shown in a state 1010, the display control module 170 outputs to the display 151 an application execution screen 1014 where at least one object (for example, an object including a picture object, a drawing object, or a thumbnail object) is disposed. For example, the display control module 170 outputs an application execution screen 1014 in correspondence to a file search function execution request. The display control module 170 selects an object 901 in correspondence to a selection event occurrence for selecting the object 901 from at least one object. the display control module 170 provides a selection display effect (for example, the object 901 and surrounding objects are displayed differently, for example, at least one of form, color, and brightness of the object 901 is displayed differently.) of the object 901.

According to various embodiments, the display control module 170 outputs an application execution screen 1013 to the display 153 in correspondence to set schedule information or a user input. The application execution screen 1013, for example, includes a key input area 1011 and a search area 1012. The key input area 1011, for example, is an area where at least one virtual key is disposed in order to input numbers, characters, and special characters. The search area 1012 is an area for providing information search or a searched information history. In certain embodiments, the search area 1012 is a tool-bar area.

According to various embodiments, the display control module 170 receives an event for selecting an object 901 from an application execution screen 1014. The display control module 170 outputs an object 902 relating to the object 901 to the display 151 as shown in a state 1020 in correspondence to the object 901 selection. The object 902 is the same object as the object 901 or is an object of which at least one of the form, color, and brightness is displayed differently from the object 901.

The display control module 170 receives an event for selecting the search area 1012 while the object 902 is outputted. The display control module 170 outputs information relating to the object 902 to the search area 1012 as shown in the drawing in correspondence to an event reception. For example, the display control module 170 outputs a paint function item (or a drawing function item) and file editing function item relating to the object 902. According to various embodiments, when character information is inputted from the key input area 1011, corresponding character information is inputted as a search word of the search area 1012. When the search word is inputted, the display control module 170 collects search information relating to a corresponding search word by using the electronic device 100 or the server device 106 connected to the network 162.

When a specific item (for example, a paint function) is selected from the search area 1012, as shown in a state 1030, the display control module 170 outputs an application execution screen 1015 to the display 151. The display control module 170 processes the selected object 902 as input information of the application execution screen 1015. The application execution screen 1015 displayed on the display 151 outputs an object 904 relating to the object 902. According to various embodiments, the display control module 170 outputs a second application execution screen 1016 to the display 153. In certain embodiments, the display control module 170 outputs a partial screen of the application execution screen 1015 to the display 153. The display control module 170 outputs an object 906 relating to the object 902 to the display 153.

According to various embodiments, as shown in a state 1040, the display control module 170 applies a display effect corresponding to an event occurring on the display 153 to the object 906. For example, the display control module 170 displays a line drawing effect on the object 906 in correspondence to an occurring event. According to various embodiments, in correspondence to a color selected from a color selection area in the application execution screen 1015 disposed on the display 151, a display effect displayed on the display 153 is changed. For example, when a specific color and form are selected from the application execution screen 1015, the display control module 170 outputs a display effect corresponding to an event occurring on the display 153 to correspond to the selected color and form. According to various embodiments, in correspondence to an event occurrence, the display control module 170 applies a drawing effect relating to the object 906 on the display 153 to the object 904 on the display 151. Additionally, the display control module 170 stores a drawing effect applied object in correspondence to an event occurrence.

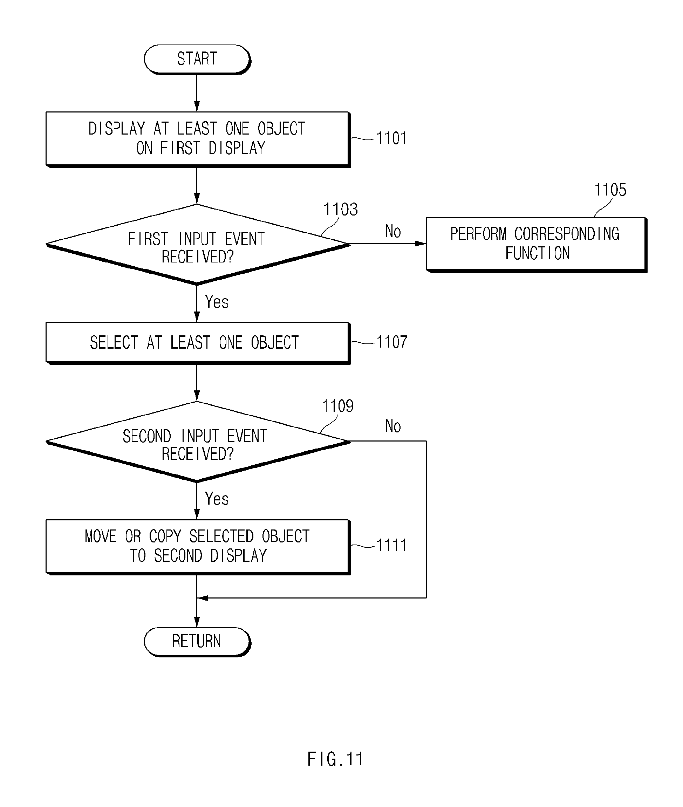

FIG. 11 illustrates a move or copy related object management method according to various embodiments of the present disclosure.

In operation 1101, an object management method according to various embodiments allows the display control module 170 to display at least one object on the display 151. The display control module 170 executes an application relating to at least one object display in correspondence to set schedule information or a user input.

In operation 1103, the display control module 170 checks whether a first input event is received. The first input event is an event relating to the selection of an object displayed on the display 151. For example, the first input event includes at least one of a touch event, hovering event, key button event, or gesture event for selecting an object. In operation 1105, when a first input event is not received, the display control module 170 controls a function execution corresponding to an occurring event type. For example, the display control module 170 controls the switching of a screen being outputted to the display 151 in correspondence to an event type. In certain embodiments, the display control module 170 executes a specific application in correspondence to an event type and outputs the application execution screen to the display 151. When an event is note received, the display control module 170 controls a sleep mode state entry in correspondence to a specified time elapse. In certain embodiments, the display control module 170 maintains a previously performed function state.

In operation 1107, when the first input event is received, the display control module 170 controls at least one object selection. For example, the display control module 170 selects a specific object specified by the first input event from at least one object displayed on the display 151. The display control module 170 varies at least one of a display form (or shape), a color, and a brightness between the selected object and the unselected objects.

In operation 1109, the display control module 170 checks whether a second input event is received. The second input event includes at least one of a specific touch event, hovering event, hovering event, key button related event, and gesture event occurring after the first input event occurrence. In operation 1111, when the second input event occurs, the display control module 170 moves or copies a selected object to a second display. In relation to the movement, the display control module 170 changes (for example, remove an object, perform a transparency process on an object, or change an object into a specified form, or adjust a transparency of an object) a display state of an object displayed on the display 151 and moves and displays a selected object on the display 153. In relation to the copy, the display control module 170 displays an object that is identical to an object displayed on the display 151 at a predetermined position of the display 153.

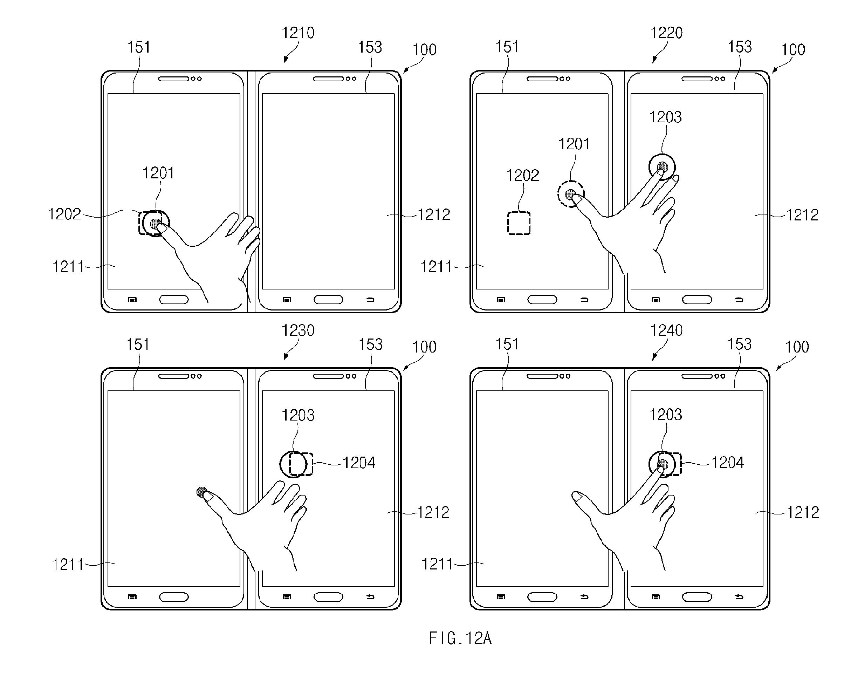

FIG. 12a illustrates a selection object movement according to various embodiments of the present disclosure.

Referring to FIG. 12a, according to various embodiments, as shown in a state 1210, the display control module 170 outputs an object 1202 to the display 151. The display control module 170 executes an application for displaying at least one object according to schedule information or a user input and display an application execution screen 1211 to the display 151. An application relating to the application execution screen 1211 includes a standby screen display application, a menu screen display application, and an icon display application. The display control module 170 outputs an application execution screen 1212 to the display 153 in correspondence to schedule information or a user input or in relation to the selected object 1202.

A user performs an operation for selecting the object 1202. The display control module 170 outputs a selection object 1202 on the application execution screen 1211 of the display 151 in correspondence to the object 1202 selection. When an event for moving the selection object 1201, for example, a touch drag event, occurs, the display control module 170 moves and displays the selection object 1201 on the application execution screen 1211 as shown in a state 1220. The object 1202 maintains a display state at a specific position of the application execution screen 1211. According to various embodiments, the object 1202 changes and displays at least one of the color, the form, and the brightness in correspondence to a movement of the selection object 1201. The display control module 170 receives an event for touching a specific point of the display 153 while maintaining a touch event relating to the selection object 1201. The display control module 170 displays the selection object 1203 on the display 153 in correspondence to an event for touching a specific point on the application execution screen 1212 of the display 153. For example, the display control module 170 outputs the selection object 1203 at a specific point where a touch event occurs on the application execution screen 1212 of the display 153.

According to various embodiments, the display control module 170 receives a touch release event relating to the selection object 1203 as shown in a state 1230. When a touch release event relating to the selection object 1203 occurs, the display control module 170 moves and displays an object 1204 corresponding to the object 1202 displayed on the application execution screen 1211 of the display 151, on the application execution screen 1212 of the display 153. In certain embodiments, the display control module 170 moves and displays the object 1204 at a position where the selection object 1203 is disposed. When a specified time elapses or an object movement display mode or function is terminated, the display control module 170 displays and changes the selection object 1203 displayed on the display 153, and to display the object 1204 on the display 153. The display control module 170 continuously receives a touch event relating to the selection object 1202. According to various embodiments, when a touch event occurring on the display 151 is released, the display control module 170 displays and changes the displayed selection object 1203 on the application execution screen 1212.

According to various embodiments, the display control module 170 receives a touch release event relating to the selection object 1201 as shown in the change from the state 1220 into the state 1240. When a touch release event relating to the selection object 1201 occurs, the display control module 170 determines it as an event occurrence relating to a movement display of the object 1202. Accordingly, the display control module 170 moves and displays the object 1204 at a position where the selection object 1203 is disposed on the application execution screen 1212. The object 1204 is the same object as the object 1202 or is an object of which at least one of the form, color, and brightness is modified or changed. In certain embodiments, the object 1204 performs supporting a function identical to a function executed in correspondence to the object 1202 selection. When a predetermined time elapses or a touch event relating to the selection object 1203 is released after the object 1204 movement is displayed, the display control module 170 displays and changes (for example, remove an object, perform a transparency process on an object, or change an object into a specified form, or adjust a transparency of an object) the selection object 1203 on the application execution screen 1212 of the display 153. Additionally, the display control module 170 displays and changes (for example, remove an object, perform a transparency process on an object, or change an object into a specified form, or adjust a transparency of an object) at least one of the object 1202 displayed on the application execution screen 1211 and the selection object 1202 in correspondence to a touch event release on the display 151.

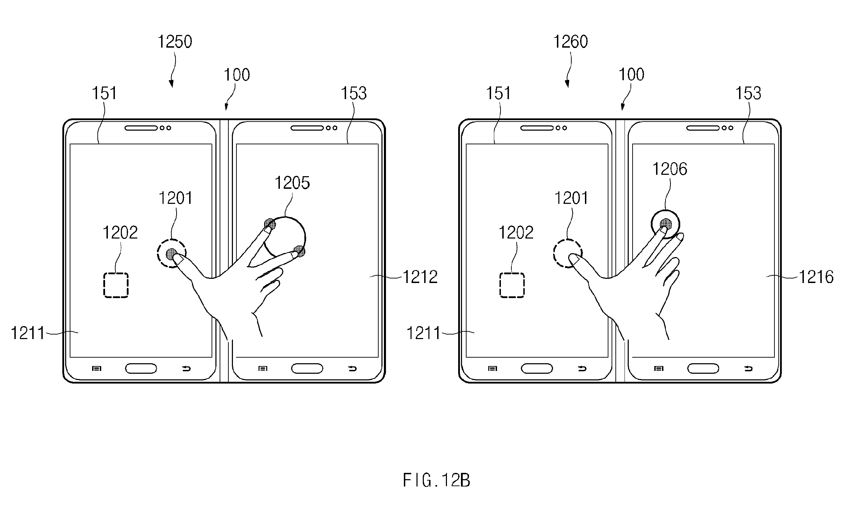

FIG. 12b illustrates a selection object change according to various embodiments of the present disclosure.

Referring to FIG. 12b, according to various embodiments, as shown in a state 1250, the display control module 170 outputs an application execution screen 1211 to the display 151. The application execution screen 1211 includes at least one object, for example, an object 1202 disposed at a predetermined position. When an event corresponding to the object 1202 selection occurs, the display control module 170 generates a selection object 1201. The display control module 170 moves the selection object 1201 from the object 1202 position and display it in correspondence to the occurrence of an event (for example, a touch drag event).

The display control module 170 receives a specific event (for example, pinch zoom or pinch zoom out) on the display 153. The display control module 170 outputs an application execution screen 1212 to the display 153. An application relating to the application execution screen 1212 is an application relating to the selected object 1202, an application executed in correspondence to a user input, or an application executed according to schedule information. When a specific event occurs, the display control module 170 displays a selection object 1205 corresponding to the selection object 1201 on the display 153. For example, the display control module 170 displays the selection object 1205 at a point where a specific event occurs or in an area adjacent to the point. The selection object 1205 is modified in correspondence to a specific event. For example, the selection object 1205 enlarges or reduces and displays the size in correspondence to at least one of a distance between multi touch points, a touch speed, and a direction.

According to various embodiments, the display control module 170 differently outputs the selection object 1205 according to at least one of the number of touch points, the type of a touch object (for example, a finger or a stylus pen), a touch order (for example, an input order of a plurality of touch points), a touch pattern (for example, a time interval or a touch holding time between touches such as tap touch, long touch, and multi touch), and a touch form (for example, a touch input form). For example, when touch points on the display 153 are more than three, the display control module 170 outputs as the selection object 1205 a menu for selecting at least one application relating to the selection object 1201. In certain embodiments, the display control module 170 identifies finger information on the basis of at least one of a touch area size and a touch direction on the display 153. The selection object 1205 corresponding to at least one specified function related menu is outputted in correspondence to form, color, brightness, and selectability separated finger information. In certain embodiments, the display control module 170 differently outputs at least one of the number of the selection objects 1205, the form of the selection object, and an execution function of the selection object 1205 according to a touch order of a plurality of touch points. For example, when two touch points (for example, touch points according to a touch by user's index finger and middle finger) are detected from the display 153, the display control module 170 differently outputs at least one of the form, number, and property (for example, a function performed in correspondence to the selection object 1205) of the selection object 1205 or perform a different function in correspondence to which touch point among the two touch points is touched first or later. In certain embodiments, the selection object 1205 is changed variously according to a touch pattern. For example, three touch points including a first point occurring at a first point, a second touch occurring at a second point, and a third touch occurring at a third point, each having a different time interval (for example, a touch holding time or an interval between touch occurrences), is inputted. When the three touch points are inputted, the display control module 170 outputs the selection object 1205 executing a different function according to the size of the time interval. In certain embodiments, the selection object 1205 is changed according to a touch pointer form (for example, form, color, and brightness) or touch form (for example, a form by a scratch or touch operation). For example, the display control module 170 distinguishes a first form touch input inputted in correspondence to the case of scratching the display 153 by using a touch object from a second form touch input inputted in corresponding to the case of touching the display 153, by using a touch pointed area and a touch trajectory trace. Accordingly, the display control module 170 outputs the selection object 1205 in a different function or form in correspondence to the form of a touch input.

According to various embodiments, when a touch event relating to the selection object 1205 is released as shown in a state 1260, the display control module 170 displays a selection object 1206 on the display 153. The object 1206 has a size corresponding to the last size of the selection object 1205.

According to various embodiments, the display control module 170 changes an application execution screen to be outputted to the display 153 in correspondence to a size change of the selection object 1205. Accordingly, the display control module 170 displays an application execution screen 1216 on the display 153. The display control module 170 controls the object table update in a memory in correspondence to a movement of the object 1202. The object table includes information defining a display position displayed by each object.

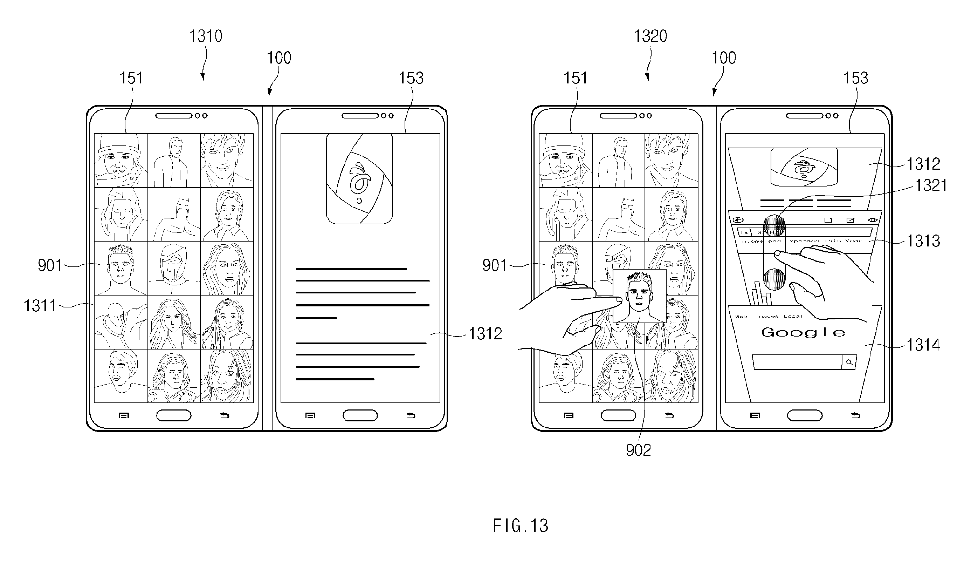

FIG. 13 illustrates a selection object related second display screen control according to various embodiments of the present disclosure.

Referring to FIG. 13, as shown in a state 1310, the display control module 170 executes a specific application and output a corresponding application execution screen 1311 to the display 151 in correspondence to a user input or schedule information. For example, the application execution screen 1311 is a screen including at least one object. For example, an object 901 is disposed at a predetermined position in the application execution screen 1311.

According to various embodiments, the display control module 170 executes at least one application in correspondence to a user input, schedule information, or at least one object selected from the application execution screen 1311. The display control module 170 outputs an application execution screen 1312 to the display 153. According to various embodiments, the display control module 170 executes a plurality of applications and disposes a specific application execution screen among application execution screens, each being disposed on the display 153, on the uppermost layer.

According to various embodiments, as shown in a state 1320, when an event for selecting the object 901 from the application execution screen 1311 occurs, the display control module 170 outputs a selection object 902 to the display 151 correspondingly. The display control module 170 displays the selection object 902 differently from the object 901. For example, the display control module 170 differently displays at least one of the form, color, and brightness between the object 901 and the selection object 902. The display control module 170 receives a touch event 1321 occurring on the display 153 while an event for selecting the selection object 902 is maintained. When the touch event 1321 is received, the display control module 170 differently disposes at least one application execution screen on the display 153. For example, the display control module 170, as shown in the drawing, displays at least part of a plurality of application execution screens 1312, 1313, and 1314 on the display 153. The display control module 170 disposes at least part of the plurality of application execution screens 1312, 1313, and 1314 to overlap each other. The display control module 170 changes a display form of the application execution screens 1312, 1313, and 1314 in correspondence to a movement of the touch event 1321. For example, the display control module 170 varies a display angle or a display size of the application execution screens 1312, 1313, and 1314 in correspondence to a movement direction of the touch event 1321.

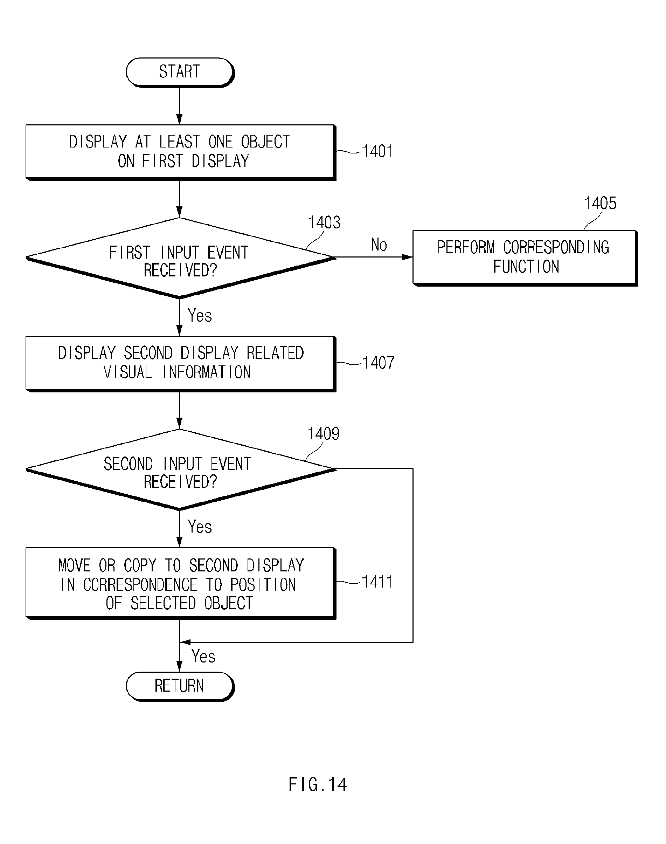

FIG. 14 illustrates a position based object management method of a selection object according to various embodiments of the present disclosure.

In operation 1401, the display control module 170 displays at least one object on the display 151. The display control module 170 executes an application including at least one object in correspondence to schedule information or a user input.

In operation 1403, the display control module 170 checks whether a first input event is received. For example, the display control module 170 checks whether an input event relating to the display 151 or an input event relating to at least one object occurs. In certain embodiments, the display control module 170 checks whether an input event for selecting at least one object occurs.

In operation 1405, when a first input event is not received, the display control module 170 controls a function execution corresponding to an occurring event type. For example, the display control module 170 controls the switching of a sleep state (for example, when a display is turned off) according to a specified time elapse. In certain embodiments, the display control module 170 performs the screen switching of at least one of the displays 151 and 153 or adds or removes an object of a specific screen in correspondence to an occurring event type. In certain embodiments, when a first input event is not received, the display control module 170 maintains a previous state. The display control module 170 controls sleep state processing when a specified time elapses.

In operation 1407, when a first input event is received, the display control module 170 displays at least one display 153 related visual information. For example, the first input event includes at least one of a touch event or hovering event for selecting at least one object, a touch event or hovering event for moving at least one object to a predetermined position, and an event for selecting at least one object by a specified gesture form. According to various embodiments, the first input event is an event for moving a specific object disposed in an application execution screen to a predetermined position (for example, an edge area (which can be defined within a predetermined distance on the basis of a bezel area of the display 151 or defined out of a predetermined distance on the basis of the center of the display 151) of the display 151) of the display 151. According to various embodiments, the first input event is a long touch event for touching a specific object for more than a specified time.

When a specified first input event is received, the display control module 170 obtains execution screen information of at least one application in execution in relation to at least one display 153. The display control module 170 generates visual information on the basis of the obtained application execution screen information. For example, the display control module 170 extracts at least one object (for example, a text object, an image object, an entire screen, a person object, a thing object, and a background object) included in the obtained application execution screen and generates visual information including a corresponding object. In certain embodiments, the display control module 170 generates visual information obtained by modifying (for example, enlarging or reducing at least one object) at least one object included in an application execution screen. In certain embodiments, according to various embodiments, the display control module 170 assigns pre-defined information (for example, at least one of text information and image information) to each application execution screen to generate visual information.

According to various embodiments, the display control module 170 generates visual information assigned to each of a plurality of displays. For example, the display control module 170 generates visual information on the basis of application execution screen information displayed at the uppermost layer of a plurality of displays. In certain embodiments, the display control module 170 generates visual information including at least one of text information and image information specified by each display.

According to various embodiments, the display control module 170 reads visual information relating to an application execution screen from the memory 130. Visual information corresponding to at least one application execution screen is stored in the memory 130. The display control module 170 outputs generated visual information or visual information stored in the memory 130 on the display 151.

The display control module 170 maintains an object display state selected from a process for outputting visual information, on the display 151. The display control module 170 removes an application execution screen being outputted to the display 151 or modifies (for example, reduce it to a predetermined size or perform a transparency process, or adjust degree of transparency on it) an application execution screen, thereby displaying the application execution screen without overlapping with visual information. According to various embodiments, at least part of an application execution screen outputted to the display 151 overlaps with visual information and is displayed.

In operation 1409, the display control module 170 checks whether a second input event is received. According to various embodiments, the display control module 170 checks the occurrence of an event for overlaying a selected object on visual information being outputted to the display 151. For example, the display control module 170 checks whether there is the reception of an event for dragging a selected object to overlap with at least part of specific visual information. According to various embodiments, the display control module 170 checks whether there is the reception of an event for moving a selected object in a specific direction at a specific speed. In certain embodiments, the display control module 170 check whether there is the reception of an event for moving a selected object to be disposed within a predetermined distance with specific visual information. In certain embodiments, the display control module 170 checks whether there is the reception of an event for selecting at least one visual information being outputted to the display 151.

In operation 1411, when a second input event is received, the display control module 170 moves or copies a selected object to the display 153 in correspondence to the position of the selected object. For example, the display control module 170 processes the selected object as input information of an application execution screen corresponding to visual information disposed to allow an object selected when a plurality of visual information are outputted to the display 151. In certain embodiments, the display control module 170 moves and displays or copies and displays the selected object at a predetermined position of an application execution screen relating to the visual information in correspondence to the selected object position on visual information (displayed on the display 151). When visual information where the selected object is disposed is not visual information relating to an application execution screen displayed at the uppermost layer, the display control module 170 changes the uppermost layer on the display 153. For example, the display control module 170 displays an application execution screen relating to visual information of which at least part overlaps the selected object at the uppermost layer of the display 153. In certain embodiments, the display control module 170 maintains the arrangement of application execution screens on the display 153.

When a second input event is not received, the display control module 170 skip operation 1411. The display control module 170 proceeds to operation 1405 to perform a specific function in correspondence to an input event occurrence or proceeds to operation 1401 to perform the subsequent processes again. In certain embodiments, the display control module 170 performs sleep state processing in correspondence to a user input.

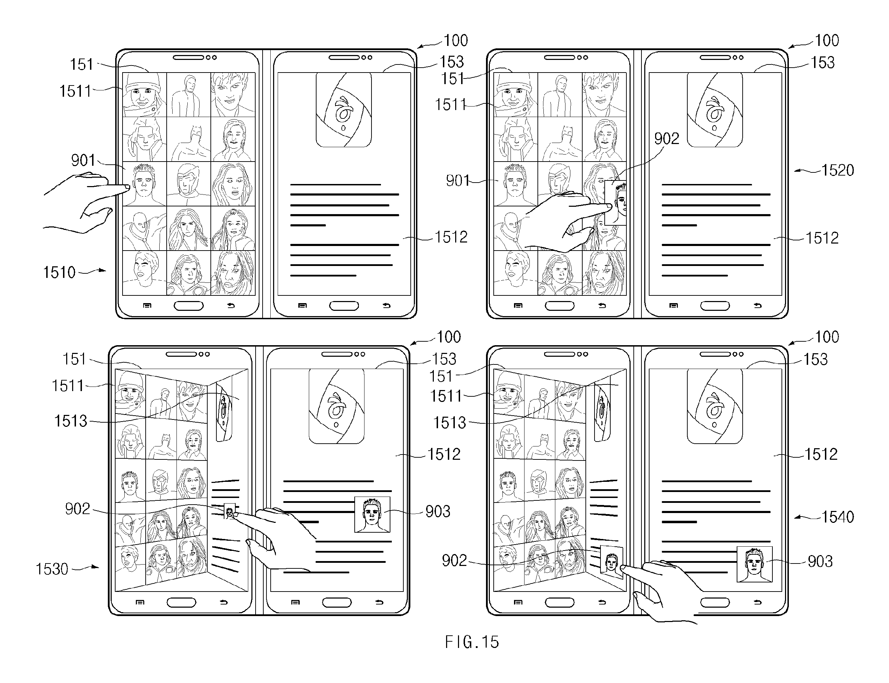

FIG. 15 illustrates a visual information based object management according to various embodiments of the present disclosure.

Referring to FIG. 15, according to various embodiments, as shown in a state 1510, the display control module 170 outputs an application execution screen 1511 to the display 151. For example, the display control module 170 executes a specific application in correspondence to a user input, schedule information or an external input signal reception, and outputs the application execution screen 1511 according thereto to the display 151. The application execution screen 1511 is a screen including at least one object. For example, the application execution screen 1511 is a screen including an object 901. According to various embodiments, the display control module 170 outputs at least one application execution screen 1512 to the display 153 in correspondence to schedule information or a user input.

The display control module 170 receives an event for selecting the object 901 in correspondence to a user input. The display control module 170 outputs a selection object 902 at a predetermined position of the display 151 in correspondence to the object 901 selection. In correspondence to an event occurrence relating to the selection object 902, as shown in a state 1520, the display control module 170 moves and displays the selection object 902 on the display 151.

When the selection object 902 is disposed at a specific point of the display 151, as shown in a state 1530, the display control module 170 outputs visual information 1513 relating to the application execution screen 1512 to the display 151. The visual information 1513 is a screen obtained by modifying or reducing the application execution screen 1512. In certain embodiments, the visual information 1513 is information including at least one object in the application execution screen 1512.

According to various embodiments, when the selection object 902 is disposed is an edge area of the display 151 adjacent to the display 153, the display control module 170 outputs the visual information 1513 at a predetermined position of the display 151. For example, the display control module 170 outputs the visual information 1513 in an edge area of the display 151 adjacent to the display 153. The display control module 170 modifies (for example, adjust at least one of the size and form of the application execution screen 1511) to dispose it together with the visual information 1513. The display control module 170 automatically disposes the selection object 902 on the visual information 1513. The display control module 170 changes at least one of the size and form of the selection object 902 to output it.

In correspondence to that the selection object 902 is disposed at a predetermined position of the visual information 1513, the display control module 170 outputs an object obtained by copying the selection object 902 on the application execution screen 1512. The display control module 170 adjusts the position of the object 903 to correspond to the position of the selection object 902 on the visual information 1513. For example, when the selection object 902 is disposed at the center of the visual information 1513, the display control module 170 disposes the object 903 to be displayed at the center of the application execution screen 1512.

According to various embodiments, when an event for moving the selection object 902 to a specific position of the visual information 1513 is received, as shown in a state 1540, the display control module 170 moves and displays the selection object 902 on the visual information 1513. The display control module 170 adjusts the position of the object 903 on the application execution screen 1512 in correspondence to a movement of the selection object 902. For example, when the selection object 902 is moved and displayed at the right bottom of the visual information 1513, the display control module 170 moves and displays the object 903 at the right bottom of the application execution screen 1512.

According to various embodiments, when an event for the selection object 902 (for example, a touch down event for the selection object 902 on the display 151) is released, the display control module 170 moves and displays or copies and displays the object 902 on the application execution screen 1512 where the object 903 is displayed. The display control module 170 changes (for example, removes the object 902, performs a transparency process on the object 902, or changes the object 902 into a specified form) the display of the selection object 902 displayed on the display 151.

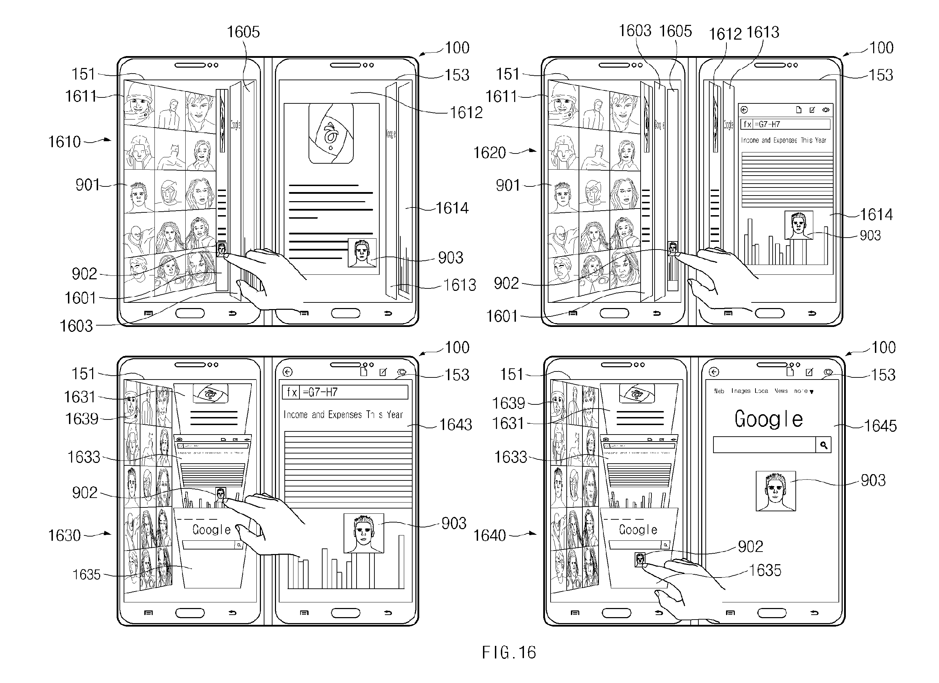

FIG. 16 illustrates a multiple visual information based object management according to various embodiments of the present disclosure.

Referring to FIG. 16, as shown in a state 1610, the display control module 170 disposes a plurality of visual information 1601, 1603, and 1605 on the display 151 in correspondence to a specified condition satisfaction. For example, the display control module 170 obtains a specific event (for example, at least one of an event for selecting an object 901 of an application execution screen 1611 outputted to the display 151, an event for displaying a selection object 902 in correspondence to an object 901 selection, a specific gesture event relating to at least one of the object 901 and the selection object 902, and an event for moving the selection object 902 to a specific position of the display 151). When a specific event occurs, the display control module 170 obtains screen information of application execution screens relating to the display 153 to generate visual information 1601, 1603, and 1605. In certain embodiments, when the above specific event occurs, the display control module 170 obtains visual information 1601, 1603, and 1605 stored in the memory 130. The display control module 170 stores at least one visual information in the memory 130 on the basis of an execution screen of at least one application relating to the display 153. When an application having no visual information is executed, the display control module 170 generates visual information on the basis of execution screen information of a corresponding application and store it in the memory 130.

According to various embodiments, the display control module 170 disposes the plurality of visual information 1601, 1603, and 1605 side by side vertically as shown in the drawing. The display control module 170 changes at least one of the size and form of the application execution screen 1611 to obtain a space for displaying the visual information 1601, 1603, and 1605. The display control module 170 displays the visual information 1601, 1603, and 1605 in the obtained space. In certain embodiments, the display control module 170 overlays the visual information 1601, 1603, and 1605 on the application execution screen 1611 and display them. In correspondence to an event occurrence relating to the selection object 902, the display control module 170 disposes the selection object 902 on the visual information 1601. According to various embodiments, as shown in a state 1620, the display control module 170 moves the selection object 902 and dispose it on the visual information 1605 in correspondence to an event occurrence relating to the selection object 902. The display control module 170 adjusts a display form of visual information where the selection object 902 is disposed. For example, the display control module 170 changes and displays the slope of visual information that is disposed to be tilted when the selection object 902 is disposed adjacently or at least part of the selection object 902 overlaps.

According to various embodiments, when the selection object 902 is disposed on the visual information 1601, the display control module 170 outputs an application execution screen 1612 at one side of the display 153. For example, when a moving or copying function of the selection object 902 is executed, the display control module 170 displays an application execution screen relating to the selection object 902 among application execution screens executed in relation to the display 153 differently from other application execution screens. According to various embodiments, the display control module 170 displays application execution screens 1612, 1613, and 1614 on the display 153, but displays the application execution screen 1612 relating to the visual information 1601 where the selection object 902 overlaps differently from the other application execution screens 1613 and 1614. For example, the display control module 170 displays a displayed form of the application execution screen 1612 differently from the application execution screens 1613 and 1614 (for example, the application execution screen 1612 in a rectangular form and the application execution screens 1613 and 1614 in a rhombic shape). In certain embodiments, the display control module 170 displays the application execution screen 1612 in an entire screen area of the display 153 with a relatively large ratio compared to the application execution screens 1613 and 1614). Similarly, as shown in a state 1620, if the selection object 902 overlaps on the visual information 1605 while the application execution screens 1612, 1613, and 1614 are displayed on the display 153, the display control module 170 displays the application execution screen 1614 relating to the visual information 1605 differently from the other application execution screens 1612 and 1613 (for example, allocating a relatively large area to the application execution screen 1614 compared to the size of a screen area where the other application execution screens 1612 and 1613 are displayed on the display 153).

According to various embodiments, the display control module 170 disposes and outputs an object 903 corresponding to the selection object 902 at one side of the application execution screen 1612 as shown in a state 1610. Additionally, as shown in a state 1620, the display control module 170 disposes and outputs an object 903 corresponding to the selection object 902 at one side of the application execution screen 1614. The display control module 170 disposes the object 903 at a predetermined position on a corresponding application execution screen in order to correspond to the position where the selection object 902 is disposed on the visual information 1601, 1603, and 1605.

According to various embodiments, when an event for the selection object 902 is released, the display control module 170 disposes the object 903 on a corresponding application execution screen. In certain embodiments, the display control module 170 processes the object 903 as input information of a corresponding application. When the selection object 902 related event is released, the display control module 170 allows the application execution screen 1611 to be outputted to the display 151 in full screen. When the selection object 902 related event is released, the display control module 170 allows an application execution screen where the object 903 is displayed to be outputted to the display 153 in full screen. The display control module 170 displays other application execution screens where the object 903 is not displayed differently from a previous display state in the display 153 (for example, change it into a specified form or color, perform a transparency process on it, or remove it).

According to various embodiments, the display control module 170 changes a display form of the visual information 1601, 1603, and 1605 where the selection object 902 overlaps. For example, when the selection object 902 overlaps the visual information 1601 disposed long vertically, the display control module 170 changes the display form of the visual information 1601 into a rectangular form disposed long vertically. Additionally, in correspondence to a movement of the selection object 902, when the overlapping state between the selection object 902 and the visual information 1601 is released, the display control module 170 restores the visual information 1601 to a previous state (for example, a state disposed in a rhombus shape). When the selection object 902 displayed on the display 151 overlaps new visual information 1605, as shown in a state 1620, the display control module 170 changes the display form of the visual information 1605 (for example, disposed in a rectangular shape (or trapezoidal shape or diamond shape) from a rhombus shape).

According to various embodiments, the display control module 170 displays the display form of the visual information 1631, 1633, and 1635 as shown in a state 1630 differently from the state 1610 or the state 1620. For example, the display control module 170 disposes the visual information 1631, 1633, and 1635 in a form having a predetermined horizontal width (that is, a greater horizontal width than the horizontal width in the state 1610) on the display 151. According to various embodiments, the display control module 170 disposes at least part of the plurality of visual information 1631, 1633, and 1635 to overlap each other. In certain embodiments, the display control module 170 disposes at least part of the plurality of visual information 1631, 1633, and 1635 to be displayed on the display 151 evenly (or uniformly) or unequally. The display control module 170 outputs the application execution screen 1639 of which at least one of the size and form is changed in correspondence to the sizes of the visual information 1631, 1633, and 1635.

According to various embodiments, the display control module 170 disposes the selection object 902 on specific visual information, for example, the visual information 1633, in correspondence to an event occurrence. The display control module 170 outputs an application execution screen 1643 corresponding to the visual information 1633 at the uppermost layer of the display 153. The display control module 170 displays the object 903 corresponding to the selection object 902 on the application execution screen 1643.

According to various embodiments, as shown in a state 1640, the display control module 170 disposes the selection object 902 on the visual information 1635 in correspondence to an event occurrence. The display control module 170 outputs an application execution screen 1645 corresponding to the visual information 1635 at the uppermost layer of the display 153. The display control module 170 displays the object 903 corresponding to the selection object 902 on the application execution screen 1645. The display control module 170 determines the position of the object 903 on the application execution screen 1645 in correspondence to the position of the selection object 902 on the visual information 1635. When the position of the selection object 902 is changed on the visual information 1635, the display control module 170 changes the position of the object 903 on the application execution screen 1645.

According to various embodiments, when an event for the selection object 902 is released, the display control module 170 changes (for example, remove the object 902, perform a transparency process on at least part of the object 902, or change the object 902 into a specified form, or adjust a transparency of the object 902) the display of the visual information 1631, 1633, and 1635 on the display 151. The display control module 170 displays the application execution screen 1639 on the display 151 in full screen. According to various embodiments, when an event for the selection object 902 is released, the display control module 170 displays the application execution screen of the object 903 in full screen at the uppermost layer of the display 153.

The object 903 is controlled to be disposed on a corresponding application execution screen. In certain embodiments, the display control module 170 processes the object 903 as input information of a corresponding application. When the selection object 902 related event is released, the display control module 170 allows the application execution screen 1639 to be outputted to the display 151 in full screen. When the selection object 902 related event is released, the display control module 170 allows an application execution screen where the object 903 is displayed to be outputted to the display 153 in full screen.

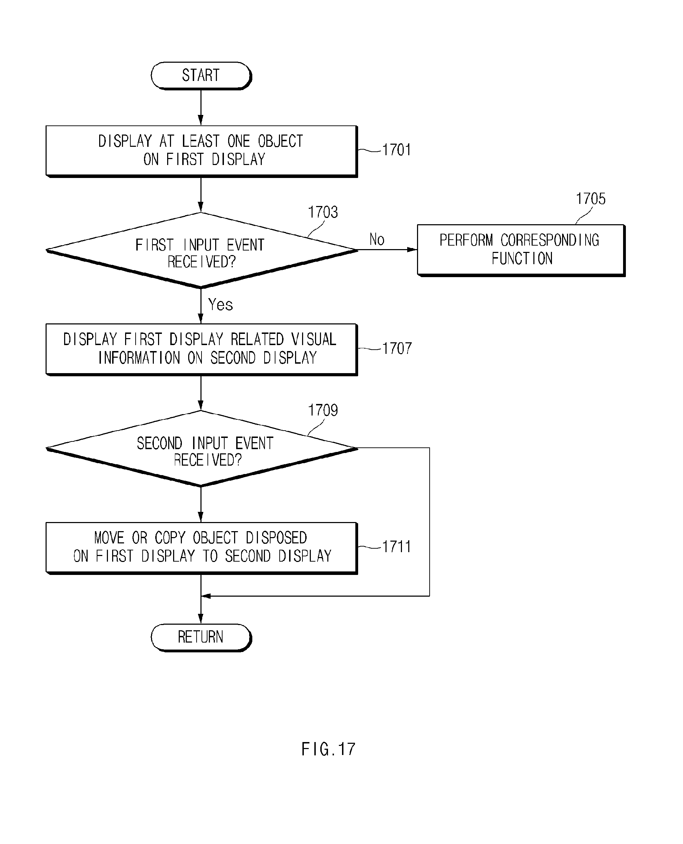

FIG. 17 illustrates a management method of a moved or copied object according to various embodiments of the present disclosure.

In operation 1701, an object management method according to various embodiments displays at least one object on the display 151 in correspondence to schedule information, a user input, or an external input signal reception. According to various embodiments, the display control module 170 outputs a lock screen to the display 151. When an event relating to a lock release occurs, the display control module 170 outputs a set screen (for example, a standby screen including at least one object, a menu screen, or a specific function screen). According to various embodiments, the display control module 170 outputs an application execution screen including an object relating to an application execution screen being outputted to the display 153, on the display 153 in correspondence to a user input or schedule information. In certain embodiments, when a specific application execution screen is outputted to the display 153, the display control module 170 outputs an application execution screen relating to a corresponding application execution screen to the display 153.

In operation 1703, the display control module 170 checks whether a first input event is received. For example, the display control module 170 checks whether there is an event reception relating to at least one object outputted to the display 151. According to various embodiments, the display control module 170 checks whether there is a reception of a touch event or hovering event for selecting an object disposed on an application execution screen displayed on the display 151. In operation 1705, when an object related event is not received, the display control module 170 controls a function performance according to the type of an occurring event. In certain embodiments, the display control module 170 controls set function processing if there is no event occurrence.

When the first input event is received, the display control module 170 displays the display 151 related visual information on the display 153. For example, the display control module 170 generates visual information including at least part of an application execution screen of the display 151 or a modification of at least part thereof. The display control module 170 generates visual information including a specific object disposed on the display 151. The display control module 170 outputs the generated visual information at a predetermined position of the display 153. The display control module 170 adjusts at least one of the form (including size), color, brightness, and location of an application execution screen being outputted to the display 153.

In operation 1709, the display control module 170, for example, checks whether a second input event is received. For example, the display control module 170 checks whether an event for selecting an object disposed on visual information displayed on the display 153 occurs. In certain embodiments, the display control module 170 checks whether an event for selecting an object disposed on the visual information and then moving it to a predetermined position (for example, a position out of an area of the visual information) occurs. In certain embodiments, the display control module 170 checks whether an event for selecting an object on visual information and then specifying a specific area of a specific application execution screen being outputted to the display 153 occurs.

In operation 1711, when an event relating to an object disposed on visual information occurs, the display control module 170 moves or copies an object displayed on the display 151 relating to the object on the time information to a predetermined position of the display 153. For example, the display control module 170 moves or copies and displays an object of the display 151 at a point where an object on visual information is disposed on the display 153. In operation 1709, when a second input event is not received, the display control module 170 skips operation 1711. In correspondence to set schedule information or a specified time elapse, the display control module 170 changes (for example, remove, performs a transparency process, or changes into a specified form, or adjusts a transparency of the object 902) the display of visual information displayed on the display 153. According to various embodiments, the display control module 170 branches into operation 1701 or operation 1705 to support a corresponding function performance.

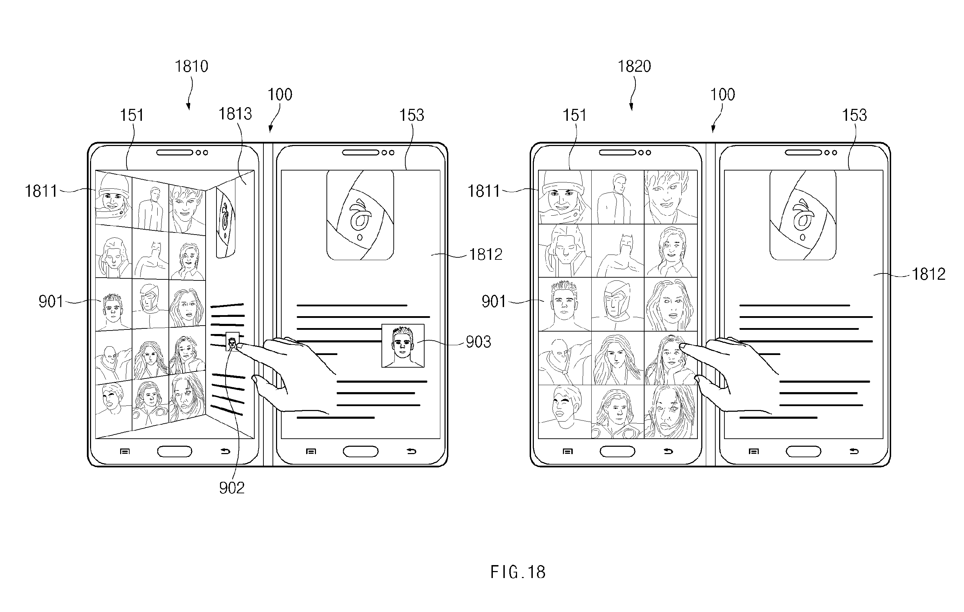

FIG. 18 illustrates a management method of a plurality of moved or copied objects according to various embodiments of the present disclosure.

Referring to FIG. 18, according to various embodiments, as shown in a state 1810, the display control module 170 outputs an application execution screen 1811 to the display 151 and outputs visual information 1813 relating to an application execution screen 1812 outputted to the display 142 in correspondence to a specified event occurrence or a specified condition satisfaction. The visual information 1813 includes a selection object 902 corresponding to an object 903 disposed on the application execution screen 1812. While the application execution screen 1811 is outputted to the display 151 in full screen, the display control module 170 outputs a screen in correspondence to a specific event occurrence as shown in a state 1810. For example, the display control module 170 receives (or obtain) the occurrence of an event (for example, a specified gesture event, a specific type touch event for selecting the object 903, or a sub menu selection event outputted to the selection of the object 903) relating to the object 903 outputted to the application execution screen 1812 of the display 153. When an object 903 related event is received (or obtained), the display control module 170 generates visual information 1813 corresponding to the application execution screen 1812. The display control module 170 outputs the visual information 1813 at one side of the display 151. The display control module 170 overlays the visual information 1813 on the application execution screen 1811 to output it.

In correspondence to an event relating to the selection object 902 disposed on the visual information 1813, the display control module 170 moves and displays the selection object 902. When the selection object 902 is out of an area of the visual information 1813, the display control module 170 displays and changes (for example, remove the object 903, performs a transparency process on the object 903, or changes the object 903 into a specified form, or adjusts a transparency of the object 903) the object 903 in the application execution screen 1812 as show in a state 1820. Additionally, the display control module 170 displays and changes (for example, removes, performs a transparency process, or changes a form into a specified form, or adjusts a transparency) the selection object 902 together with the visual information 1813.

According to various embodiments, the display control module 170 disposes the selection object 902 at one side of the application execution screen 1811. The selection object 902 is stored in relation to the application execution screen 1811. According to various embodiments, when the application execution screen 1811 is a gallery function screen, the selection object 902 is disposed at one side of the application execution screen 1811 in correspondence to a movement of the selection object 902. The display control module 170 adds the selection object 902 to a storage area where objects are stored in relation to a gallery function.

When an object relating to the selection object 902 does not exist in the application execution screen 1811, the display control module 170 newly adds the selection object 902. When an object, for example, the object 901, relating to the selection object 902 exists, the display control module 170 displays and changes (for example, removes, performs a transparency process, or changes a form into a specified form, or adjusts a transparency) the selection object 902.

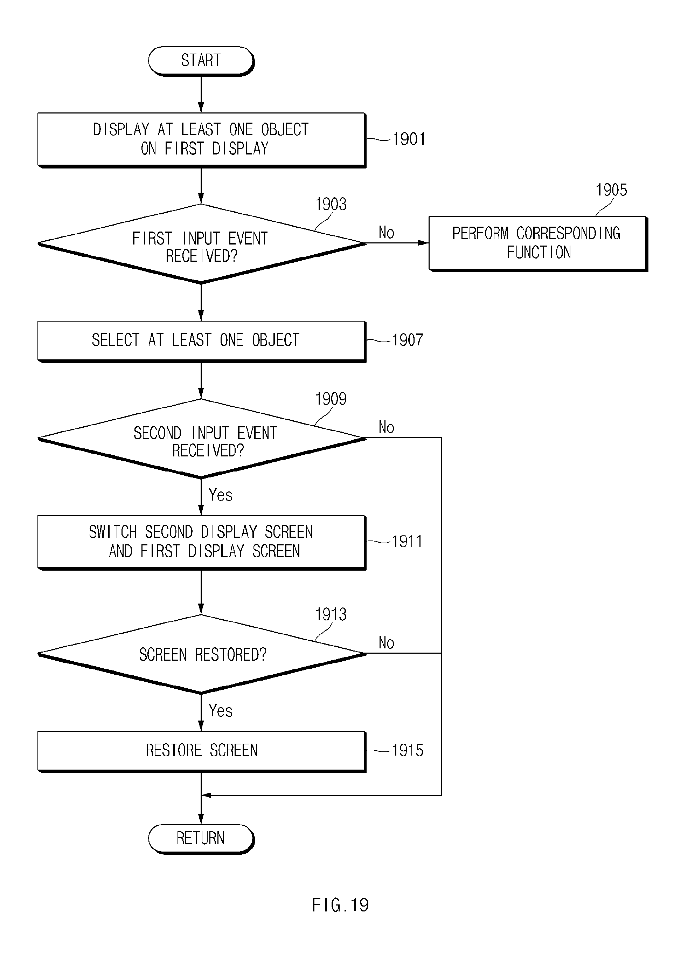

FIG. 19 illustrates a screen switching based object management method according to various embodiments of the present disclosure.

In operation 1901, an object management method according to various embodiments displays at least one object on the display 151 in correspondence to schedule information, a user input, or an external input signal reception. The display control module 170 outputs a first application execution screen including at least one object to the display 151. Additionally, the display control module 170 outputs a second application execution screen to the display 153. The second application execution screen is outputted according to an application execution set to output a screen to the display 153. In certain embodiments, it is a screen set to be outputted to the display 153 in correspondence to a user input among screens outputted to the display 151.

In operation 1903, the display control module 170 checks whether a first input event is received. The first input event is an event relating to the selection of at least one object displayed on the display 151. In operation 1905, when a first input event is received relating to an object selection, the display control module 170 controls a function performance according to an event type. For example, the display control module 170 controls the output of a screen including another object in correspondence to an event type. In certain embodiments, the display control module 170 controls a specific object related function execution in correspondence to an event type. As a specified time elapses while there is no first input event reception, the display control module 170 controls sleep state processing.

In operation 1907, when the first input event is received, the display control module 170 performs at least one object selection in correspondence to an occurring event. The display control module 170 provides a display effect corresponding to an object selection. When a plurality of object selections are performed, the display control module 170 provides a display effect corresponding to the plurality of object selections.

In operation 1909, the display control module 170 checks whether there is a second input event reception. For example, when a specific event is selected by a first input event, the display control module 170 checks whether there is a second input event reception relating to the selected object. In operation 1911, when the second input event is received, the display control module 170 switches the display 151 screen and the display 153 screen. For example, the display control module 170 switches a first application execution screen outputted to the display 151 and a second application execution screen outputted to the display 153 each other. The second application execution screen is outputted to the display 151 and the first application execution screen is outputted to the display 153. The display control module 170 maintains an object display selected during screen switching on a corresponding display, for example, the display 151. The display control module 170 displays a selection object on the second application execution screen, on the display 151.

According to various embodiments, the display control module 170 disposes a selection object at a specific position in the second application execution screen. The display control module 170 processes a selection object as input information of an application relating to the second application execution screen. In certain embodiments, the display control module 170 moves or copies and displays a selection object on the second application execution screen.

In operation 1913, the display control module 170 checks whether a screen restoration related event occurs. For example, the display control module 170 checks whether an event for outputting the first application execution screen to the display 151 and the second application execution screen to the display 153 occurs. When the screen restoration related event occurs in operation 1913, the display control module 170 controls the screen restoration in operation 1915. For example, the display control module 170 outputs the first application execution screen to the display 151 and the second application execution screen to the display 153. When a selected object is moved and displayed on the second application execution screen, the display control module 170 outputs the first application execution screen to the display 151 but outputs a screen excluding the selected object. Additionally, the display control module 170 outputs the second application execution screen to the display 153 but outputs a screen including the selected object.

In correspondence to a user input or schedule information, the display control module 170 branches to operation 1901 or operation 1905 so as to support a corresponding function performance.

As mentioned above, according to various embodiments, an object management method includes obtaining a first input event relating to a first display functionally connected to an electronic device, selecting at least one object in correspondence to the first input event, and processing a function relating to the at least one object through at least one of the first display and a second display on the basis of an second input event relating to the second display functionally connected to the electronic device.

According to various embodiments, the first input event includes at least one of a touch event for touching an object displayed on the first display and a hovering event indicating the displayed object and the second input event includes at least one of a touch event for touching at least one point in the first display and the second display, a touch event having a movement after touch, a touch event maintained for a specified time, a touch event occurring repeatedly or a plurality of times at a specified time interval, a hovering event for indicating at least one point of the first display, a hovering event having a movement after indication, a hovering event maintained for a specified time after indication, and a hovering event occurring repeatedly or a plurality of times at a specified time interval.

According to various embodiments, the processing of the function includes displaying an additional object relating to the selected object on the second display and moving or copying the selected object to the second display in correspondence to an input event reception for selecting the additional object.

According to various embodiments, the processing of the function includes outputting an application execution screen relating to the object to the second display and processing the selected object as input information of the application.

According to various embodiments, the processing of the function includes displaying at least one application item relating to the object on the second display and displays an application execution screen corresponding to the selected application item on at least one of the first display and the second display.

According to various embodiments, the method further includes overlaying the object on an application execution screen displayed on the first display to display it.

According to various embodiments, the application item includes at least one of at least one executable icon and text information defining at least one function in relation to the object.

According to various embodiments, the processing of the function includes processing (or applying or invoking) information inputted through the second display as input information of the first display.

According to various embodiments, the processing of the function includes displaying a specific object corresponding to the object on the second display in correspondence to the second input event.

According to various embodiments, the processing of the function includes at least one of displaying the specific object on the second display and changing the object display on the first display, and displaying the object on the first display and displaying the specific object on the second display.

According to various embodiments, the changing of the object includes enlarging or reducing the specific object to display it in correspondence to the second input event.

According to various embodiments, the method further includes displaying visual information relating to a plurality of second display related application executions on the second display in correspondence to the second input event reception.

According to various embodiments, the processing of the function includes displaying at least one visual information relating to the at least one second display (or an application which is executing relating to the second display) on the first display.

According to various embodiments, the processing of the function includes, when the selected object is overlaid on the visual information in correspondence to the second input event reception, processing the selected object as input information of the second display corresponding to the object overlaid visual information.

According to various embodiments, the visual information includes at least part of at least one application related screen relating to the second display.

According to various embodiments, the method further includes displaying the selected object at a screen position on the second display corresponding to the object overlaid visual information position.

According to various embodiments, the method further includes at least one of displaying a screen displayed on the first display on the second display in correspondence to at least one of the first input event and the second event and displaying a screen displayed on the second display on the first display.

According to various embodiments, the processing of the function includes outputting the object to at least one screen of the switched screens.

According to various embodiments, the method further includes switching the first display screen and the second display screen while maintaining an output state of the object when an event that the first display and the second display are hinged by a specific distance in a specific direction occurs.

According to various embodiments, the processing of the function includes outputting the object to at least one of the first display and second display outputting the switched screen.

According to various embodiments, the method further includes displaying visual information relating to at least part of screen information of the wirelessly connected second display on the first display and the processing of the function includes, when the object is overlaid on the visual information, moving and transmitting or copying and transmitting the object wirelessly to the second display.

According to various embodiments, the processing of the function includes outputting an execution screen of an application to which the object is applied as input information, on the second display where a specific application execution screen is outputted in correspondence to the second input event.

According to various embodiments, the method further includes displaying on the first display a plurality of visual information relating to an application execution screen outputted to the plurality of second displays and the processing of the function includes, when the selected object is overlaid on at least one of the plurality of visual information, processing the object as input information of an application corresponding to the object overlaid visual information.

According to various embodiments, the processing of the function includes differently processing at least one of the form and execution function of a specified object in correspondence to at least one of the number of touch or hovering points corresponding to the second input event, a touch surface form or a hovering form, the occurrence order or position of a plurality of touches or hoverings, a pattern corresponding to a time interval or hold time of a plurality of touches or hoverings, and a gesture corresponding to a touch or hovering trajectory.

According to various embodiments, the processing of the function includes differently processing at least one of the number or output positions of selection objects relating to the object and the execution determination or form of a function relating to the object.

According to various embodiments, the processing of the function includes differently displaying at least one function item or at least application item to be executed in relation to the object in correspondence to the type of the second input event.

According to various embodiments, the processing of the function further includes displaying the function item or the application item on at least one of the first display and the second display.

According to various embodiments, the processing of the function includes checking the type of the gesture and executing an application corresponding to the gesture type.

According to various embodiments, the processing of the function further includes processing the object as input information of an application executed according to the gesture type.

According to various embodiments, the processing of the function includes at least one of checking a gesture type of the second input event and executing an application corresponding to the gesture type, and outputting a screen for inputting a touch gesture (for example, a virtual panel, virtual layer, or virtual note pad relating to a touch input) relating to the second input event reception to at least one of the first display and the second display and performing the object processing corresponding to the gesture type.

According to various embodiments, the processing of the function includes, when the first input event is released after the checking of the gesture type, returning to the screen for inputting a touch gesture state.

According to various embodiments, the processing of the function includes outputting to the first display a reference screen corresponding to an application execution screen outputted to the second display in correspondence to the second input event and, when the object is disposed on the reference screen, processing the object as input information of an application relating to the second display in correspondence to the object position in the reference screen.

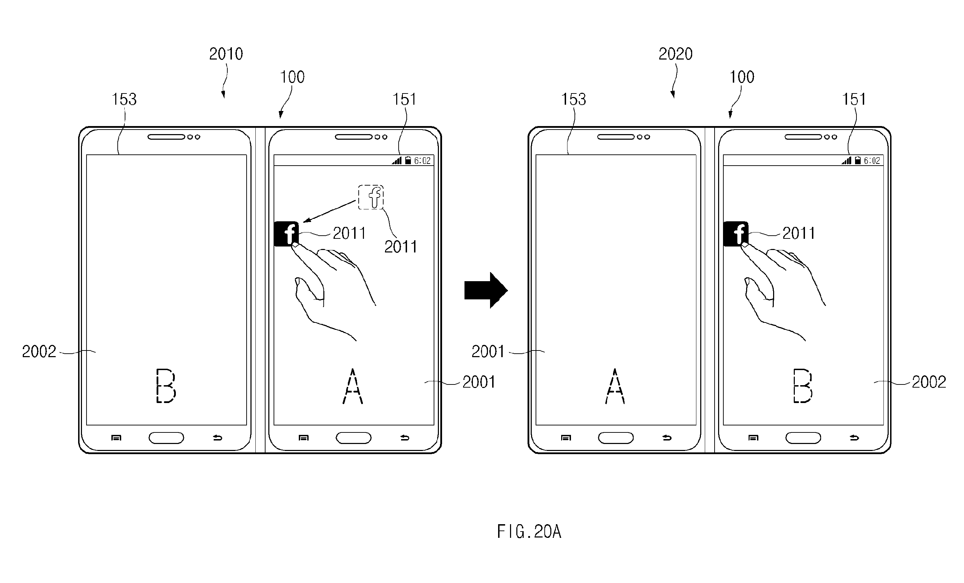

FIG. 20a illustrates an object position based management according to various embodiments of the present disclosure.

Referring to FIG. 20a, according to various embodiments, as shown in a state 2010, the display control module 170 outputs at least one application execution screen 2001 to the display 151. For example, an object 2011 is disposed at a predetermined position in the application execution screen 2001. According to various embodiments, the display control module 170 outputs an application execution screen 2002 to the display 153.

The display control module 170 selects the object 2011 in correspondence to an event occurrence. Additionally, the display control module 170 moves and displays the object 2011 on the application execution screen 2001 in correspondence to an event occurrence. According to various embodiments, the display control module 170 selects the object 2011 in correspondence to a touch event for selecting the object 2011 and moves the object 2011 to a specific position of the application execution screen 2001 and displays it in correspondence to a drag event.

When the object 2011 is disposed at a specific position of the application execution screen 2001, for example, the edge of the display 151, the display control module 170 changes the display positions of the application execution screen 2001 and the application execution screen 2002 as show in a state 2020. For example, the display control module 170 outputs the application execution screen 2001 to the display 153 and the application execution screen 2002 to the display 151. The display control module 170 displays the object 2011 at the edge of the display 151. The object 2011 is disposed at a predetermined position of the application execution screen 2002. When an event for selecting the object 2011 is released, the display control module 170 disposes the object 2011 at a predetermined position of the application execution screen 2002. In addition, the display control module 170 stores the object 2011 in relation to the application execution screen 2002. According to various embodiments, when the application execution screen 2002 is outputted to a display, it is outputted as a screen in which the object 2011 is disposed at a predetermined position.

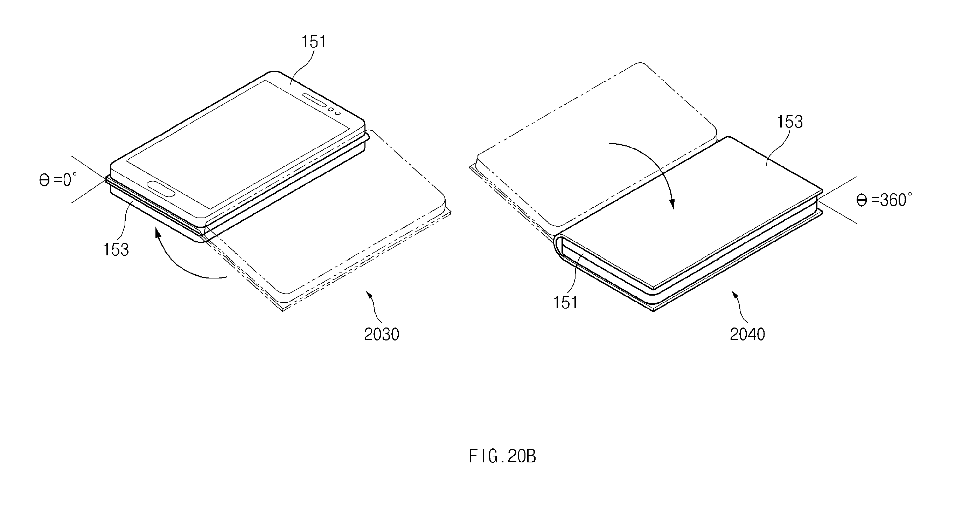

FIG. 20b illustrates a rotation based object management according to various embodiments of the present disclosure.

Referring to FIG. 20b, according to various embodiments, the display control module 170 controls the switching of the application execution screen 2001 and the application execution screen 2002 in correspondence to a rotation movement of the electronic device 100. For example, as shown in a state 2030, the display control module 170 checks the case that the display 153 rotates at more than a predetermined angle by using the display 151 as an axis (for example, when the display 151 and the display 153 overlap each other) or is disposed at a predetermined angle. When a rotation or angle arrangement state is detected, the display control module 170 switches an application execution screen displayed on the display 151 and an application execution screen displayed on the display 153 each other. In certain embodiments, as shown in a state 2040, when the display 151 rotates at more than a predetermined angle by using the display 153 as an axis, the display control module 170 switches an application execution screen displayed on the display 153 and an application execution screen displayed on the display 151 each other. The display control module 170 maintains a display state of an object displayed on the display 151. In certain embodiments, the display control module 170 maintains a display state of an object displayed on the display 153. Accordingly, when the screen switching is performed, an object maintaining a display state is disposed in a predetermined area of another application execution screen. According to various embodiments, the display control module 170 processes an object (or an object selected before screen switching or a selection maintained object) of which display is maintained during a screen switching process as input information of an application corresponding to a switched screen.

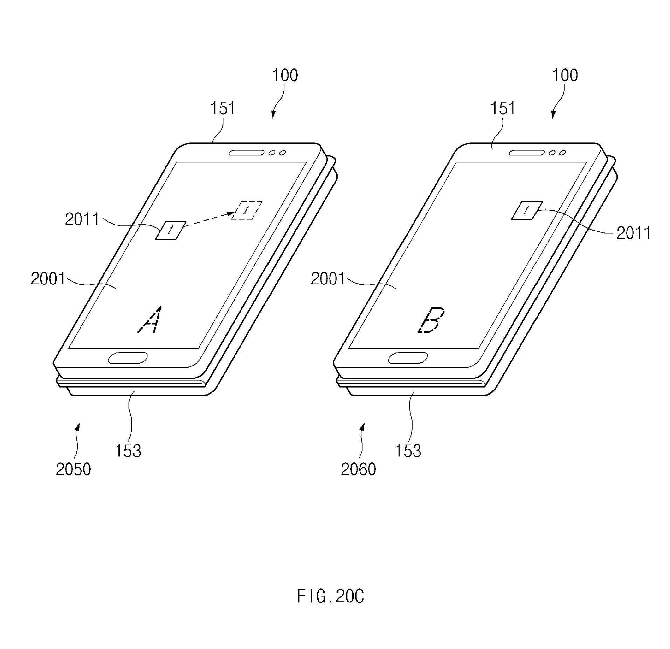

FIG. 20c illustrates an object management in a rotated state according to various embodiments of the present disclosure.

Referring to FIG. 20c, according to various embodiments, as shown in a state 2050, the display 151 and the display 153 is disposed in a state of being rotated at a predetermined angle (for example, a state in which the back of the display 151 and the back of the display 153 face each other). In certain embodiments, the display control module 170 controls the output of an application execution screen 2001 and an application execution screen 2002 in correspondence to schedule information, a user input, or sensor information. For example, when the display 151 is disposed facing the front, as shown in the state 2050, the display control module 170 outputs an object 2011 on the application execution screen 2001. According to various embodiments, when the display 153 is disposed facing the rear, as shown in the state 2050, the display control module 170 processes the application execution screen 2002 not to be outputted to the display 153. For example, the display control module 170 stops supplying power to the display 153. Additionally, the control module 1700 deactivates a touch function of the display 153 or invalidates an occurred touch event. The display control module 170 processes the execution of an application relating to the application execution screen 2002 through background processing.

According to various embodiments, in relation to the electronic device 100, while the rear of the display device 151 and the rear of the display device 153 face each other, the display 153 is disposed to face the front and the display 151 is disposed to face the rear. When the electronic device 100 is in the above state, the display control module 170 activates the display 153 and output the application execution screen 2002. The display control module 170 limits the output of the application execution screen 2001 relating to the display 151 or stops supplying power to the display 151. The display control module 170 processes the execution of an application relating to the application execution screen 2001 through background processing. According to various embodiments, when the display 151 and the display 153 are disposed at a specified hinge angle as shown in FIG. 20a, the display control module 170 outputs the application execution screen 2001 and the application execution screen 2002 simultaneously.

According to various embodiments, when the object 2011 is moved to a specified position of the display 151 as shown in the state 2050 (for example, maintain a disposed state for a specified time in a predetermined area of the edge of the display 151), the display control module 170 switches the application execution screen 2002 outputted to or to be outputted to the display 153 and the application execution screen 2001 outputted to the display 151. As shown in the state 2060, the display control module 170 outputs the application execution screen 2002 to the display 151. The display control module 170 disposes the object 2011 on the application execution screen 2002 by maintaining an output state of the object 2011. According to various embodiments, the object 2011 is processed as input information of an application relating to the application execution screen 2002. For example, the display control module 170 detects a touch event release, specified touch event, or specific input event occurrence relating to the object 2011. When the event occurs, the display control module 170 processes the object 2011 as input information of an application relating to the application execution screen 2002. According to various embodiments, the application execution screen 2002 is outputted to the display 153 or output of at least part of the application execution screen 2002 is limited as described above.

According to various embodiments, after an application execution screen is switched, when the object 2011 is moved to a specified position of the display 151 (for example, an edge in an opposite direction to the currently disposed position or a specified position), the display control module 170 re-executes the switching of the application execution screen. For example, when the object 2011 is moved to a predetermined area of the left edge of the display 151, the display control module 170 outputs the application execution screen 2001 to the display 151.

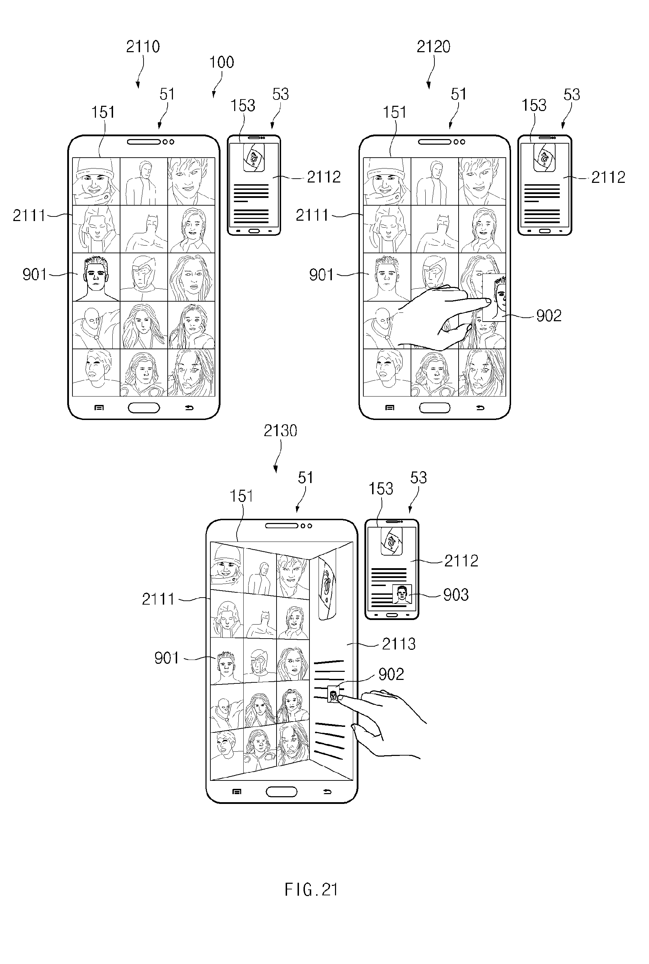

FIG. 21 illustrates an object management between electronic devices according to various embodiments of the present disclosure.

Referring to FIG. 21, an electronic device 100 includes a display device 51 and a display device 53. The display device 51 and the display device 53 establish a short range communication channel. According to various embodiments, the display device 51 and the display device 53 are prepared in a physically insolated form. The display control module 170 is disposed in the display device 51. The display device 53 is a wearable device communicable with the display device 51, or the display device 53 is a portable electronic device communicable with the display device 51.

As shown in a state 2110, the display control module 170 outputs an application execution screen 2111 to the display 151 disposed at the display device 51. The display control module 170 executes a specific application in correspondence to schedule information or a user input and output a screen relating to an executed application to the display 151. The display device 53 outputs an application execution screen 2112 to the display 153. The application execution screen 2112 is outputted in correspondence to the execution of an application stored or installed in the display device 53. In certain embodiments, the application execution screen 2112 is received from the display device 51 and outputted. When an event relating to a specific application execution occurs, the display control module 170 performs a corresponding application execution. The display control module 170 transmits screen information of an application in execution to the display device 53. In relation to a screen information transmission, the display control module 170 establishes a communication channel with the display device 53 on the basis of at least one of wired and wireless methods.

In correspondence to an event occurring on the display 151, the display control module 170 select a specific object, for example, the object 901. Additionally, the display control module 170 controls a movement display of the object 901 in correspondence to an event occurrence. In certain embodiments, the display control module 170 outputs a selection object 902 corresponding to the object 901 and controls the movement of the outputted selection object 902. According to various embodiments, as shown in a state 2120, the display control module 170 moves and displays the selection object 902 corresponding to the object 901 at a specific position of the display 151, for example, the edge of the display 151.

When the selection object 902 is disposed at a specified position, as shown in a state 2130, the display control module 170 outputs visual information 2113 relating to the application execution screen 2112 outputted to the display device 53, on the display 151. When the selection object 902 is disposed at a specified position, the display control module 170 performs a visual information 2113 request from the display device 53. In certain embodiments, the display control module 170 obtains screen information of the application execution screen 2112 being outputted to the display device 53. The display control module 170 generates visual information 2113 on the basis of the obtained screen information. The display control module 170 outputs the visual information 2113 to the display 151. The display control module 170 changes a size or scale, or form of the application execution screen 2111 to obtain a predetermined space and outputs the visual information 2113 to the obtained space. In certain embodiments, the display control module 170 overlays at least part of the visual information 2113 on the application execution screen 2111 to display it.

According to various embodiments, when the selection object 902 is disposed on the visual information 2113, the display control module 170 performs a selection object 902 copy. The display control module 170 transmits the selection object 902 disposed on the visual information 2113 to the display device 53. The display device 53 outputs the object 903 corresponding to the selection object 902 that the display device 51 transmits to a predetermined position. When an event relating to the selection object 902 is released, the display control module 170 transmits object related information relating to the selection object 902 to the display device 53. The display device 53 stores object related information relating to the object 903. When an event relating to the object 903 occurs, the display device 53 supports the execution of a function relating to the object 903. For, example, when the object 903 is a document file, the display device 53 outputs a corresponding document execution screen to the display 153. According to various embodiments, when the position of the selection object 902 is changed on the visual information 2113, the display device 53 receives information on a position change of the selection object 902 from the display device 51. The display control module 170 controls a position change of the object 903 on the basis of the received position change related information. According to various embodiments, the display device 53 receives at least one change information of the form, color, and brightness of the selection object 902. In certain embodiments, the display device 53 changes at least one of the form, color, and brightness of the selection object 903 in correspondence to the change information of the selection object 902.

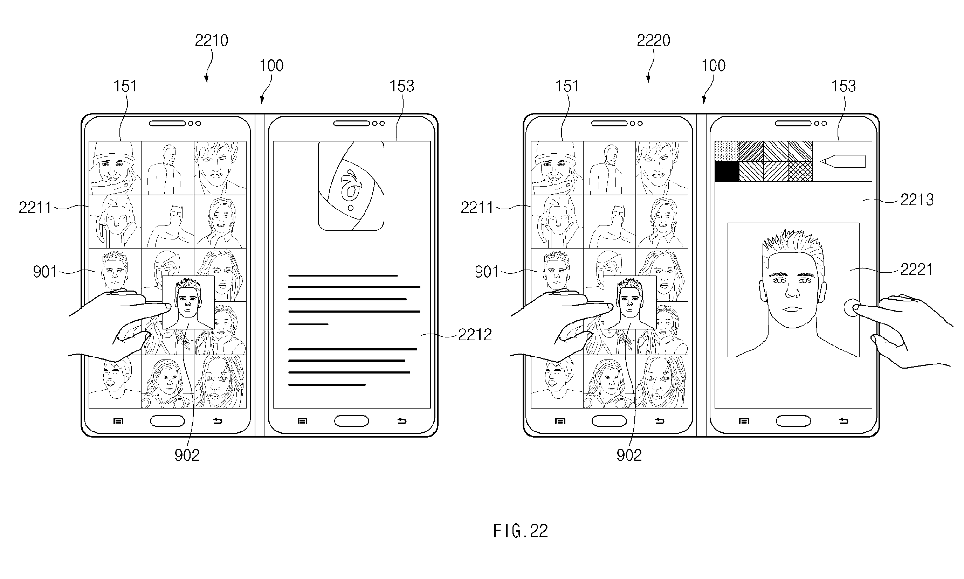

FIG. 22 illustrates a selection object related application execution management according to various embodiments of the present disclosure.

Referring to FIG. 22, according to various embodiments, as shown in a state 2210, the display control module 170 outputs an application execution screen 2211 to the display 151 in correspondence to a first application execution. The application execution screen 2211, for example, includes an object 901. When the object 901 is selected, the display control module 170 displays a selection object 902 corresponding to the object 901. The selection object 902 is a copy of the object 901. In certain embodiments, the selection object 902 is an object specified in relation to the object 901. The display control module 170 moves and displays the selection object 902 in correspondence to an event occurrence. The display control module 170 outputs an application execution screen 2212 according to a second application execution in correspondence to schedule information or a user input.

According to various embodiments, when an event 2221 relating to the selection object 902 occurs, as shown in a state 2220, the display control module 170 executes a specific function relating to the selection object 902. For example, when the selection object 902 is an image object, the display control module 170 activates an image editing function. The display control module 170 outputs an application execution screen 2213 corresponding to the activated image editing function to the display 153. According to various embodiments, when an event (for example, a touch event indicating the selection object 902) relating to the selection object 902 is maintained, the display control module 170 detects the occurrence of a specific event (for example, an event for touching a predetermined point of the display 153) from the display 153. When a specific event is detected, the display control module 170 controls a function execution relating to the selection object 902. Then, the display control module 170 outputs an application execution screen 2213 corresponding to the executed function to the display 153. When an event relating to the selection object 902 is released, the display control module 170 displays and changes (for example, remove, perform transparency processing, or change a form into a specified form, or adjust a transparency) the application execution screen 2213 being outputted to the display 153 and output the application execution screen 2212. In certain embodiments, even when the selection object 902 related event is released, the display control module 170 maintains the output of the application execution screen 2213.

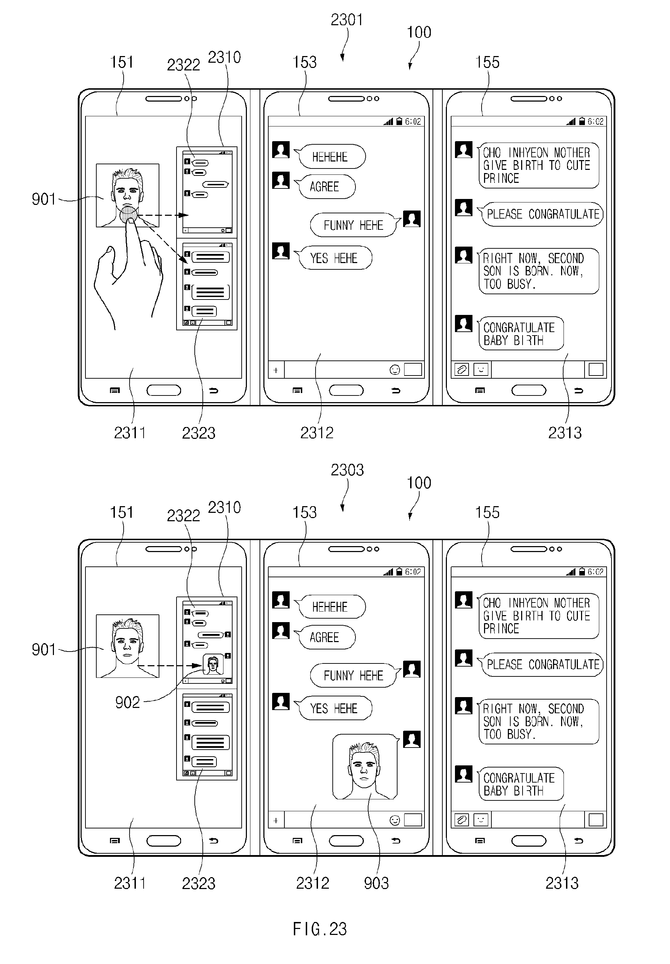

FIG. 23 illustrates an object management of a plurality of displays according to various embodiments of the present disclosure.

Referring to FIG. 23, an electronic device 100 includes a display 151, a display 153, and a display 155. As shown in a state 2301, the display control module 170 outputs an application execution screen 2311 corresponding to a first application execution to the display 151. The display control module 170 outputs an application execution screen 2312 corresponding to a second application execution to the display 153. The display control module 170 outputs an application execution screen 2313 corresponding to a third application execution to the display 155.

The application execution screen 2311 is a screen including an object 901. The display control module 170 selects the object 901 in correspondence to an event occurrence. When the object 901 is selected, the display control module 170 outputs visual information relating to the display 153 and the display 155 to a visual information area 2310. For example, the display control module 170 outputs visual information 2322 corresponding to the application execution screen 2312 and visual information 2323 corresponding to the application execution screen 2323 to the display 151. When there is no additional application execution screen display in a specific display, for example, the display 155, the display control module 170 omits the visual information display relating to the display 155.

The display control module 170 disposes the object 901 to be overlaid on at least one of the visual information 2322 and the visual information 2323. The display control module 170 obtains an application execution screen 2312 or an application execution screen 2313. The display control module 170 generates visual information from the obtained screens. The display control module 170 obtains an application execution screen displayed on the uppermost layer of the display 153 and an application execution screen displayed on the uppermost layer of the display 155. According to various embodiments, when a plurality of application execution screens is disposed on the display 153, the display control module 170 generates visual information corresponding to a plurality of application execution screens. The display control module 170 outputs the generated visual information to the display 151. The display control module 170 displays an application execution screen corresponding to visual information where the object 901 overlaps on the uppermost layer of a corresponding display.

According to various embodiments, as shown in a state 2303, in correspondence to the occurrence of an event (for example, an event for disposing the object 901 to overlap the visual information 2322), the display control module 170 processes the object 901 as input information of the application execution screen 2312. According to various embodiments, the object 901 is applied as an upload image of a chatting application outputted to the display 153. The electronic device 100 transmits the object 901 to an external electronic device connected by a chatting application.

According to various embodiments, the display control module 170 processes the object 901 as input information of the application execution screen 2313 in correspondence to an event occurrence. After moving the object 901 to be disposed on specific visual information, when a specific event (for example, an object 901 touch release event) is received, the display control module 170 controls the move and display or copy and display of the object 901.

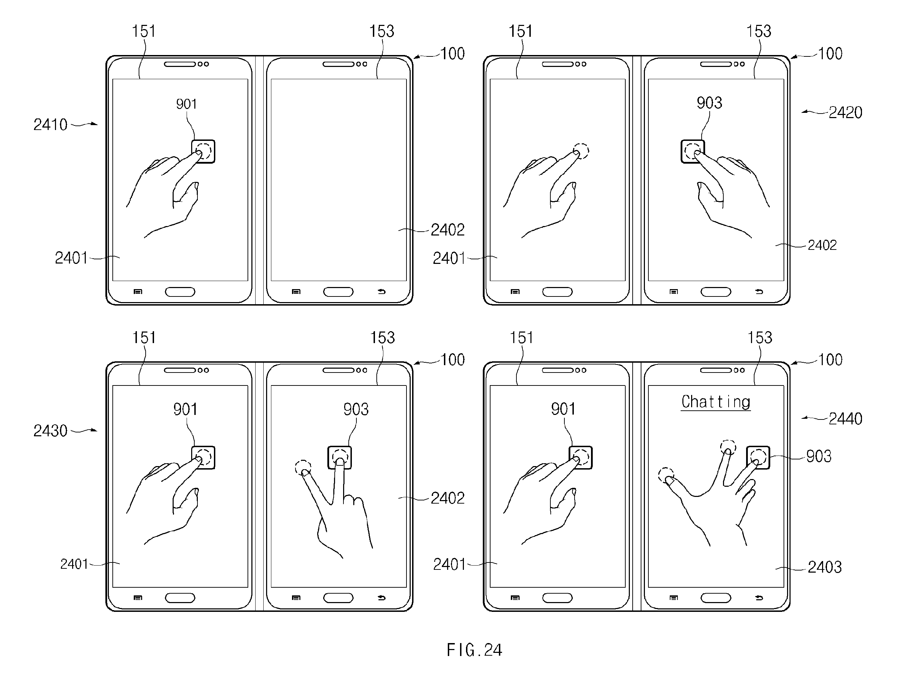

FIG. 24 illustrates a touch number based object management according to various embodiments of the present disclosure.

Referring to FIG. 24, an electronic device 100 includes a display 151 and a display 153. As shown in a state 2410, the display control module 170 outputs an application execution screen 2401 corresponding to a first application execution to the display 151. The display control module 170 outputs an application execution screen 2402 corresponding to a second application execution to the display 153. The application execution screen 2401 is a screen including an object 901. The display control module 170 selects the object 901 in correspondence to an event occurrence. When the object 901 is selected, the display control module 170 outputs a display effect corresponding to the object selection. For example, the display control module 170 provides a highlight display to the object 901.

According to various embodiments, when there is a history of selecting the object 901 or an input event relating to the display 153 occurs while maintaining a selected state, the display control module 170 controls various processing relating to the object 901 in correspondence to the input event. For example, as shown in a state 2420, the display control module 170 moves the object 901 from the display 151 to the display 153. The display control module 170 outputs a selection object 903 to an occurrence point (for example, a touch spot or a touch point) of an input event occurring from the display 153 or an area adjacent to the occurrence point. The selection object 903 is an object having the same image as the object 901 or includes information (for example, at least one of a text relating to the object 901 and a specified image) corresponding to the object 901. According to various embodiments, the selection object 903 includes the same form as the object 901 but have a different color. According to various embodiments, the selection object 903 includes the same size as the object 901 but have a different content (for example, a drawn image or text in a predetermined size).

According to various embodiments, as shown in a state 2430, the display control module 170 copies the object 901 to the display 153 in correspondence to the characteristic of an input event. For example, the display control module 170 outputs a selection object 901 obtained by copying the object 901 to the display 153 in correspondence to a multi touch event occurring from the display 153. The display control module 170 outputs the selection object 903 to at least one point of multi touch points. According to various embodiments, when a multi touch event including two touch points occurs, the display control module 170 outputs two selection objects 903 to the display 153. In certain embodiments, when a multi touch event including three touch points occurs, the display control module 170 outputs three selection objects 903 to the display 153. According to various embodiments, the display control module 170 outputs the selection object 903 to a touch point that occurs relatively later among the multi touch points. In certain embodiments, the display control module 170 outputs the selection object 903 to a touch point that occurs relatively earlier among the multi touch points. In certain embodiments, the display control module 170 copies the selection object 903 to a predetermined area (for example, a specified position of the display 153) specified in correspondence to the multi touch event. When the multi touch event is released, the selection object 903 is disposed in a predetermined area of the display 153.

According to various embodiments, as shown in a state 2440, the display control module 170 controls an object 901 and copies a related function execution. For example, when a specified multi touch event (for example, a multi touch event including touch points of more than a predetermined number or a multi touch event including a touch point of a predetermined form) is received, the display control module 170 copies the object 901 to a predetermined area. The display control module 170 outputs a selection object relating to the object 901 copy to the display 153 in relation to at least one of the multi touch points.

According to various embodiments, when the multi touch event is a specified event, as shown in a state 2440, the display control module 170 executes an object 901 related function and outputs a corresponding application execution screen 2403 to the display 153. For example, the display control module 170 activates a chatting application relating to the object 901 to output a chatting application execution screen 2403 to the display 153. The executed application is an application specified in relation to the object 901. The display control module 170 provides a setting function for setting an object 901 related application. According to various embodiments, the display control module 170 displays (on at least one of the display 151 and the display 153) at least one application item relating to the object 901. The display control module 170 executes a specific application in correspondence to an application item selection. When the application execution screen 2403 is outputted to the display 153, the display control module 170 processes the copied selection object 903 as input information of an application relating to the application execution screen 2403. According to various embodiments, the display control module 170 processes the selection object 903 as user input information of a chatting application to transmit it to an external electronic device. According to various embodiments, the display control module 170 executes an image editing function through an object 901 related application. The display control module 170 output the selection object 903 as an image for image editing. The display control module 170 changes the size of the selection object 903 (for example, display it on the display 153 with a specified size). When a specified multi touch event occurs, the display control module 170 controls an object 901 and copies an object 901 related function execution. When the multi touch event is released, the display control module 170 controls application processing of the selection object 903. In certain embodiments, when the multi touch event changes into a specified event (for example, an event for changing the number or positions of touch points, the display control module 170 terminates a related application execution or cancel an object 901 copy state.

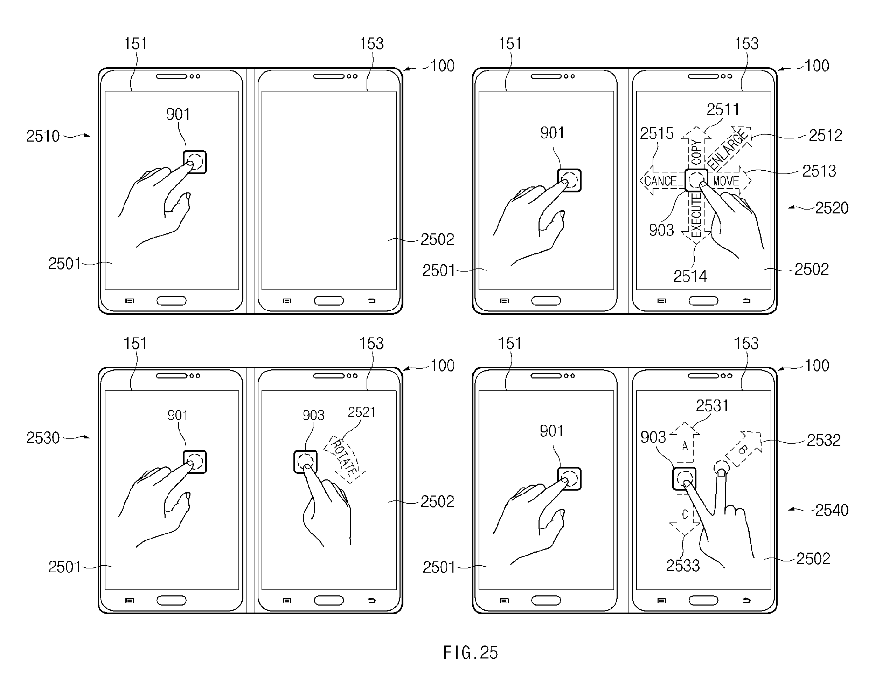

FIG. 25 illustrates a touch direction based object management according to various embodiments of the present disclosure.

Referring to FIG. 25, an electronic device 100 includes a plurality of displays (for example, a display 151 and a display 153). The display 151 includes a state in which at least one object 901 is disposed as shown in a state 2510. The display control module 170 outputs an application execution screen 2501 corresponding to a first application execution to the display 151. The display control module 170 outputs an application execution screen 2502 corresponding to a second application execution to the display 153. The display control module 170 selects the object 901 in correspondence to an event occurrence. When a specified event occurs in a state of having a history that the object 901 is selected or a state of maintaining a selection, the display control module 170 provides function processing relating to the object 901 and the event.

According to various embodiments, as shown in a state 2520, when an event for selecting the object 901 from the display 151 occurs, a specified event (for example, a holding event for touching or hovering the same or similar point for more than a specified time and a multi tap event for touching or hovering the same or similar point more than a predetermined number) occurs on the display 153. In certain embodiments, the display control module 170 outputs at least one of object processing items 2511, 2512, 2513, 2514, and 2515 to a point where an event occurs or an area adjacent to the point. For example, the display control module 170 outputs a copy item 1511, an enlarge item 2512, a move item 2513, an execute item 2514, or a cancel item 2515. Each of the object processing items 2511, 2512, 2513, 2514, and 2515 is outputted in a form indicating a predetermined directivity. When the selection object 903 is moved to a direction in which a specific item is displayed or a touch event indicating the selection object 903 is moved to a direction in which a specific item is displayed, the display control module 170 executes a corresponding function. For example, when a touch event occurs in a cancel item 2515 direction indicating the left direction, the display control module 170 cancels a copy state of the copied selection object 903. In certain embodiments, when an event (for example, a touch drag or flick event) occurs in an execute item 2514 direction indicating the bottom direction, the display control module 170 executes a function relating to the selection object 903. In certain embodiments, the display control module 170 outputs at least one function item relating to the selection object 903. The display control module 170 executes an application corresponding to a selected function item among function items. According to various embodiments, when a touch event occurs in an enlarge item 2512 direction indicating a diagonal direction, the display control module 170 adjusts the enlargement size of the selection object 903 in correspondence to the size (for example, a touch drag distance) of the touch event. For example, the display control module 170 enlarges the size of the selection object 903 as a touch drag distance becomes longer. When a drag distance of more than a predetermined size or a specified touch event (for example, a flick event of more than a predetermined speed) occurs, the display control module 170 outputs the selection object 903 to the display 153 in full screen.

According to various embodiments, as shown in a state 2530, a specified event (for example, a holding event, a multi tap event, and a touch or hovering event for indicating a specified position of the display 153) occurs from the display 153. In certain embodiments, the display control module 170 outputs at least one object change item 2521 to a point where an event occurs or an area adjacent to the point. The object change item 2521, for example, is an item for rotating and displaying the object 901 or the selection object 903. When the object change item 2521 is selected, the display control module 170 displays (separate the object 901 or the selection object 903 and the background screen by each layer or display an index indicating a rotation available state on the object 901 or the selection object 903) the selection object 903 or the object 901 in a rotation available state. When an event (for example, a touch or hovering event having a predetermined directivity) occurs, the display control module 170 rotates and displays at least one of the object 901 and the selection object 903 in a corresponding direction. The rotation angle corresponds to the size of an event. According to various embodiments, the display control module 170 enlarges and displays the size of the object 901 or the selection object 903 in correspondence to that the rotating size is increased simultaneously with the rotation.

According to various embodiments, as shown in a state 2540, a specified event (for example, a multi touch event according to a touch or hovering relating to a plurality of points) occurs from the display 153. In certain embodiments, the display control module 170 outputs at least one of the application items 2531, 2532, and 2533 to a point where an event occurs or an area adjacent to the point. The application items 2531, 2532, and 2533, for example, are a plurality of application items relating to the object 901 or the selection object 903. For example, the application item 2531 is a chatting application item relating to the object 901 or the selection object 903. The application item 2532 is an image editing or file editing item relating to the object 901 or the selection object 903. The application item 2533 is a file transfer item relating to the object 901 or the selection object 903. The application items 2531, 2532, and 2533 are disposed at one point among multi touch points. For example, the application item 2531 and the application item 2532 are disposed adjacent to a first touch point (for example, a point where an event occurs by an index finger on the basis of the shown drawing). The application item 2533 is disposed adjacent to a second touch point (for example, a point where an event occurs by a middle finger on the basis of the shown drawing). When an event for selecting a specific function item occurs additionally (for example, a function item selection by touch drag or hovering drag, a function item selection by an additional touch object, or a function item selection within a predetermined time after an event relating to the selection object 903 is released), the display control module 170 executes a corresponding function item. When a predetermined time elapses after an event relating to the selection object 903 is released, the display control module 170 cancels the displays of the application items 2531, 2532, and 2533. The display control module 170 cancels a copy state of the selection object 903. In certain embodiments, the display control module 170 maintains a copy state of the selection object 903.

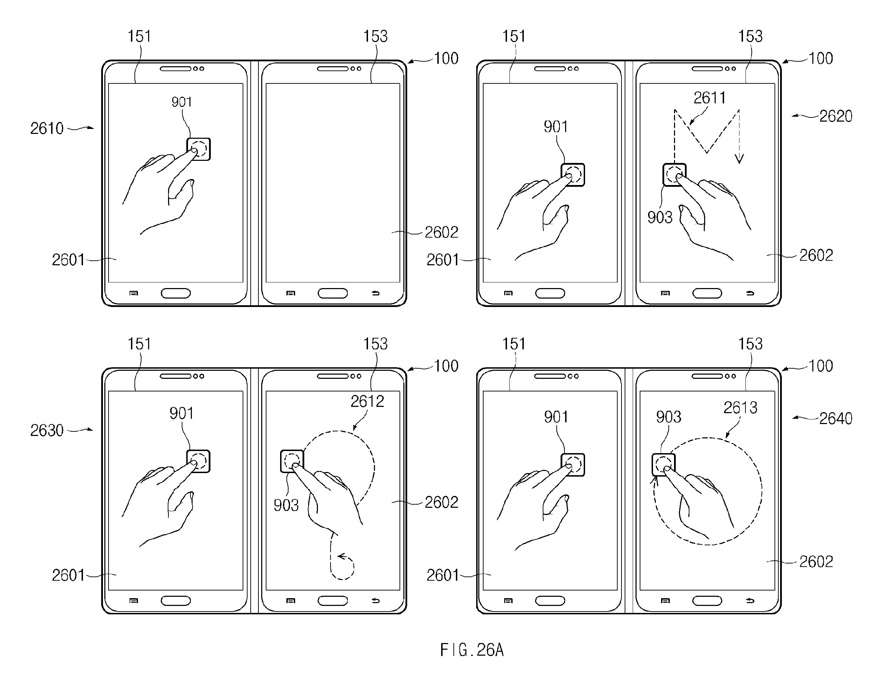

FIG. 26a illustrates a touch gesture based object management according to various embodiments of the present disclosure.

Referring to FIG. 26a, an electronic device 100 includes a plurality of displays (for example, a display 151 and a display 153). The display 151 includes a state in which at least one object 901 is disposed as shown in a state 2610. The display control module 170 outputs an application execution screen 2601 corresponding to a first application execution to the display 151. For example, the application execution screen 2601 is a gallery application execution screen, a file search screen, and a webpage reception screen. The display control module 170 outputs an application execution screen 2602 corresponding to a second application execution to the display 153. For example, the application execution screen 2602 is a standby screen, an idle screen, a home screen, a file editing screen, a communication service (for example, chatting service, message service, and e-mail service) screen, and a phonebook screen. The display control module 170 selects the object 901 in correspondence to an event occurrence. When a specified event occurs in a state of having a history that the object 901 is selected or a state of maintaining a selection, the display control module 170 provides function processing relating to the object 901 and the gesture event.

According to various embodiments, as shown in a state 2620, when a specified event occurs on the display 153 when the object 901 is selected, the display control module 170 displays a selection object 903 on the display 153. When a gesture event 2611 relating to the selection object 903 occurs, the display control module 170 performs a function execution corresponding to the gesture event 2611. According to various embodiments, the display control module 170 activates an e-mail function in relation to the selection object 903 and the gesture event 2611. The display control module 170 changes the application execution screen 2602 into an e-mail function application execution screen. According to various embodiments, the display control module 170 processes the selection object 903 as input information of an e-mail function application. For example, the display control module 170 disposes the selection object 903 as e-mail content or process it as an attachment file.

According to various embodiments, when an event (for example, a touch release event) relating to the object 901 occurs while maintaining the gesture event 2611 relating to the selection object (for example, maintaining a touch down), the display control module 170 stops a function execution relating to the gesture event 2611. When an event (for example, a touch release after a touch gesture input) completing the gesture event 2611 occurs, the display control module 170 controls a function execution relating to the object 903 and the gesture event 2611.

According to various embodiments, the display control module 170 receives a gesture event 2612 in relation to the selection object 903 as shown in a state 2630. The display control module 170 executes a search function in relation to the gesture event 2612. The display control module 170 extracts object information of the selection object 903 as a keyword. The display control module 170 processes the extracted keyword related information search by using a storage unit of the electronic device 100 or a web server device. The object information includes at least one of the file name of the selection object 903, a position where a file is stored, tagging information registered in a file, a file size, and file creation related information (for example, a file type, file extension information, file creation related electronic device (for example, a camera) information, a file creation time, or a file storage time). When a function according to the gesture event 2612 is executed, the display control module 170 outputs a corresponding execution screen to at least one of the display 151 and the display 153. the display control module 170 changes (for example, remove the object 903, perform a transparency process on the object 903, or change the object 903 into a specified form, or adjust a transparency of the object 903) the display of the selection object 903.

According to various embodiments, the display control module 170 receives a gesture event 2613 in relation to the selection object 903 as shown in a state 2640. The display control module 170 controls a gesture event 2613 related function execution. For example, the display control module 170 automatically executes a file transfer function (for example, automatically transfer a file to a specified external device) in correspondence to the gesture event 2613. In certain embodiments, the display control module 170 outputs a file transfer method list in correspondence to the gesture event 2613. When a specific item is selected, the display control module 170 activates a communication module relating to a corresponding file transfer. The display control module 170 transmits the selection object 903 to a specified external device or executes an external device search function on the basis of the activated communication module.

According to various embodiments, a plurality of objects or a group such as a folder including a plurality of objects is selected from the display 151. When a specified gesture event occurs, the display control module 170 performs function processing on a plurality of objects. According to various embodiments, in correspondence to an event occurrence, the display control module 170 outputs to the display 153 a specified selection object (for example, a plurality of selection objects respectively corresponding to objects or a selection object of one specific image form representing a plurality of objects) corresponding to a plurality of objects. When the gesture event 2611 occurs, the display control module 170 processes a plurality of objects as attachment files of an e-mail. In certain embodiments, when a gesture event 2612 occurs, the display control module 2612 extracts a common keyword of a plurality of objects and collects and outputs search information on a corresponding common keyword. In certain embodiments, when a gesture event 2613 occurs, the display control module 170 transmits a plurality of objects to an external device.

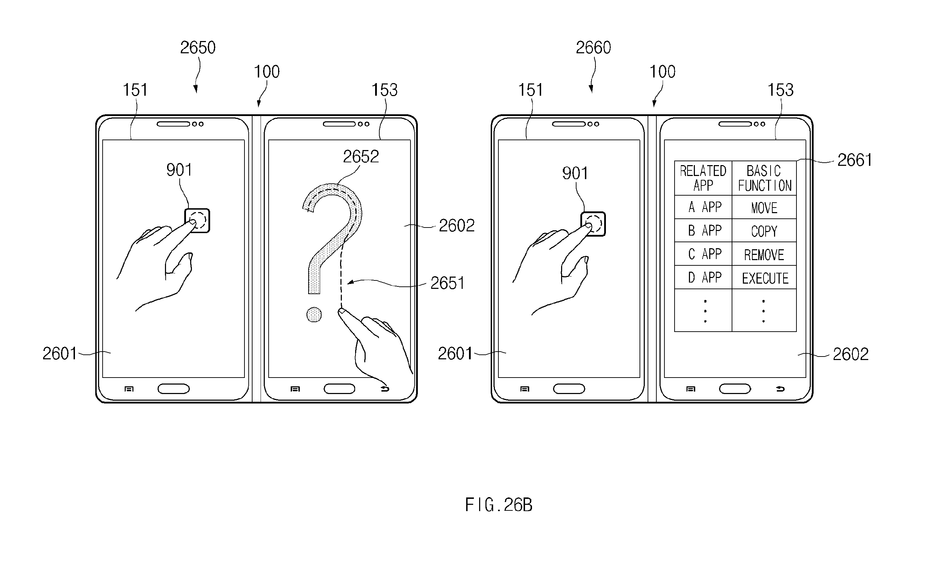

FIG. 26b illustrates a touch gesture based guide management according to various embodiments of the present disclosure.

Referring to FIG. 26b, according to various embodiments, the display control module 170 receives a gesture event 2651 in relation to an object 901 as shown in a state 2650. According to various embodiments, when a specified object 901 is displayed on an application execution screen 2601, the display control module 170 processes the display 153 as a state receiving a touch gesture input. According to various embodiments, when an input event relating to the object 901 occurs while the object 901 is displayed on the display 151, the display control module 170 processes the display 153 as a touch gesture input standby state. For example, the display 153 is in a turn-off state in relation to a touch gesture input standby state. In certain embodiments, the display control module 170 maintains a display panel in a turn-off state and allows a touch panel to be in a turn-on state. In certain embodiments, the display control module 170 outputs a specified screen (for example, a memory screen, a text input screen, and an image input screen) for receiving a touch input in relation to a touch gesture input standby state to a display panel and process a touch panel as in a turn-on state. According to various embodiments, when a specific application execution screen is outputted to the display 153, the display control module 170 performs a processing to output a screen for inputting a touch gesture 2602 relating to the state. The screen 2602 is outputted on an application execution screen of the display 153 as a virtual layer (for example, a quick panel-transparent layer or an opaque layer). While the screen 2602 is outputted, a corresponding application relating to an application execution screen outputted to the display 153 is stopped temporarily. When the screen 2602 is removed, a corresponding application is played again.

According to various embodiments, when a specific gesture 2651 occurs on the screen 2602, the display control module 170 searches for a gesture instruction corresponding thereto. The electronic device 100 stores at least one gesture instruction table corresponding to at least one gesture. When a specified gesture 2651 is inputted, the display control module 170 extracts a gesture instruction matching the gesture 2651 by referencing a gesture instruction table. According to various embodiments, the display control module 170 outputs instruction information 2652 corresponding to the extracted gesture instruction as shown in a state 2650.

According to various embodiments, when a gesture instruction is extracted, the display control module 170 controls a function execution corresponding thereto. For example, the display control module 170 outputs a guide 2661 (for example, at least one executable function related information in relation to the object 901). The guide 2661 is displayed in various forms such as a pop-up window form or a full screen form of the display 153.

According to various embodiments, the guide 2661, for example, includes at least one application list linkable to the object 901. The guide 2661, for example, includes gesture information (for example, a touch gesture corresponding to at least one gesture instruction and a touch gesture for requesting an e-mail function execution in relation to the object 902) corresponding to at least one gesture instruction. According to various embodiments, the guide 2661 includes a list corresponding to at least one basic function (for example, move, copy, remove, and execute) performed in relation to the object 901.

According to various embodiments, when at least one item is selected from the guide 2661, the display control module 170 controls a function performance corresponding to the selected item. A function screen corresponding to the selected item is outputted to at least one of the display 151 and the display 153. According to various embodiments, the guide 2661 is outputted to the display 153 and maintained and a screen executed in correspondence to a selection item is outputted to the display 151. The display control module 170 disposes the object 901 on an execution screen corresponding to a selection item by maintaining an output of the object 901. The display control module 170 processes the object 901 as input information of a function screen related application outputted to the display 151.

According to various embodiments, if a touch event relating to the object 901 selection is released without an additional item selection while the guide 2661 is outputted, the display control module 170 controls a specific function execution of the electronic device 100. For example, the display control module 170 controls a standby screen output, restore a screen state before a screen 2602 output, or restore a state before an object 901 selection.

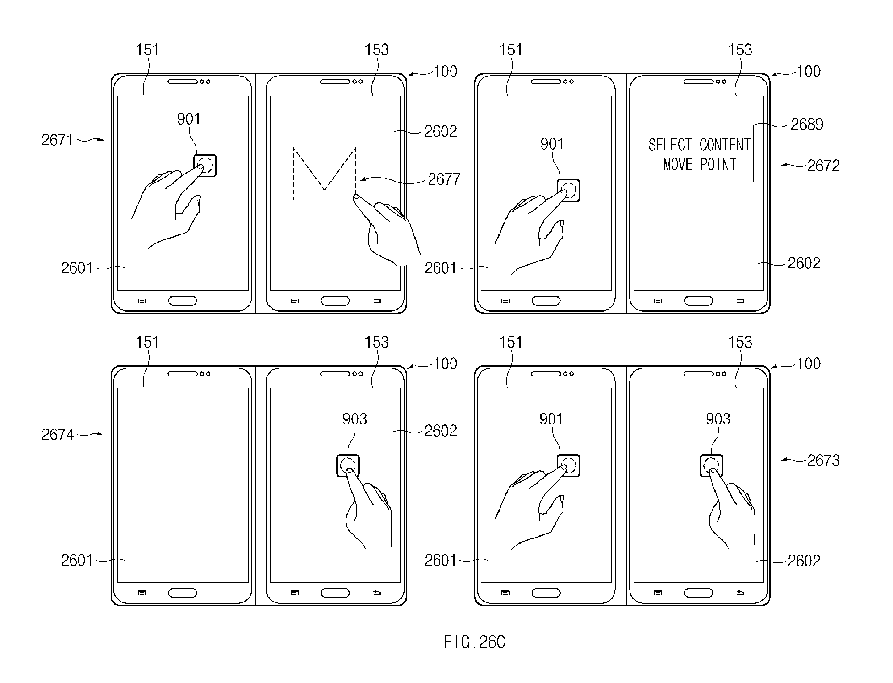

FIG. 26c illustrates a touch gesture based object movement management according to various embodiments of the present disclosure.

Referring to FIG. 26c, as shown in a state 2671, the display control module 170 controls an application execution screen 2601 including an object 901 to the display 151 in correspondence to at least one of set schedule information and a user input. Additionally, the display control module 170 outputs an application execution screen 2602 or a screen for inputting a touch gesture 2602 to the display 153. According to various embodiments, when an event (for example, a touch event) relating to an object 901 selection occurs from the display 151, the display control module 170 removes an application execution screen outputted to the display 153. In certain embodiments, when an object 901 selection related event occurs, the display control module 170 outputs a screen for inputting a touch gesture 2602 relating to a touch gesture input to an application execution screen upper-layer.

According to various embodiments, when a specific touch gesture 2677 (for example, a gesture event corresponding to the letter "M") is inputted from the screen for inputting a touch gesture 2602, the display control module 170 extracts a matching gesture instruction of more than a predetermined similarity by checking a stored touch gesture instruction table. When the gesture instruction is extracted, the display control module 170 outputs a guide message 2679 in correspondence to the extracted instruction as shown in a state 2672. The guide message 2679 is outputted as audio data (for example, audio data for guiding a content movement point selection).

When a specific area of the screen for inputting a touch gesture 2602 is selected, the display control module 170 controls a function performance corresponding to a gesture instruction. For example, the display control module 170 outputs an object 903 to a predetermine point (for example, a point where a touch event occurs) in correspondence to a gesture instruction as shown in a state 2673. When an event relating to an object 901 selection is released, as shown in a state 2670, the display control module 170 completes the processing of a gesture instruction (for example, a movement function of an object) of the object 903. The display control module 170 processes the object 903 as input information of an application being executed in relation to the display 153.

According to various embodiments, when an event relating to the object 901 is released in a state 2672, the display control module 170 stops a function performance relating to a gesture instruction. For example, the display control module 170 stops the output of the guide message 2679 or stop the output of the screen for inputting a touch gesture 2602. According to various embodiments, the display control module 170 removes the output of the guide message 2679 and maintains a state that the screen for inputting a touch gesture 2602 is outputted. Accordingly, when a touch gesture is inputted newly on the screen for inputting a touch gesture 2602, the display control module 170 controls a guide message output and function performance corresponding thereto.

As described above, although it is described that the screen for inputting a touch gesture 2602 is outputted to the display 153, various embodiments are not limited thereto. For example, a screen for inputting a touch gesture is outputted to at least one of the display 151 and the display 153. In certain embodiments, at least one of the display 151 and the display 153 includes a state for receiving a touch gesture.

As mentioned above, an electronic device 100 according to various embodiments supports the reception of a first input event (for example, a gesture event) corresponding to the type of a function relating to the object 901 and the reception of a second input event (for example, a movement position designation of an object) corresponding to a position designation of an object relating to a specified function. The electronic device 100 specifies a position according to the second input event while the first input event is maintained and supports to apply a specified function when the first input event is released.

According to various embodiments, when a touch gesture 2677 is inputted in a state 2671, the electronic device 100 performs the state 2673 without passing through the state 2672. For example, when the touch gesture 2677 is inputted and a gesture instruction is extracted, the electronic device 100 outputs the object 903 to a point where the touch gesture 2677 is terminated in correspondence to a corresponding function performance.

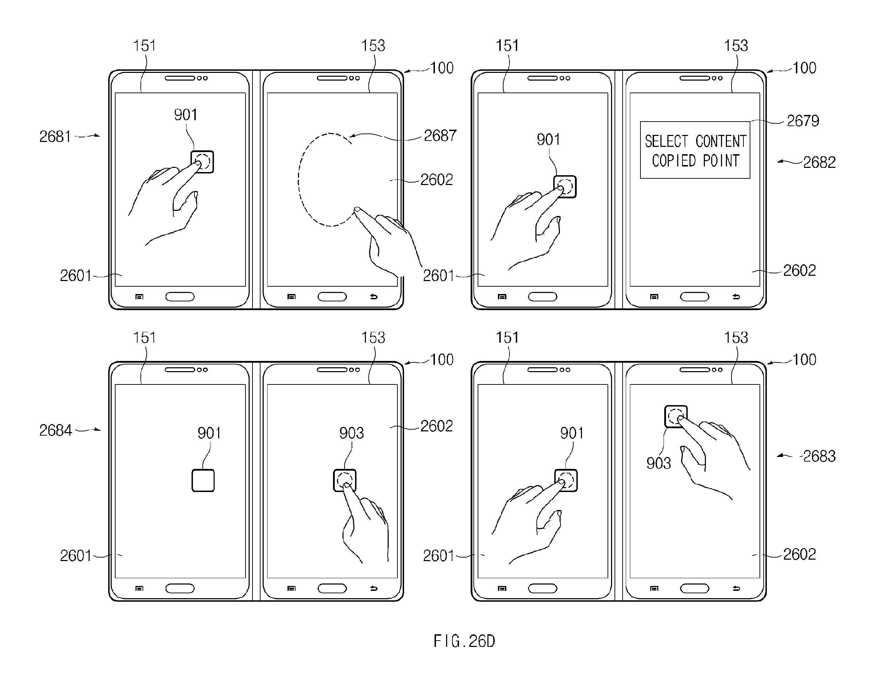

FIG. 26d illustrates a touch gesture based object copy management according to various embodiments of the present disclosure.

Referring to FIG. 26d, as shown in a state 2681, the display control module 170 controls an application execution screen 2601 including an object 901 to the display 151 in correspondence to at least one of set schedule information and a user input. Additionally, the display control module 170 outputs an application execution screen 2602 or a screen for inputting a touch gesture 2602 to the display 153. According to various embodiments, the display control module 170 outputs a specific application execution screen to the display 153 or maintains a turn-off state. When an event (for example, a touch event) relating to an object 901 selection occurs, the display control module 170 outputs a screen for inputting a touch gesture 2602 relating to a touch gesture input to the display 153.

According to various embodiments, when a specific touch gesture (for example, a gesture event corresponding to the letter "C") is inputted from the screen for inputting a touch gesture 2602, the display control module 170 extracts a matching gesture instruction of more than a predetermined similarity by checking a stored touch gesture instruction table. When the gesture instruction is extracted, the display control module 170 outputs a guide message 2689 in correspondence to the extracted instruction as shown in a state 2682. The guide message 2679 is outputted as audio data (for example, audio data for guiding a content copy point selection).

When a specific area of the screen for inputting a touch gesture 2602 is selected, the display control module 170 controls a function performance corresponding to a gesture instruction. For example, the display control module 170 outputs an object 903 to a predetermine point (for example, a point where a touch event occurs) of the display 153 as shown in a state 2683. When an event relating to an object 901 selection is released, as shown in a state 2684, the display control module 170 completes the processing of a gesture instruction (for example, a copy function of an object) of the object 903. For example, the display control module 170 displays the object 901 on the display 151 and display the object 903 on the display 153. According to various embodiments, when an event relating to the object 901 is released in a state 2682, the display control module 170 stops the application of the extracted gesture instruction.

According to various embodiments, the display control module 170 controls more various function executions according to the type of a gesture instruction. For example, when a touch gesture corresponding to a given specific character or number or a special character, the display control module 170 executes a gesture instruction matching a corresponding touch gesture and controls a function execution corresponding thereto.

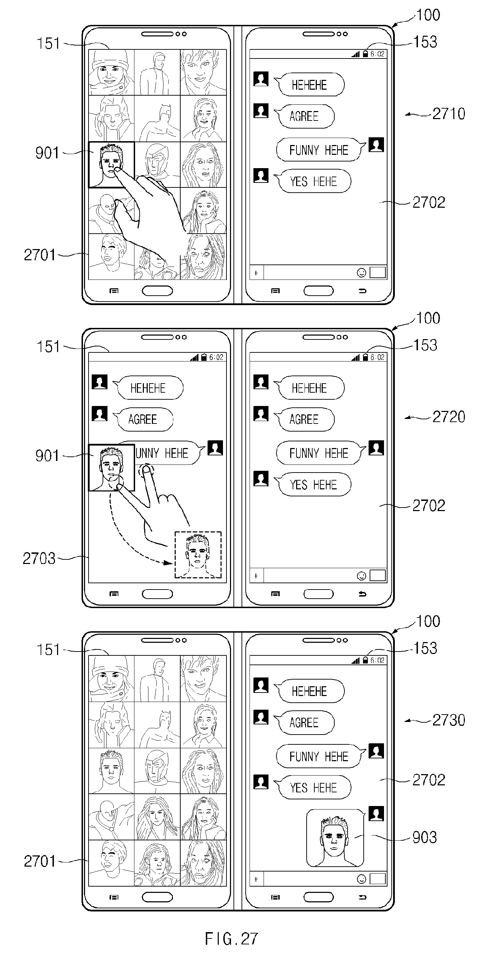

FIG. 27 illustrates a touch pattern based object management according to various embodiments of the present disclosure.

Referring to FIG. 27, the electronic device 100, as shown in a state 2710, includes a display 151 displaying a first application execution screen 2701 where one object 901 is disposed and a display 153 displaying an application execution screen 2702 corresponding to a second application execution. The application execution screen 2701 is a gallery application execution screen. The display control module 170 selects the object 901 in correspondence to an event occurrence. When a specified event occurs in a state of having a history that the object 901 is selected or a state of maintaining a selection, the display control module 170 processes screen sharing.

According to various embodiments, when a specified event (for example, a multi touch event) occurs on the display 151 where an application execution screen 2701 is being outputted, as shown in a state 2720, the display control module 170 outputs to the display 151 an application execution screen 2703 corresponding to at least one of a screen identical or similar to the application execution screen 2702, a screen including at least part of the application execution screen 2702, and a screen specified to correspond to the application execution screen 2702. The display control module 170 displays the object 901 on the application execution screen 2703 by maintaining a display state of the object 901. When an additional event (or a touch or hovering event relating to an object 901 movement) occurs, the display control module 170 moves the position of the object 901 in correspondence to the additional event.

When a specified event (for example, an additional event and a release event) occurs, as shown in a state 2730, the display control module 170 outputs the previous application execution screen 2701 to the display 151 and outputs the application execution screen 2703 to the display 153. When the object 901 is disposed on the input blank of the application execution screen 2703, the display control module 170 processes the object 901 as input information of the application execution screen 2702. The object 901 is applied as input information of an application in the application execution screen 2702 and is transmitted to an external device. As mentioned above, according to various embodiments, the display control module 170 selects at least one object outputted from the display 151 in correspondence to a first input event occurrence. The display control module 170 processes the selected object in relation to at least one second display in correspondence to a second input event occurrence. The second input event includes at least one of a touch or hovering event occurring from the display 151 and a touch or hovering event occurring from the display 153.

As mentioned above, according to an object management method and an electronic device supporting the same in accordance with various embodiments, various embodiments check and perform an object change (for example, object move, copy, and remove) between displays, so that they support more intuitive object processing.

Additionally, various embodiments support an object change between displays on the basis of a simple input control.

Each of the above-mentioned components of the electronic device according to various embodiments of the present disclosure can be configured with at least one component and the name of a corresponding component can vary according to the kind of an electronic device. An electronic device according to various embodiments of the present disclosure can include at least one of the above-mentioned components, may not include some of the above-mentioned components, or can further include another component. Additionally, some of components in an electronic device according to various embodiments of the present disclosure are configured as one entity, so that functions of previous corresponding components are performed identically.

The term "module" used in various embodiments of the present disclosure, for example, can mean a unit including a combination of at least one of hardware, software, and firmware. The term "module" and the term "unit," "logic," "logical block," "component," or "circuit" can be interchangeably used. A "module" can be a minimum unit or part of an integrally configured component. A "module" can be a minimum unit performing at least one function or part thereof. A "module" can be implemented mechanically or electronically. For example, "module" according to various embodiments of the present disclosure includes at least one of an application-specific integrated circuit (ASIC) chip performing certain operations, field-programmable gate arrays (FPGAs), or a programmable-logic device, all of which are known or to be developed in the future.

According to various embodiments, at least part of a device (for example, modules or functions thereof) or a method (for example, operations) according to this disclosure, for example, as in a form of a programming module, is implemented using an instruction stored in computer-readable storage media. When at least one processor (for example, the processor 120) executes an instruction, it performs a function corresponding to the instruction. The non-transitory computer-readable storage media includes the memory 130, for example. At least part of a programming module is implemented (for example, executed) by the processor 120, for example. At least part of a programming module includes a module, a program, a routine, sets of instructions, or a process to perform at least one function, for example.

According to various embodiments, computer recording media are stored, as in the form of a programming module, in computer-readable storage media, and the programming module includes an instruction executed by at least one processor, and the instruction is set to process operations for obtaining a first input event relating to a first display functionally connected to an electronic device, selecting at least one object in correspondence to the first input event, and processing a function relating to the at least one object through at least one of the first display and a second display on the basis of an second input event relating to the second display functionally connected to the electronic device.

The computer-readable storage media includes Magnetic Media such as a hard disk, a floppy disk, and a magnetic tape, Optical Media such as Compact Disc Read Only Memory (CD-ROM) and Digital Versatile Disc (DVD), Magneto-Optical Media such as Floptical Disk, and a hardware device especially configured to store and perform a program instruction (for example, a programming module) such as Read Only Memory (ROM), Random Access Memory (RAM), and flash memory. Additionally, a program instruction includes high-level language code executable by a computer using an interpreter in addition to machine code created by a complier. The hardware device is configured to operate as at least one software module to perform an operation of various embodiments and vice versa.

A module or a programming module according to various embodiments of the present disclosure includes at least one of the above-mentioned components, may not include some of the above-mentioned components, or further includes another component. Operations performed by a module, a programming module, or other components according to various embodiments of the present disclosure are executed through a sequential, parallel, repetitive or heuristic method. Additionally, some operations are executed in a different order, can be omitted or other operations can be added.

According to various embodiments, in relation to a storage medium storing instructions, the instructions, when being executed by at least one processor, are set to allow the at least one processor to perform at least one operation and the at least one operation includes obtaining size conversion ratio information of an original image, obtaining coefficient information to be applied to the data conversion and size conversion of the original image on the basis of the ratio information, and obtaining image processing data corresponding to the size conversion ratio by applying the coefficient information to at least part of data of the original image.

Although the present disclosure has been described with an exemplary embodiment, various changes and modifications may be suggested to one skilled in the art. It is intended that the present disclosure encompass such changes and modifications as fall within the scope of the appended claims.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. An electronic device comprising:
a first display (151);
a second display (153); and
a display control module (170) functionally connected to the first display (151) and the second display (153), wherein the display control module (170) is configured to:
select at least one display object in correspondence to a first input event relating to the first display (151); and
perform a function relating to the selected object through at least one display of the first display (151) and the second display (153) on a basis of a second input event.

2. The electronic device according to claim 1, wherein the display control module (170) is further configured to:
display an additional object relating to the selected object on the second display (153);
move or copy the selected object to the second display (153) in correspondence to an input event reception for selecting the additional object, or output an application execution screen relating to the object to the second display (153); and
process the selected object as input information of the application.

3. The electronic device according to claim 1, wherein the display control module (170) is further configured to:
display at least one application item relating to the object on the second display (153); and
display an application execution screen corresponding to a selected application item on at least one of the first display (151) and the second display (153).

4. The electronic device according to claim 3, wherein the display control module (170) is further configured to process information inputted through the second display (153) as input information of the first display (151).

5. The electronic device according to any one of the preceding claims, wherein the display control module (150) is further configured to display a specific object corresponding to the object on the second display (153) in correspondence to the second input event.

6. The electronic device according to claim 5, wherein the display control module is further configured to rescale and display the specific object in correspondence to the second input event.

7. The electronic device according to claim 1, wherein the display control module is further configured to display a screen displayed on the first display on the second display or display a screen displayed on the second display on the first display in correspondence to at least one of the first input event and the second input event.

8. The electronic device according to claim 1, wherein when an event that the first display and the second display are hinged by a specified distance in a specified direction is obtained or the first display and the second display maintain a specified hinge angle, the display control module is further configured to switch a screen of the first display and a screen of the second display while maintaining an output state of the object.

9. The electronic device according to claim 1, wherein the display control module is further configured to:
display visual information relating to at least part of screen information of the second display connected wirelessly on the first display; and
when the object is overlaid on the visual information, move and transmit, or copy the object to the second display wirelessly.

10. The electronic device according to claim 1, wherein, when displaying a plurality of visual information relating to an application execution screen outputted to a plurality of second displays on the first display and overlaying the selected object on at least one of the plurality of visual information, the display control module (170) is further configured to process the object as input information of an application corresponding to the overlaid visual information.

11. The electronic device according to claim 1, wherein the display control module (170) is further configured to differently process at least one of a form and execution function of a specified object in correspondence to at least one of the number of touch or hovering points corresponding to the second input event, a touch surface form or a hovering form, an occurrence order or position of a plurality of touches or hoverings, a pattern corresponding to a time interval or hold time of a plurality of touches or hoverings, or a gesture corresponding to a touch or hovering trajectory.

12. The electronic device according to claim 1, wherein the display control module is further configured to differently process at least one of a number of output positions of selection objects relating to the object and an execution determination or form of a function relating to the object in correspondence to at least one of an occurrence order of a plurality of events or occurrence positions of a plurality of events.

13. The electronic device according to claim 1, wherein the display control module is further configured to execute an application corresponding to a gesture type of the second input event or output a screen for inputting a touch gesture relating to the second input event reception.

14. The electronic device according to claim 1, wherein the display control module is further configured to:
output to the first display a reference screen corresponding to an application execution screen outputted to the second display in correspondence to the second input event; and
when the object is disposed on the reference screen, process the object as input information of an application relating to the second display in correspondence to the object position in the reference screen.

15. A method for managing display objects in an electronic device having functional connections to a first display and a second display, the method including:
obtaining a first input event relating to the first display (operation S503),
selecting at least one object in correspondence to the first input event (operation S505),
obtaining a second input event relating to the second display (operation S507) and
processing a function relating to the at least one selected object through at least one of the first display and the second display on the basis of the second input event (operation S509).
